# EUROPEAN PATENT APPLICATION

(11) **EP 4 847 984 A1**
(43) Date of publication of application: **02.12.2026**
(21) Application number: 25772244.7
(22) Date of filing: 14.03.2025
(51) Int. Cl.: G02B 27/01, G02B 13/00, G02B 27/00, H04N 23/55, G02B 9/12, G06T 19/00, G02B 3/00

(54) **HEAD-MOUNTED ELECTRONIC DEVICE**

(30) Priority: 15.03.2024 KR 20240036698; 29.07.2024 KR 20240100526
(71) Applicant: Samsung Electronics Co., Ltd., Suwon-si, Gyeonggi-do 16677 (KR)
(72) Inventor: KWAK, Hokeun, Suwon-si, Gyeonggi-do 16677 (KR); CHOI, Dongok, Suwon-si, Gyeonggi-do 16677 (KR); HEU, Min, Suwon-si, Gyeonggi-do 16677 (KR)
(74) Representative: Appleyard Lees IP LLP
(86) International application number: PCT/KR2025/003337
(87) International publication number: WO 2025/192996

(57) **Abstract**

According to embodiments of the present disclosure, a head-mounted electronic device is provided. The head-mounted electronic device includes a display, a first lens unit having a first optical axis through which first light output from the display passes, a second lens unit having a second optical axis different from the first optical axis, a third lens unit having a third optical axis different from the first optical axis and the second optical axis, wherein the third lens unit is between the first lens unit and the second lens unit, and an image sensor configured to receive second light through the first lens unit, the second lens unit, and the third lens unit, in which the third lens unit is configured to correct an angle at which at least a portion of the second light passed through the first lens unit is incident on the second lens unit.

## Description

### Technical Field

The disclosure relates to a head-mounted electronic device.

### Background Art

A head-mounted electronic device (e.g., head-mounted display (HMD)) that may be worn on a user's head may include a display, a lens, and a camera. Light output from the display may be focused onto a user's pupil through the lens. The camera may output an image of the user's pupil, and the head-mounted electronic device may perform eye tracking based on the image obtained through the camera.

The above-described information may be provided as the related art for the purpose of helping to understand the present disclosure. None of the above-described contents raises any claim or determination regarding the applicability of prior art related to the present disclosure.

### Disclosure of Invention

### Technical Problem

In a head-mounted electronic device, an eye tracking camera may be disposed at a position where light reflected from the user's pupil may be smoothly received without interfering with the transmission of light output from the display to the user's pupil through the lens. It is difficult to secure a stable light path between the eye tracking camera and the user's pupil due to the structural limitations in the head-mounted electronic device, so the resolution of image data obtained through the camera may be reduced.

Various embodiments of the present disclosure provide a head-mounted electronic device capable of reducing degradation in resolution of image data obtained through an eye tracking camera. Various embodiments of the present disclosure are provided to solve or at least alleviate the above-described problems. The present disclosure is not limited to the eye tracking camera, and can be applied to various cameras that may be disposed in a head-mounted electronic device to detect and track one or more facial features.

The technical problems to be achieved by the present disclosure are not limited to the above-described technical problems, and other technical problems that are not described may be understood by those skilled in the art to which the present disclosure pertains from the following description.

According to embodiments of the present disclosure, a head-mounted electronic device is provided. The head-mounted electronic device includes a display, a first lens unit, a second lens unit, a third lens unit, and an image sensor. The first lens unit has a first optical axis through which first light output from the display passes. The second lens unit has a second optical axis different from the first optical axis. The third lens unit has a third optical axis different from the first optical axis and the second optical axis. The third lens unit is between the first lens unit and the second lens unit. The image sensor is configured to receive second light through the first lens unit, the second lens unit, and the third lens unit. The third lens unit is configured to correct an angle at which at least a portion of the second light passed through the first lens unit is incident on the second lens unit.

According to embodiments of the present disclosure, an electronic device is provided. The electronic device includes a first lens unit, a second lens unit, a third lens unit, and an image sensor. The first lens unit has a first optical axis through which first light passes. The second lens unit has a second optical axis different from the first optical axis. The third lens unit has a third optical axis different from the first optical axis and the second optical axis, and is between the first lens unit and the second lens unit. The image sensor is configured to receive second light through the first lens unit, the second lens unit, and the third lens unit. A first angle between the first optical axis and the second optical axis is greater than a second angle between the first optical axis and the third optical axis.

### Advantageous Effects of Invention

The head-mounted electronic device according to embodiments of the present disclosure can reduce the degradation in the resolution of image data obtained through the image sensor through the third lens unit located between the first lens unit and the second lens unit.

In addition, the effects obtainable or predicted by various embodiments of the present disclosure will be disclosed directly or implicitly in the detailed description of the embodiments of the present disclosure.

### Brief Description of Drawings

The above and other aspects, features, and advantages of certain embodiments of the present disclosure will become more apparent from the following detailed description taken in conjunction with the accompanying drawings:
FIG. 1 is a block diagram of an electronic device in a network environment according to various embodiments of the present disclosure.
FIG. 2 and 3 are perspective views of a wearable electronic device according to various embodiments of the present disclosure.
FIG. 4 is a perspective view of a head-mounted electronic device according to various embodiments of the present disclosure.
FIG. 5 is a perspective view of a head-mounted electronic device according to various embodiments of the present disclosure.
FIG. 6 is a diagram illustrating a state in which the head-mounted electronic device according to various embodiments of the present disclosure is worn on a user's head.
FIG. 7 is a cross-sectional view of a portion of the head-mounted electronic device according to various embodiments of the present disclosure.
FIG. 8 is a diagram illustrating a portion of a user's face and the head-mounted electronic device according to various embodiments of the present disclosure.
FIG. 9A is a diagram illustrating a portion of the head-mounted electronic device according to various embodiments of the present disclosure.
FIG. 9B is a diagram illustrating a portion of the head-mounted electronic device according to various embodiments of the present disclosure.
FIG. 10 is a diagram illustrating a portion of the head-mounted electronic device that includes a third lens unit worn on the user's head according to various embodiments of the present disclosure, and a diagram illustrating a portion of the head-mounted electronic device in which the third lens unit worn on the user's head is omitted.
FIG. 11 is a graph illustrating a field-by-field peak of a light-receiving area in the head-mounted electronic device according to the present disclosure, a graph illustrating a field-by-field peak of a light-receiving area in a head-mounted electronic device of a comparative example in which the third lens unit is omitted, a graph illustrating resolution of a camera in the head-mounted electronic device according to the present disclosure, and a graph illustrating resolution of a camera in the head-mounted electronic device of the comparative example.
FIG. 12 is a first graph illustrating the resolution of the light-receiving area in the head-mounted electronic device of the comparative example in which the third lens unit is omitted, and a second graph illustrating the resolution of the light-receiving area in the head-mounted electronic device according to the present disclosure.
FIG. 13 is a diagram illustrating a portion of a head-mounted electronic device of a first example, a second example, and a third example according to various embodiments of the present disclosure, in which the first example illustrates a cross-sectional view of a portion of the head-mounted electronic device taken along line C-C', the second example illustrates a cross-sectional view of a portion of the head-mounted electronic device taken along line D-D', and the third example illustrates a cross-sectional view of a portion of the head-mounted electronic device taken along line E-E'.
FIG. 14 is a diagram illustrating a portion of the head-mounted electronic device of the first example according to various embodiments of the present disclosure, and is a cross-sectional view of a portion of the head-mounted electronic device taken along line C-C'.
FIG. 15 is a diagram illustrating a portion of the head-mounted electronic device of the second example according to various embodiments of the present disclosure, and is a cross-sectional view of a portion of the head-mounted electronic device taken along line D-D'.
FIG. 16 is a diagram illustrating a portion of the head-mounted electronic device of the third example according to various embodiments of the present disclosure, and is a cross-sectional view of a portion of the head-mounted electronic device taken along line E-E'.
FIG. 17 is a diagram illustrating a path along which light output from a display is focused or guided to a user's eye in the head-mounted electronic device according to various embodiments of the present disclosure.
FIG. 18 is a diagram illustrating the head-mounted electronic device according to various embodiments of the present disclosure.
FIG. 19 is an enlarged view of part 1801 of FIG. 18 according to various embodiments of the present disclosure.
FIG. 20 is a diagram illustrating the head-mounted electronic device according to various embodiments of the present disclosure.
FIG. 21 is an enlarged view of part 2001 of FIG. 20 according to various embodiments of the present disclosure.
FIG. 22 is a diagram illustrating the path along which the light output from the display is focused or guided to the user's eye in the head-mounted electronic device according to various embodiments of the present disclosure.
FIG. 23 is a diagram illustrating the head-mounted electronic device according to various embodiments of the present disclosure.
FIG. 24 is an enlarged view of part 2301 of FIG. 23 according to various embodiments of the present disclosure.
FIG. 25 is a diagram illustrating the head-mounted electronic device according to various embodiments of the present disclosure.
FIG. 26 is an enlarged view of part 2501 of FIG. 25 according to various embodiments of the present disclosure.

### Mode for the Invention

Hereinafter, various embodiments of the disclosure disclosed herein will be described in greater detail with reference to the accompanying drawings.

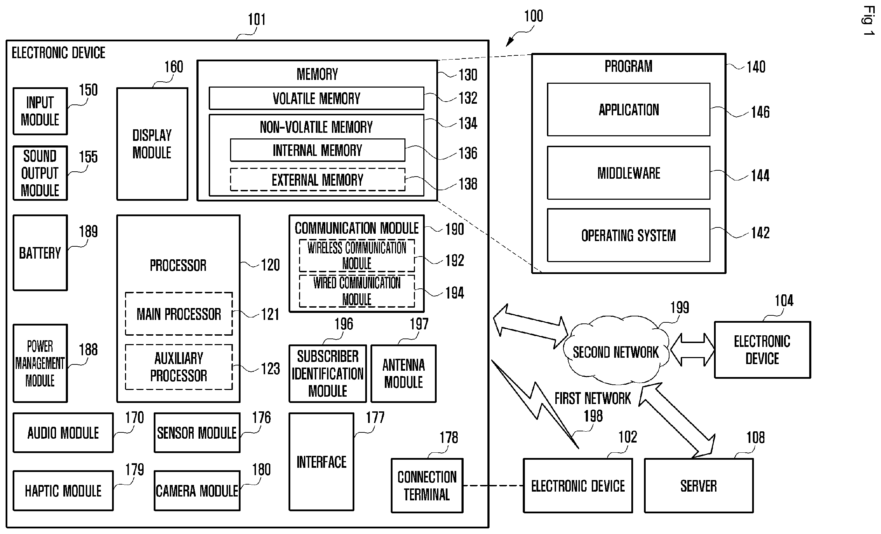

FIG. 1 is a block diagram of an electronic device 101 in a network environment 100 according to various embodiments of the disclosure.

Referring to FIG. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). The electronic device 101 may communicate with the external electronic device 104 via the server 108. The electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In various embodiments of the disclosure, at least one (e.g., the connecting terminal 178) of the components may be omitted from the electronic device 101, or one or more other components may be added in the electronic device 101. In various embodiments of the disclosure, some of the components may be implemented as single integrated circuitry. For example, the sensor module 176, the camera module 180, or the antenna module 197 may be implemented as embedded in single component (e.g., the display module 160).

The processor 120 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing the recited /disclosed various functions, e.g., in a distributed manner. At least one processor may execute program instructions to achieve or perform various functions. The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. Additionally, or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to various embodiments of the disclosure, the auxiliary processor 123 (e.g., a neural network processing device) may include a hardware structure specified for processing an artificial intelligence model. The artificial intelligence model may be created through machine learning. Such learning may be performed, for example, in the electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include touch circuitry (e.g., a touch sensor) adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, an illuminance sensor, an inertial measurement unit (IMU) sensor, or a touch sensor. For example, when the electronic device 101 detects a user movement through the IMU sensor or the like, the processor 120 of the electronic device 101 may correct rendering data received from the external electronic device 102 based on the movement information and output the corrected rendering data to the display module 160. Alternatively, the electronic device 101 may transmit the movement information to the external electronic device 102 to request rendering so that the screen data is updated accordingly.

The interface 177 may support one or more specified protocols to be used for the electronic device 101 to be coupled with the external electronic device (e.g., the external electronic device 102) directly (e.g., wiredly) or wirelessly. The interface 177 may include, for example, a high-definition multimedia interface (HDMI), a universal serial bus (USB) interface, a secure digital (SD) card interface, and/or an audio interface.

The connecting terminal 178 may include a connector via which the electronic device 101 may be physically connected with the external electronic device (e.g., the external electronic device 102). The connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, ISPs, or flashes.

The power management module 188 may manage power supplied to or consumed by the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, and/or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more CPs that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5^{th} generation (5G) network, a next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4^{th} generation (4G) network, and next-generation communication technology, e.g., new radio (NR) access technology. The NR access technology may support high-speed transmission of high-capacity data (i.e., enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., a mmWave band) to achieve, for example, a high data transmission rate. The wireless communication module 192 may support various technologies for securing performance in a high-frequency band, such as beamforming, massive multiple-input and multiple-output (MIMO), full-dimensional MIMO (FD-MIMO), array antenna, analog beam-forming, or large-scale antenna. The wireless communication module 192 may support various requirements specified in the electronic device 101, an external electronic device (e.g., external the electronic device 104), or a network system (e.g., the second network 199). According to various embodiments of the disclosure, the wireless communication module 192 may support a peak data rate for implementing eMBB (e.g., 20Gbps or more), loss coverage for implementing mMTC (e.g., 164dB or less), or U-plane latency for realizing URLLC (e.g., 0.5ms or less for each of downlink DL and uplink (UL) or 1ms or less for round trip).

The antenna module 197 may transmit or receive a signal or power to or from the outside (e.g., the external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments of the disclosure, the antenna module 197 may form a mmWave antenna module. According to various embodiments of the disclosure, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that is disposed on or adjacent to a second surface (e.g., the top surface or the side surface) of the PCB and is capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

The commands or data may be transmitted or received between the electronic device 101 and the external electronic device 104 via the server 108 connected to the second network 199. Each of the external electronic devices 102 or 104 may be the same or a different type of device as the electronic device 101. All or part of the operations executed in the electronic device 101 may be executed in one or more of the external electronic devices 102, 104, or 108. For example, when the electronic device 101 is to perform certain functions or services automatically or in response to a request from a user or other devices, instead of performing the functions or services by itself or additionally, the electronic device 101 may request one or more external electronic devices to perform at least some of the functions or services. One or more external electronic devices receiving the request may perform at least some of the requested functions or services, or an additional function or service related to the request, and transmit the result of the execution to the electronic device 101. The electronic device 101 may process the result as it is or additionally and provide the processed result as at least a portion of a response to the request. For example, the external electronic device 102 may render content data executed in an application and then transmit the rendered content data to the electronic device 101, and the electronic device 101 may output the received content data via the display module 160. In various embodiments, when the electronic device 101 detects movement of a user through the sensor module 176 (e.g., an inertial measurement unit (IMU) sensor), the processor 120 of the electronic device 101 may correct the rendering data received from the external electronic device 102 based on information on the movement of the user and output the corrected rendering data to the display module 160. In various embodiments, the processor 120 of the electronic device 101 may transmit the information on the movement of the user to the external electronic device 102 and request the external electronic device 102 to render screen data so that the screen data is updated according to the information on the movement of the user. In various embodiments, the external electronic device 102 may be provided in various forms, such as a smartphone or a casing device implemented to store and charge the electronic device 101.

According to various embodiments, cloud computing, distributed computing, mobile edge computing (MEC), or client-server computing technologies may be used so that all or part of the operations executed in the electronic device 101 may be executed in one or more external electronic devices among the external electronic devices 102, 104, or 108. The electronic device 101 may provide an ultra-low delay service, for example, using the distributed computing or the mobile edge computing (MEC). In various embodiments of the present disclosure, the external electronic device 104 may include an IoT (internet of things) device. The server 108 may be an intelligent server using machine learning and/or a neural network. According to various embodiments of the present disclosure, the external electronic device 104 or the server 108 may be included in the second network 199. The electronic device 101 may be applied to intelligent services (e.g., smart home, smart city, smart car, or healthcare) based on 5G communication technology and IoT-related technology.

The electronic device according to various embodiments of the present disclosure may be various types of devices. The electronic device may include, for example, a portable communication device (e.g., a smart phone), a computer device, a portable multimedia device, a portable medical device, a camera, a wearable device, or a home appliance. However, the electronic device is not limited to the above-described devices.

Various embodiments of the present disclosure and the terms used herein are not intended to limit the technical features described in the present disclosure to specific embodiments. Regarding the description of the drawing, similar or related components will be denoted by similar reference numerals. A singular form of a noun corresponding to an item may include one or more of the items, unless the context clearly dictates otherwise. In the present disclosure, each phrase such as "A or B," "at least one of A and B," "at least one of A or B," "A, B, or C," "at least one of A, B and C," and "at least one of A, B, or C" may include any one of items listed together in the corresponding one of those phrases, or all possible combinations thereof. The terms "first", "second", or the like, may be used only to distinguish one component from the other components, and do not limit the corresponding components in other respects (e.g., importance or a sequence). When one component (e.g., first component) is referred to as "coupled" or "connected" to another component (e.g., second component) with or without the term "functionally" or "communicatively", it means that the component may be connected to another component directly (e.g., in a wired manner), wirelessly, or through a third component.

The term "module" may include units implemented by hardware, software, or firmware, or any combination thereof and may be used interchangeably with terms such as, for example, logics, logic blocks, components, circuits, or the like. The module may be an integrally configured component or a minimum unit performing one or more functions or a portion thereof. For example, according to various embodiments of the present disclosure, the module may be implemented in the form of an application-specific integrated circuit (ASIC).

Various embodiments of the present disclosure may be implemented by software (e.g., the program 140) including one or more instructions stored in a storage medium (e.g., the internal memory 136 or the external memory 138) readable by a machine (e.g., the electronic device 101). For example, the processor (e.g., processor 120) of the machine (e.g., electronic device 101) may call and execute at least one of one or more instructions stored from the storage medium. This makes it possible for the machine to be operated to perform at least one function according to the invoked at least one instruction. The one or more instructions may include a code generated by a compiler or a code that may be executed by an interpreter. The storage medium readable by the machine may be provided in the form of a non-transitory storage medium. Here, the term 'non-transitory' only means that the storage medium is a tangible device and does not comprise a signal (e.g., an electromagnetic wave), and does not distinguish a case that data is semi-permanently stored in the storage medium or a case that data is temporarily stored in the storage medium from each other.

The methods according to various embodiments of the present disclosure may be included and provided in a computer program product. The computer program product may be traded as a product between a seller and a purchaser. The computer program product may be distributed in the form of a storage medium (e.g., a compact disc read only memory (CD-ROM)) readable by the machine or may be distributed (e.g., downloaded or uploaded) online through an application store (e.g., PlayStore^{TM}) or directly between two user devices (e.g., smartphones). In case of the online distribution, at least a portion of the computer program product may be at least temporarily stored in the storage medium readable by the machine, such as a memory of a server of a manufacturer, a server of an application store, or a relay server or be temporarily created.

Each component (e.g., module or program) of the above-described components may include one entity or a plurality of entities. One or more of the components or operations of the above-described components may be omitted, or one or more other components or operations may be added. Alternatively or additionally, a plurality of components (e.g., modules or programs) may be integrated into one component. In this case, the integrated component may perform one or more functions of each of the plurality of components identically or similarly to those performed by the corresponding component among the plurality of components prior to the integration. The operations performed by the modules, the program modules, or the other components may be executed in a sequential manner, a parallel manner, an iterative manner, or a heuristic manner, at least some of the operations may be performed in a different order or be omitted, or one more other operations may be added.

Hereinafter, various electronic devices are described with reference to the accompanying drawings. Any one example electronic device may be interpreted as being included in the scope of various embodiments of the present disclosure as having at least some of the plurality of components of any other wearable electronic device changed or modified. Regarding the description of any one example electronic device, the same terms and/or the same reference numerals may be used for components that are at least partially identical or similar or related to components of any other example electronic device. In any two example electronic devices, two components that have the same terms but different reference numerals may be understood to be substantially the same or as having forms changed or modified.

In this disclosure, when the term "substantially" is used to define a structural part, the expression including the term "substantially" is understood or interpreted as a technical feature produced within the technical tolerance of the method used to manufacture the structural part. Also, the expression "including" means that a certain effect or result may be obtained within a specific tolerance, and that a person skilled in the art knows a method of obtaining the corresponding tolerance.

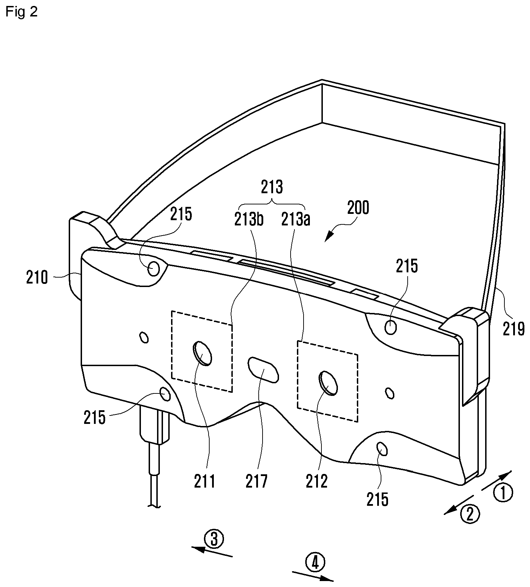

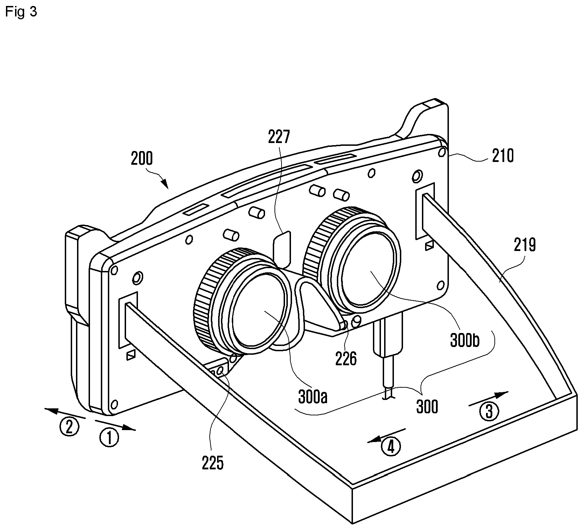

FIG. 2 and 3 are perspective views of a wearable electronic device 200 according to various embodiments of the present disclosure. When a user wears the wearable electronic device 200, an appearance that the user's eye looks at may be FIG. 3.

Referring to FIGS. 2 and 3, the electronic device 101 of FIG. 1 may include the wearable electronic device 200 that provides a service that provides an extended reality (XR) experience to a user. For example, the XR or XR service may be defined as a service that collectively refers to virtual reality (VR), augmented reality (AR), and/or mixed reality (MR).

According to various embodiments, the wearable electronic device 200 may have a form factor for being worn on a user's head. The wearable electronic device 200 may mean a head-mounted electronic device or a head-mounted display worn on a user's head, but may also be configured in the form of at least one of glasses, goggles, a helmet, or a hat. The wearable electronic device 200 may include an optical see-through (OST) type that is configured to allow external light to reach a user's eye through the glasses when worn, or a video see-through (VST) type that is configured to block external light so that the light emitted from the display reaches the user's eye but the external light does not reach the user's eye when worn.

According to various embodiments, the wearable electronic device 200 may be worn on a user's head and provide the user with an image related to an extended reality (XR) service. For example, the wearable electronic device 200 may provide XR content (hereinafter, referred to as XR content image) that outputs at least one virtual object so that the at least one virtual object is superimposed and displayed in the display area or an area determined as a field of view (FoV) of a user. In various embodiments, the XR content may mean an image related to a real space obtained through a camera (e.g., a capturing camera) or an image or video that appears to have at least one virtual object added to a virtual space. In various embodiments, the wearable electronic device 200 may provide the XR content based on a function being performed by the wearable electronic device 200 and/or a function being performed by one or more of the external electronic devices (e.g., the external electronic device 102 or 104 of FIG. 1, or the server 108).

According to various embodiments, the wearable electronic device 200 is at least partially controlled by the external electronic device (e.g., the electronic device 102 or 104 of FIG. 1), and at least one function may be performed under the control of the external electronic device, but at least one function may be performed independently.

According to various embodiments, the wearable electronic device 200 may include a housing 210 in which at least some of the components of FIG. 1 are disposed. The housing 210 may be configured to be wearable on the user's head. For example, the housing 210 may include a strap 219 and/or a wearing member for being fixed on a body part of a user. For example, the user may wear the wearable electronic device 200 on the head to face a first direction (①) of the wearable electronic device 200.

According to various embodiments, at least one fourth functional cameras (e.g., a facial recognition camera) 225, 226, and 227 and/or a display assembly 300 may be disposed in the first direction (①) of the housing 210 facing a user's face.

According to various embodiments, at least one first functional camera (e.g., a recognition camera) 215, at least one of second functional cameras (e.g., the capturing camera) 211 and 212, at least one depth sensor 217, and/or at least one touch sensor 213 may be disposed in a second direction (②) of the housing 210 facing the first direction (①).

The housing 210 may include a memory (e.g., the memory 130 of FIG. 1) and a processor (e.g., the processor 120 of FIG. 1), and may further include other components illustrated in FIG. 1.

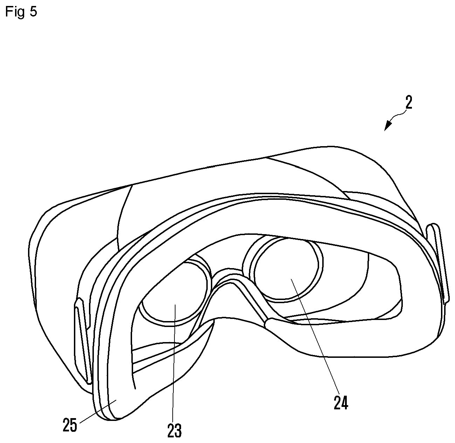

According to various embodiments, the display assembly 300 may be disposed in the first direction (①) of the wearable electronic device 200. For example, the display assembly 300 may be disposed toward the user's face. The display assembly 300 may include a display panel (e.g., the display module 160 of FIG. 1), a first lens assembly (e.g., a left lens unit 23 of FIG. 5), and/or a second lens assembly (e.g., a right lens unit 24 of FIG. 5).

According to various embodiments, the display assembly 300 may include a liquid crystal display (LCD), a digital mirror device (DMD), a liquid crystal on silicon (LCos), a light emitting diode on silicon (LEDoS), an organic light emitting diode (OLED), an organic light emitting diode on silicon (OLEDoS), or a micro light emitting diode (LED).

According to various embodiments, when the display assembly 300 is composed of one of a liquid crystal display, a digital mirror device, or a liquid crystal on silicon, the wearable electronic device 200 may include a light source that irradiates light (e.g., visible light) to a screen output area of the display assembly 300. In various embodiments, when the display assembly 300 is capable of generating light (e.g., visible light) on its own, for example, when the wearable electronic device 200 is composed of one of the organic light emitting diode (LED) or the micro LED, the wearable electronic device 200 may provide a user with good-quality XR content image even without including a separate light source. For example, when the display assembly 300 is composed of the organic light emitting diode or the micro LED, since a light source is unnecessary, the wearable electronic device 200 may be lightweight.

According to various embodiments, the display assembly 300 may include a first display assembly 300a and/or a second display assembly 300b. In various embodiments, the first display assembly 300a may be disposed to face a user's left eye in a fourth direction (④), and the second display assembly 300b may be disposed to face a user's right eye in a third direction (③).

According to various embodiments, the display assembly 300 may include a first lens assembly (e.g., the left lens unit 23 of FIG. 5) including a transparent waveguide. The first lens assembly may serve to adjust a focus so that a screen (e.g., the XR content image) output from a display panel may be visible to the user's left eye. For example, the light (e.g., visible light) emitted from the display panel may pass through the first lens assembly and be transmitted to a user through the waveguide formed within the first lens assembly.

According to various embodiments, the display assembly 300 may include the second lens assembly (e.g., the right lens unit 24 of FIG. 5) including the transparent waveguide. The second lens assembly may serve to adjust a focus so that the screen (e.g., the XR content image) output from the display panel may be visible to the user's right eye. For example, the light (e.g., visible light) emitted from the display panel may pass through the second lens assembly and be transmitted to a user through the waveguide formed within the second lens assembly.

According to various embodiments, the first lens assembly and/or the second lens assembly may include at least one of a Fresnel lens, a pancake lens, a convex lens, or a multi-channel lens.

According to various embodiments, at least one first functional camera (e.g., a recognition camera) 215 may obtain an image while the user wears the wearable electronic device 200. At least one first functional camera 215 may be used for a user movement detection function or a user gesture recognition function. For example, at least one first functional camera 215 may be used for at least one of hand detection, hand tracking, user gesture (e.g., hand motion) recognition, and/or spatial recognition. For example, at least one first functional camera 215 mainly uses a global shutter (GS) camera with superior performance compared to a rolling shutter (RS) camera to detect and track hand motion and fine motions of fingers, and may be composed of a stereo camera including two or more GS cameras for head tracking and spatial recognition. At least one first functional camera 215 may be used for head tracking of a 3 degree of freedom (3DoF) and a 6DoF, position (spatial and environmental) recognition, and/or movement recognition. At least one first functional camera 215 may perform a simultaneous localization and mapping (SLAM) function to recognize information (e.g., position and/or direction) related to surrounding space through spatial recognition and depth capturing for the 6DoF. In various embodiments, at least one of the second functional cameras 211 and 212 may also be used for the hand detection and tracking and the user gestures.

According to various embodiments, at least one of the second functional cameras (e.g., the capturing camera) 211 and 212 may obtain an image related to the surrounding environment of the wearable electronic device 200. At least one of the second functional cameras 211 and 212 may be used to capture an outside, and generate an image or video corresponding to the outside and transmit the generated image or video to the processor (e.g., the processor 120 of FIG. 1). The processor 120 may display an image provided from at least one of the second functional cameras 211 and 212 on a display assembly 300. At least one of the second functional cameras 211 and 212 may be referred to as high resolution (HR) or photo video (PV) and may include a high-resolution camera. For example, at least one of the second functional cameras 211 and 212 may include, but is not limited to, a color camera having functions for obtaining a high-quality image, such as an auto focus (AF) function and an optical image stabilizer (OIS). At least one of the second functional cameras 211 and 212 may also include the GS camera or the RS camera.

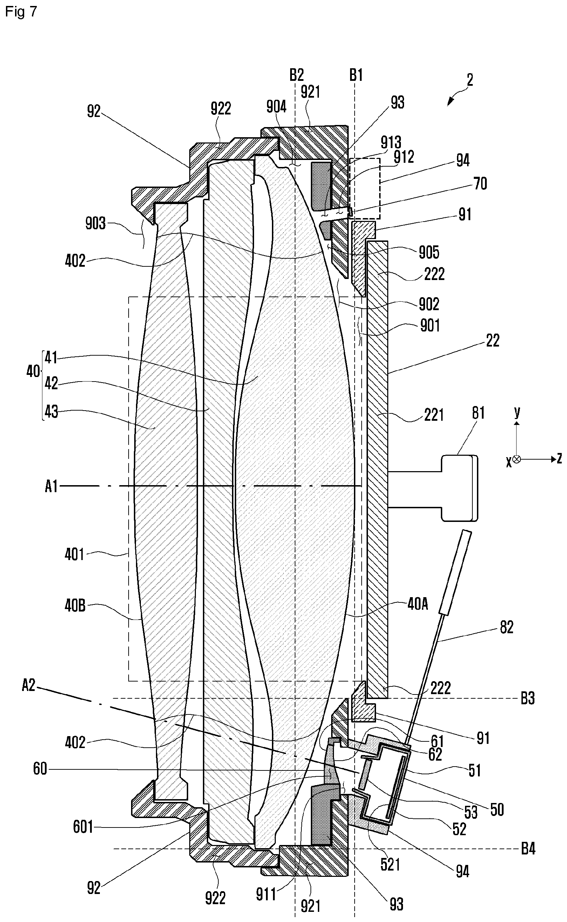

According to various embodiments, at least one third functional camera (e.g., a camera for eye tracking) (e.g., a camera 50 of FIG. 7) may be disposed in the display assembly 300 (or inside the housing 210) so that the camera lens faces the user's eye when the user wears the wearable electronic device 200. At least one third functional camera 350 may be used for detecting and tracking (eye tracking (ET)) a pupil and/or for recognizing a user's iris. The processor 120 may track movements of user's left and right eyes in an image received from at least one third functional camera (e.g., camera 50 of FIG. 7) to determine a gaze direction. The processor 120 may track the position of the pupil in the image, so a center of the XR content image displayed in a screen display area is located according to a direction in which the pupil is gazing. As an example, at least one third functional camera may use the GS camera to detect the pupil and track the movement of the pupil. At least one third functional camera may be installed for the left eye and the right eye, respectively, and each camera having the same performance and specifications may be used.

According to various embodiments, at least one of the fourth functional camera (e.g., facial recognition camera) 225, 226, and 227 may be used to detect and track (face tracking (FT)) a facial expression of a user when the user wears the wearable electronic device 200. For example, at least one of the fourth functional cameras 225, 226, and 227 may be used to recognize a user's face, or may recognize and/or track user's both eyes.According to various embodiments, at least one depth sensor (or depth camera) 217 may be used to determine a distance to an object (e.g., a thing), such as time of flight (TOF). The TOF is a technology that measures a distance to an object using a signal (e.g., near-infrared, ultrasound, or laser). After a transmitter transmits a signal, a receiver measures the signal, and the distance to the object may be measured based on the TOF of the signal. For example, at least one depth sensor 217 may be configured to transmit a signal and receive a signal reflected from a subject. Instead of or in addition to at least one depth sensor 217, at least one first functional camera 215 may identify the distance to the object.

According to various embodiments, at least one touch sensor 213 may be disposed in the second direction (②) of the housing 210. At least one touch sensor 213 may be implemented as a single type or a left-right separated type according to the form of the housing 210, but is not limited thereto. For example, in case that at least one touch sensor 213 is implemented as the left-right separated type as illustrated in FIG. 2, when a user wears the wearable electronic device 200, a first touch sensor 213a may be disposed at the user's left eye position as in the fourth direction (④), and a second touch sensor 213b may be disposed at the user's right eye position as in the third direction (③).

According to various embodiments, at least one touch sensor 213 may recognize a touch input in at least one of, for example, a capacitive manner, a pressure-sensitive manner, an infrared manner, or an ultrasonic manner. For example, at least one touch sensor 213 implemented in a capacitive manner is capable of recognizing a physical touch (or contact) input or a hovering input (or proximity) recognition of an external object. In various embodiments, the wearable electronic device 200 may also utilize a proximity sensor to enable proximity recognition of an external object.

According to various embodiments, at least one touch sensor 213 has a two-dimensional surface, and may transmit touch data (e.g., touch coordinates) of an external object (e.g., the user's finger) that contacts at least one touch sensor 213 to the processor (e.g., the processor 120 of FIG. 1). At least one touch sensor 213 may detect the hovering input for the external object (e.g., the user's finger) that approaches within a first distance from the at least one touch sensor 213, or detect the touch input that touches at least one touch sensor 213.

According to various embodiments, when the external object touches at least one touch sensor 213, at least one touch sensor 213 may provide two-dimensional information on a contact point to the processor (e.g., the processor 120 of FIG. 1) as the "touch data." The touch data may be described as a "touch mode." When the external object is located within a first distance (or when hovering over the proximity or touch sensor) from at least one touch sensor 213, at least one touch sensor 213 may provide, to the processor (e.g., the processor 120 of FIG. 1), the hovering data regarding a point in time or position at which the external object hovers around at least one touch sensor 213. The hovering data may be described as a "hovering mode/proximity mode."

According to various embodiments, the wearable electronic device 200 may obtain the hovering data using at least one of the at least one touch sensor 213, the at least one proximity sensor, or/and at least one depth sensor 217 to generate information on a separation distance, a position, or a point in time between at least one touch sensor 213 and the external object.

According to various embodiments, the inside of the housing 210 may include at least one component of FIG. 1, for example, the processor (e.g., the processor 120 of FIG. 1) and the memory (e.g., the memory 130 of FIG. 1).

According to various embodiments, the memory (e.g., the memory 130 of FIG. 1) may store various instructions that may be performed by the processor (e.g., the processor 120 of FIG. 1). The instructions may include arithmetic and logical operations, data movement, or control commands such as input/output that may be recognized by the processor. The memory may include a volatile memory (e.g., a volatile memory 132 of FIG. 1) and a non-volatile memory (e.g., a non-volatile memory 134 of FIG. 1), and may temporarily or permanently store various data.

According to various embodiments, the processor (e.g., the processor 120 of FIG. 1) may be operatively, functionally, and/or electrically connected to each component of the wearable electronic device 200, and configured to perform computation or data processing related to control and/or communication of each component. The operations performed by the processor may be stored in the memory (e.g., the memory 130 of FIG. 1), and may be executed by instructions that cause the processor to operate when executed. For example, the processor may be configured to control at least a portion of the operation of the wearable electronic device 200.

According to various embodiments, the processor (e.g., the processor 120 of FIG. 1) may generate a virtual object based on virtual information that is based on image information. The processor may output the virtual object related to the XR service together with background space information through the display assembly 300. For example, the processor may capture an image related to a real space corresponding to the FoV of the user who wears the wearable electronic device 200 through at least one of the second functional cameras 211 and 212 to obtain image information or generate a virtual space for a virtual environment. For example, the processor may control the display assembly 300 to display the XR content that outputs at least one virtual object so that the at least one virtual object is superimposed and displayed in the display area or the area determined to be the FoV of the user.

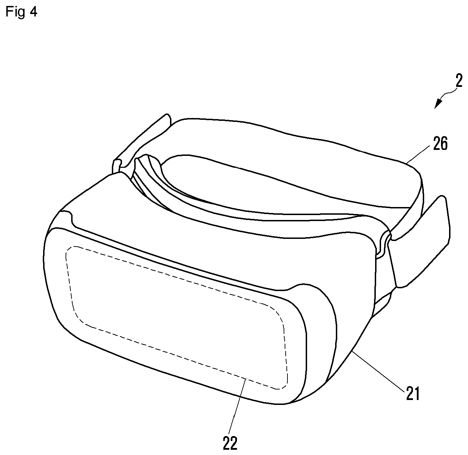

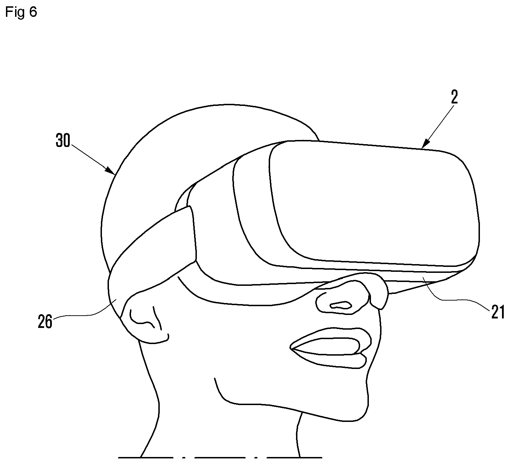

FIG. 4 is a perspective view of a head-mounted electronic device 2 according to various embodiments of the present disclosure. FIG. 5 is a perspective view of the head-mounted electronic device 2 according to various embodiments of the present disclosure. FIG. 6 is a diagram illustrating a state in which the head-mounted electronic device 2 according to various embodiments of the present disclosure is worn on a user's head 30.

Referring to FIGS. 4, 5, and 6, the head-mounted electronic device 2 may include at least one of the plurality of components of the electronic device 101 of FIG. 1, or may include one or more other components. The head-mounted electronic device 2 may include at least one of the plurality of components of the wearable electronic device 200 of FIGS. 2 and 3, or include one or more other components.

According to various embodiments, the head-mounted electronic device 2 may include a housing 21, a display 22, a left lens unit 23, and a right lens unit 24. In various embodiments, the display assembly 300 of FIG. 2 may include a display (also referred to as the display panel) 22, a left lens unit (also referred to as the first lens assembly) 23, and the right lens unit (also referred to as the second lens assembly) 24.

According to various embodiments, the housing 21 may form at least a portion of an appearance of the head-mounted electronic device 2. Components such as the display 22, the left lens unit 23, and the right lens unit 24 may be disposed in the housing 21 or supported by the housing 21. The housing 21 may include a non-metallic material and/or a metallic material.

According to various embodiments, the housing 21 may be worn on the user's head 30 via a strap 26. When wearing the head-mounted electronic device 2, the user may adjust a length of the strap 26 to have a stable wearing feeling for the head-mounted electronic device 2.

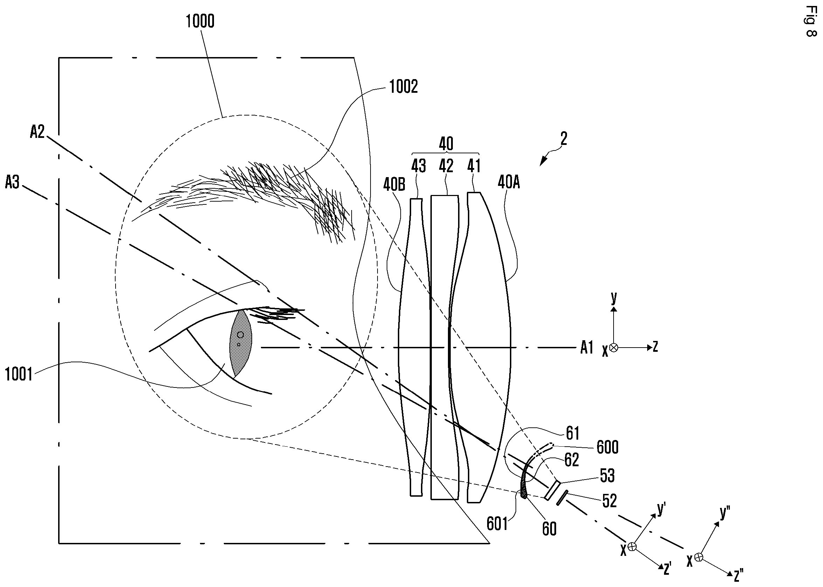

According to various embodiments, when the head-mounted electronic device 2 is worn on the user's head 30, the display 22 may be located in front of the user's eye (e.g., a user's eye 1001 of FIG. 8).

According to various embodiments, the display 22 may include, but is not limited to, a liquid crystal display (LCD), a digital mirror device (DMD), a liquid crystal on silicon (LCoS), an organic light emitting diode (OLED) display, a micro LED, or an active matrix OLED (AMOLED).

According to various embodiments, when the display 22 is implemented as the LCD, the DMD, or the LCoS, the head-mounted electronic device 2 may include a light source that irradiates light to a screen output area of the display 22. When the display 22 is implemented to be able to generate light on its own, such as the LED, the micro LED, or the AMOLED, the head-mounted electronic device 2 may not separately include a light source that irradiates light to the screen output area of the display 22.

According to various embodiments, the left lens unit 23 may be located between the display 22 and the user's left eye while the head-mounted electronic device 2 is worn. The light output from the display 22 may be transmitted to the pupil of the user's left eye through the left lens unit 23. The right lens unit 24 may be located between the display 22 and the user's right eye while the head-mounted electronic device 2 is worn. The light output from the display 22 may be transmitted to the pupil of the user's right eye through the right lens unit 24.

According to various embodiments, the left lens unit 23 may include at least one lens. The left lens unit 23 may focus the light output from the display 22 to the pupil of the user's left eye.

According to various embodiments, the right lens unit 24 may include at least one lens. The right lens unit 24 may focus the light output from the display 22 to the pupil of the user's right eye.

According to various embodiments, the left lens unit 23 and/or the right lens unit 24 may include, but are not limited to, a pancake lens, a Fresnel lens, or a multi-channel lens.

According to various embodiments, the head-mounted electronic device 2 may include a lens focus adjustment unit. The user may manipulate the lens focus adjustment unit to adjust an interval between the display 22 and the left lens unit 23, thereby focusing on the pupil of the left eye. The user may manipulate the lens focus adjustment unit to adjust an interval between the display 22 and the right lens unit 24, thereby focusing on the pupil of the right eye. The lens focus adjustment unit may have, for example, a wheel that a user can rotate.

According to various embodiments, the head-mounted electronic device 2 may include a first vision correction lens and/or a second vision correction lens. The first vision correction lens is a correction lens for vision correction for the pupil of the user's left eye, and may be aligned and/or overlapped with the left lens unit 23 when viewed in a direction parallel to the optical axis of the left lens unit 23. The second vision correction lens is a correction lens for vision correction for the pupil of the user's right eye, and may be aligned and/or overlapped with the right lens unit 24 when viewed in a direction parallel to the optical axis of the right lens unit 24.

According to various embodiments, the head-mounted electronic device 2 may include an elastic member (also referred to as a face contact member) 25 disposed in the housing 21. The elastic member 25 may have a structure corresponding to a curvature of the user's face. The elastic member 25 may be in close contact with the user's face while the head-mounted electronic device 2 is worn. The elastic member 25 may reduce or prevent the inflow of external light while the head-mounted electronic device 2 is worn, thereby improving sharpness and/or the sense of immersion of an image displayed through the display 22.

According to various embodiments, the head-mounted electronic device 2 may include a substrate assembly accommodated in the housing 21. The substrate assembly may include at least one printed circuit board and a plurality of electrical components disposed on at least one printed circuit board. For example, some of the plurality of components of FIG. 1 may be included in the substrate assembly or electrically connected to the substrate assembly. For example, the display 22 may be electrically connected to the substrate assembly via an electrical connection member, such as a flexible printed circuit board.

According to various embodiments, the head-mounted electronic device 2 may include at least one camera (e.g., the camera module 180 of FIG. 1).

According to various embodiments, at least one camera may include a first camera used for motion recognition, gesture recognition, and/or spatial recognition. The first camera may support 3DoF tracking, 6DoF tracking, or 9DoF with at least one sensor for the motion recognition, the gesture recognition, and/or the spatial recognition. The motion recognition may include head tracking. The motion recognition may include the hand detection and the hand tracking. The gesture recognition is to identify movement of a body part such as a head or a hand and to be recognized as a command when the identified movement satisfies a predetermined criterion. The spatial recognition is to recognize spatial relations between objects (or subjects) around the head-mounted electronic device 2. The spatial recognition may include, for example, the simultaneous localization and mapping (SLAM) through the depth (or distance) capturing. The first camera may include, but is not limited to, the global shutter (GS) camera.

According to various embodiments, at least one camera may include a second camera (e.g., facial recognition camera) used for face tracking (also referred to as facial tracking). The face tracking is a function of detecting and tracking one or more features of a face from an image (or image data) or video (or video data) obtained through the second camera. The head-mounted electronic device 2 may obtain the image or video of the user's face through the second camera, and may identify movement of at least a portion of the face through the obtained image or video. The face tracking may include, but is not limited to, for example, eye tracking, eye closure recognition, face eyebrow recognition tracking, and/or iris recognition. The head-mounted electronic device 2 may be implemented to provide recognition of a user's facial expression and/or user's emotion recognition through the face tracking.

According to various embodiments, at least one camera may include the third camera used to measure a distance and/or position of a subject. The third camera may include a depth camera. In various embodiments, the depth camera may include, but is not limited to, a TOF sensor. The TOF sensor may include a light emitting unit and a light receiving unit. By measuring the time it takes for the light (e.g., near infrared, ultrasound, or laser) output from the light emitting unit to reflect from the subject and return to the receiving unit, the distance and/or position of the subject may be identified.

According to various embodiments, at least one camera may include a fourth camera (also referred to as a capturing camera) used to obtain a high-resolution image or video of a subject. The fourth camera may include, for example, a red, green, blue (RGB) camera. The capturing camera may have auto focus (AF) and/or optical image stabilization (OIS). The capturing camera may include the GS camera or the RS camera.

According to various embodiments, a camera in which at least some of the first camera, the second camera, the third camera, and the fourth camera may be integrated, or at least some of the functions of the first camera, the second camera, the third camera, and the fourth camera may be supported may be formed (or provided).

According to various embodiments, the head-mounted electronic device 2 may include at least one light emitting module. At least one light emitting module may include an LED, but is not limited thereto. At least one light emitting module may be configured to output light toward a face, for example, during the face tracking. At least one light emitting module may be configured to illuminate a subject, for example, during capturing a subject around the head-mounted electronic device 2.

According to various embodiments, the head-mounted electronic device 2 may be configured to provide augmented reality (AR) while worn. The augmented reality may be defined or interpreted as blending digital objects and the physical world. The augmented reality may be defined or interpreted as adding visual information to what the user actually sees, or adding visual information together with what the user sees. The augmented reality may provide various types of image information by overlaying virtual images on a real space or an object. In the augmented reality, the virtual image is displayed through the display 22, and the virtual image may be visible to a user by being superimposed on a foreground (e.g., real image) in front of an eye.

According to various embodiments, the head-mounted electronic device 2 may be configured to provide virtual reality (VR) while worn. The virtual reality may make a specific environment or situation feel and react as if interacting with a real situation or person.

According to various embodiments, the head-mounted electronic device 2 may be configured to provide mixed reality (MR) (or hybrid reality) while worn.

According to various embodiments, the augmented reality, the virtual reality, or the mixed reality may be provided while the head-mounted electronic device 2 is worn, and the worn state may be detected through at least one sensor module (e.g., the sensor module 176 of FIG. 1).

According to various embodiments, the head-mounted electronic device 2 may be used for the augmented reality, the virtual reality, or the mixed reality by at least partially using auditory information through a sound output module (e.g., the sound output module 155 of FIG. 1) as well as visual information through the display 22, or other types of information (e.g., tactile information or olfactory information) through other components.

According to various embodiments, the head-mounted electronic device 2 may provide the augmented reality, the virtual reality, or the mixed reality by at least partially using data obtained through an input module (e.g., the input module 150 of FIG. 1), a sensor module (e.g., the sensor module 176 of FIG. 1), and/or a camera module (e.g., the camera module 180).

According to various embodiments, the head-mounted electronic device 2 may provide the augmented reality, the virtual reality, or the mixed reality by at least partially using data obtained through a communication module (e.g., the communication module 190).

According to various embodiments, the head-mounted electronic device 2 may provide the augmented reality, the virtual reality, or the mixed reality by at least partially using the head movement of the user detected through the sensor module (e.g., the sensor module 176 of FIG. 1) while being worn.

According to various embodiments, the head-mounted electronic device 2 may obtain at least one biometric information through the sensor module (e.g., the sensor module 176 of FIG. 1) while worn. The biometric information includes, but is not limited to, for example, gaze, iris, pulse, or blood pressure. The head-mounted electronic device 2 may provide the augmented reality, the virtual reality, or the mixed reality by at least partially using at least one biometric information obtained through the sensor module.

According to various embodiments, the head-mounted electronic device 2 may provide the face tracking. The face tracking is a function of detecting and tracking one or more features of a face from an image (or image data) or video (or video data) obtained through the second camera. The head-mounted electronic device 2 may obtain the image or video of the user's face through the camera, and may identify the movement of at least a portion of the face through the obtained image or video. The head-mounted electronic device 2 may provide the augmented reality, the virtual reality, or the mixed reality by at least partially using the movement of the face.

According to various embodiments, the head-mounted electronic device 2 may obtain image data (or image) of the user's pupil through the camera during the eye tracking, and identify the movement (e.g., gaze direction) of the pupil through the obtained image data. The head-mounted electronic device 2 may provide the augmented reality, the virtual reality, or the mixed reality by at least partially using the movement of the pupil.

According to various embodiments, the head-mounted electronic device 2 may obtain image data (or image) of the user's iris through the camera during the iris recognition, and generate an iris code based on the obtained image data. The head-mounted electronic device 2 may authenticate the user by comparing the generated iris code with one registered in a database of the memory (e.g., the memory 130 of FIG. 1).

According to various embodiments, the form of the head-mounted electronic device 2 is not limited to the examples illustrated in FIGS. 4 to 6, and may be implemented in other forms such as a glasses form or a helmet form.

According to various embodiments, the head-mounted electronic device 2 is not limited to the form in which the display 22 is embedded, and may be implemented in the form in which the electronic device (e.g., a mobile electronic device) having the display 22 may be detached.

FIG. 7 is a cross-sectional view of a portion of the head-mounted electronic device 2 according to various embodiments of the present disclosure. FIG. 8 is a diagram illustrating a portion of the user's face and the head-mounted electronic device 2 according to various embodiments of the present disclosure.

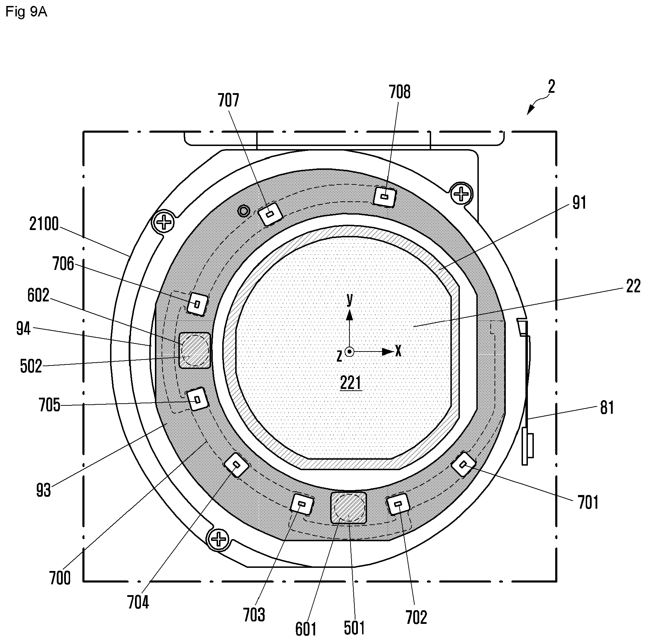

Referring to FIGS. 7 and 8, the head-mounted electronic device 2 may include a display 22 (e.g., the display module 160 of FIG. 1), a first lens unit 40, a camera 50 (e.g., the camera module 180 of FIG. 1), a third lens unit 60, a light emitting unit (also referred to as a light emitter) 70 (e.g., first, second, third, fourth, fifth, sixth, seventh, and eighth light emitting units 701, 702, 703, 704, 705, 706, 707, and 708 of FIG. 9A), a first flexible printed circuit board 81, a second flexible printed circuit board 82, a first support member 91, a second support member 92 (e.g., a lens barrel), a third support member 93, and/or a fourth support member 94.

According to various embodiments, the display 22 may be electrically connected to the substrate assembly of the head-mounted electronic device 2 through the first flexible printed circuit board 81. The processor (e.g., processor 120 of FIG. 1) included in the substrate assembly may provide a control signal through the first flexible printed circuit board 81, and a display driver integrated circuit (DDI) disposed on a rear surface of the display 22 or the first flexible printed circuit board 81 may control pixels of the display 22 according to the control signal.

According to various embodiments, the display 22 may be located facing the first lens unit 40. First light output from the display 22 may pass through the first lens unit 40. The first lens unit 40 may include a front surface 40A facing the display 22. The first light output from the display may be incident on the front surface 40A of the first lens unit 40.

According to various embodiments, the first lens unit 40 may be the left lens unit 23 of FIG. 5, and in FIGS. 7 and 8, may correspond to a portion of the head-mounted electronic device 2 corresponding to the left lens unit 23 of FIG. 5. The first lens unit 40 may be the right lens unit 24 of FIG. 5, and in FIGS. 7 and 8, may correspond to a portion of the head-mounted electronic device 2 corresponding to the right lens unit 24 of FIG. 5.

According to various embodiments, the first light output from the display 22 may be transmitted to the user's pupil through the first lens unit 40 while the head-mounted electronic device 2 is worn. The first lens unit 40 may include a rear surface 40B located opposite to the front surface 40A (or facing in the opposite direction from the front surface 40A). The rear surface 40B of the first lens unit 40 may face the user's face (e.g., the user's pupil) while the head-mounted electronic device 2 is worn. The first light output from the display 22 may be incident on the front surface 40A of the first lens unit 40 while the head-mounted electronic device 2 is worn, and the light incident on the front surface 40A may pass through the first lens unit 40 and may be transmitted to the user's pupil through the rear surface 40B of the second lens unit 40.

According to various embodiments, the first lens unit 40 may include a first optical axis A1. The first optical axis A1 may refer to, for example, an axis of symmetry of the first lens unit 40 when the first lens unit 40 through which light passes has rotational symmetry. The first optical axis A1 may refer to, for example, a path of light that does not cause birefringence. The first optical axis A1 may refer to, for example, an axis that does not exhibit optical difference even if the first lens unit 40 rotates. In the present disclosure, a z-coordinate axis may be parallel to the first optical axis A1 of the first lens unit 40. In the present disclosure, an x-coordinate axis may be perpendicular to the first optical axis A1 of the first lens unit 40 and may correspond to the direction in which the left lens unit 23 and the right lens unit 24 are disposed in FIG. 3.

According to various embodiments, the display 22 may be disposed substantially perpendicular and flat to the first optical axis A1 of the first lens unit 40.

According to various embodiments, the first lens unit 40 may include a pancake lens. The first lens unit 40 may include, for example, first, second, and third lens elements (also referred to as first, second, and third lenses) 41, 42, and 43 that are aligned with respect to the first optical axis A1. The optical axes of the first, second, and third lens elements 41, 42, and 43 may coincide with the first optical axis A1. The first, second, and third lens elements 41, 42, and 43 may be overlapped in the direction parallel to the first optical axis A1 (e.g., a direction parallel to the z-coordinate axis). The first, second, and third lens elements 41, 42, and 43 may be disposed in order from the display 22 side. The first lens element 41 may face the display 22. The third lens element 43 may face the user's eye 1001 while the head-mounted electronic device 2 is worn. The second lens element 42 may be disposed between the first lens element 41 and the third lens element 43.

According to various embodiments, the first, second, and third lens elements 41, 42, and 43 of the first lens unit 40 may have a symmetrical shape with respect to the first optical axis A1. The first, second, and third lens elements 41, 42, and 43 may be, for example, circular when viewed in the direction parallel to the first optical axis A1.

According to various embodiments, the first, second, and/or third lens elements 41, 42, and 43 of the first lens unit 40 may be formed (or provided) in various other shapes that are not limited to being circular when viewed in the direction parallel to the first optical axis A1. The first, second, and/or third lens elements 41, 42, and 43 may be formed (or provided), for example, in a form in which a portion of a circular lens (also referred to as a circular lens element) or a form in which a portion of a circular lens is removed. The first, second, and/or third lens elements 41, 42, and 43 may be formed (or provided) in various forms that include, for example, a first portion capable of substantially focusing the first light output from the display 22 onto a user's pupil, and a second portion (e.g., a border portion or a border area) extending from the first portion to the periphery of the first portion.

According to various embodiments, the first, second, and third lens elements 41, 42, and 43 of the first lens unit 40 may have different optical characteristics. At least any two of the first, second, and third lens elements 41, 42, and 43 of the first lens unit 40 may have different physical characteristics (e.g., shapes).

According to various embodiments, one surface of the first lens element 41 facing the second lens element 42 and the other surface of the second lens element 42 facing the first lens element 41 may not be at least partially parallel. One surface of the second lens element 42 facing the third lens element 43 and the other surface of the third lens element 43 facing the second lens element 42 may not be at least partially parallel.

According to various embodiments, the first lens unit 40 may include a first air gap between the first lens element 41 and the second lens element 42. The first lens unit 40 may include a second air gap between the second lens element 42 and the third lens element 43. By a combination of the first lens element 41, the second lens element 42, the third lens element 43, the first air gap, and the second air gap, the first lens unit 40 may have specific optical characteristics, such as transmission, reflection, and/or refraction.

According to various embodiments, when the head-mounted electronic device 2 implementing the augmented reality, the virtual reality, and/or the mixed reality is used while being worn on the user's head or face, the display 22 outputting the visual information may be disposed close to the user's eye. In the usage environment where the display 22 and the user's eye are disposed close to each other, the first lens unit 40 implemented as a pancake lens may provide good image quality even while using the limited number of lenses. The first lens unit 40 implemented as the pancake lens may implement an optical path of sufficient length compared to a mechanical length (e.g., the total length of the lens) by reflecting the visual information output from the display 22 at least twice on the path reaching the user's eye.

According to various embodiments, the first lens unit 40 may be configured to focus the first light output from the display 22 onto the pupil of the user's eye 1001.

According to various embodiments, the first lens unit 40 may be provided (or formed) as a bonded lens. The first lens unit 40 may be provided (or formed) in the form in which the first and second lens elements 41 and 42, and the second and third lens elements 42 and 43 are bonded without an air gap. One surface of the first lens element 41 facing the second lens element 42 and the other surface of the second lens element 42 facing the first lens element 41 are substantially parallel and may be bonded without the air gap. One surface of the second lens element 42 facing the third lens element 43 and the other surface of the third lens element 43 facing the second lens element 42 are substantially parallel and may be bonded without the air gap.

According to various embodiments, the first lens unit 40 may be provided (or formed) as a combination of the pancake lens and the bonded lens. For example, one surface of the first lens element 41 facing the second lens element 42 and the other surface of the second lens element 42 facing the first lens element 41 may be substantially parallel and bonded without the air gap, and one surface of the second lens element 42 facing the third lens element 43 and the other surface of the third lens element 43 facing the second lens element 42 may not be at least partially parallel and form the air gap. For example, one surface of the second lens element 42 facing the third lens element 43 and the other surface of the third lens element 43 facing the second lens element 42 may be substantially parallel and bonded without the air gap, and one surface of the first lens element 41 facing the second lens element 42 and the other surface of the second lens element 42 facing the first lens element 41 may not be at least partially parallel and form the air gap.

According to various embodiments, the first lens element 41 of the first lens unit 40 may have positive refractive power. The second lens element 42 of the first lens unit 40 may have negative refractive power. The third lens element 43 of the first lens unit 40 may have positive refractive power.

According to various embodiments, the number of lens elements included in the first lens unit 40 is not limited to the illustrated example. The first lens unit 40 may be formed (or provided) in the form in which one or more lens elements having positive refractive power and one or more lens elements having negative refractive power are combined.

According to various embodiments, the camera 50 may be electrically connected to the substrate assembly of the head-mounted electronic device 2 through the second flexible printed circuit board 82. The image data obtained through the camera 50 may be transmitted to the processor included in the substrate assembly through the second flexible printed circuit board 82.

According to various embodiments, the camera 50 may be disposed within the head-mounted electronic device 2 to receive the second light reflected from a designated area 1000 of the user's face while the head-mounted electronic device 2 is worn. The designated area 1000 of the user's face may include, for example, an eye 1001 and an area (e.g., the eyebrow 1002) around the eye 1001 while the head-mounted electronic device 2 is worn. The designated area 1000 of the user's face described in the present disclosure is a common part of the face corresponding to an angle of view of the camera 50 when the head-mounted electronic device 2 is worn on a human head, and should be understood as a captured area including facial elements (e.g., the eye 1001 and the eyebrow 1002) for detecting and tracking one or more features of the face.

According to various embodiments, the camera 50 may be disposed within the head-mounted electronic device 2 to receive the second light reflected from the designated area 1000 of the user's face while the head-mounted electronic device 2 is worn. The head-mounted electronic device 2 may provide the face tracking. The head-mounted electronic device 2 may be configured to obtain the image data of the user's face through the camera 50 and identify the movement of at least a portion of the face through the obtained image data. The face tracking may include, but is not limited to, the eye tracking, the eye closure recognition, the eyebrow recognition tracking, and/or the iris recognition, for example.

According to various embodiments, the camera 50 may be disposed within the head-mounted electronic device 2 to receive the second light reflected from the pupil of the user's eye 1001 while the head-mounted electronic device 2 is worn. The head-mounted electronic device 2 may obtain the image data of the pupil of the user's eye 1001 through the camera 50 during the eye tracking, and identify the movement of the pupil through the obtained image data.

According to various embodiments, the camera 50 may be disposed within the head-mounted electronic device 2 to receive the second light reflected from the iris of the user's eye 1001 while the head-mounted electronic device 2 is worn. The head-mounted electronic device 2 may obtain the image data of the iris of the user's eye 1001 through the camera 50 when recognizing the iris, and generate an iris code based on the obtained image data. The head-mounted electronic device 2 may authenticate the user by comparing the generated iris code with a code registered in the database of the memory.

According to various embodiments, the camera 50 may be located relative to the first lens unit 40 and the display 22 without interfering with the first light output from the display 22 being transmitted to the user's pupil through the first lens unit 40. In order to capture the designated area 1000 of the user's face while the head-mounted electronic device 2 is worn, the camera 50 may be located relative to the first lens unit 40 and the display 22. In various embodiments, the angle of view (also referred to as the capturing range) of the camera 50 may be provided (or formed) to correspond to the designated area 1000 of the user's face while the head-mounted electronic device 2 is worn.

According to various embodiments, the camera 50 may face the first lens element 41 of the first lens unit 40. The camera 50 may capture the designated area 1000 of the user's face through the first lens unit 40 while the head-mounted electronic device 2 is worn.

According to various embodiments, the first lens unit 40 may include a first area 401 and a second area 402. The first area 401 of the first lens unit 40 may at least partially overlap an active area (also referred to as a display area) 221 of the display 22 in the direction substantially parallel to the first optical axis A1. The active area of the display 22 may include a plurality of pixels of the display 22 and may be an area that outputs the first light. The second area 402 of the first lens unit 40 may surround the first area 401 when viewed in the direction parallel to the first optical axis A1. In various embodiments, the camera 50 may overlap the second area 402 of the first lens unit 40 in the direction substantially parallel to the first optical axis A1 of the first lens unit 40.

According to various embodiments, the first air gap between the first lens element 41 and the second lens element 42, and/or the second air gap between the second lens element 42 and the third lens element 43 may improve the resolution of light incident on the second area 402 of the first lens unit 40 compared to the comparative example formed by a lens that contacts the first lens unit 40.

According to various embodiments, the camera 50 may include a camera housing 51, an image sensor 52, and a second lens unit 53. The camera housing 51 may support the image sensor (also referred to as an imaging device) 52 and the second lens unit 53.

According to various embodiments, the image sensor 52 of the camera 50 may receive the second light reflected from the designated area 1000 of the user's face while the head-mounted electronic device 2 is worn to generate the image data (or an electrical signal). The image sensor 52 may include a light-receiving area (also referred to as an imaging area) 521 that receives the second light to generate the image data (or an electrical signal).

According to various embodiments, the second lens unit 53 of the camera 50 may be configured to focus the second light reflected from the designated area 1000 of the user's face onto the light-receiving area 521 of the image sensor 52 while the head-mounted electronic device 2 is worn.

According to various embodiments, the second lens unit 53 of the camera 50 may include a second optical axis A2. The second optical axis A2 may refer to, for example, an axis of symmetry of the second lens unit 53 when the second lens unit 53 through which light passes has rotational symmetry. The second optical axis A2 may refer to, for example, a path of light that does not cause birefringence. The second optical axis A2 may refer to, for example, an axis that does not exhibit optical difference even if the second lens unit 53 rotates. The second optical axis A2 of the second lens unit 53 may be different from the first optical axis A1 of the first lens unit 40. The first optical axis A1 of the first lens unit 40 and the second optical axis A2 of the second lens unit 53 may not be parallel to each other.

According to various embodiments, the second lens unit 53 may include one or more lens elements (or lenses) aligned with the second optical axis A2. One or more lens elements of the second lens unit 53 may have a symmetrical shape with respect to the second optical axis A2. One or more lens elements of the second lens unit 53 may be, for example, circular when viewed in the direction parallel to the second optical axis A2.

According to various embodiments, the third lens unit 60 may be located between the first lens unit 40 and the second lens unit 53 of the camera 50. The third lens unit 60 may be disposed on an optical path between the first lens unit 40 and the second lens unit 53. The image sensor 52 may receive the second light reflected from the designated area 1000 of the user's face through the first lens unit 40, the third lens unit 60, and the second lens unit 53 of the camera 50 while the head-mounted electronic device 2 is worn.

According to various embodiments, the third lens unit 60 may overlap the second area 402 of the first lens unit 40 in the direction parallel to the first optical axis A1 of the first lens unit 40. The third lens unit 60 may not overlap the first area 401 of the first lens unit 40 in the direction parallel to the first optical axis A1 of the first lens unit 40.

According to various embodiments, the third lens unit 60 may correct (e.g., change) an angle at which at least a portion of the second light reflected from the designated area 1000 of the user's face passes through the first lens unit 40 and is incident on the second lens unit 53 while the head-mounted electronic device 2 is worn. In the comparative example where the third lens unit 60 is omitted, due to field curvature (or spherical aberration) caused by the physical characteristics (e.g., curved shape) of the first lens unit 40, the phenomenon may occur in which at least a portion of the second light reflected from the designated area 1000 of the user's face may not be focused onto the light-receiving area 521 of the image sensor 52 included in the camera 50. The third lens unit 60 corrects (also referred to as reverse compensation) at least a portion of the second light that passes through the first lens unit 40 and then enters the second lens unit 53 at a distorted angle, and thus, the second lens unit 53 focuses the second light onto the light-receiving area 521 of the image sensor 52 so that the image sensor 52 may generate the image data with no degradation in resolution. The third lens unit 60 may correct at least a portion of the second light that passes through the first lens unit 40 and then is incident on the second lens unit 53 at a distorted angle, thereby allowing the camera 50 to generate the image data with secured resolution. The second lens unit 53 is implemented to have the performance (e.g., modulation transfer function (MTF)) that may focus the second light onto the light-receiving area 521 of the image sensor 52 so that the image sensor 52 may generate the image data with no degradation in resolution under the condition in which there is no other medium (e.g., the first lens unit 40) other than the air gap between the designated area 1000 of the user's face and the second lens unit 53. Since the fact that at least a portion of the second light that passes through the first lens unit 40 and then is incident on the second lens unit 53 at a distorted angle does not match the performance of the second lens unit 53, the resolution of the image data generated by the image sensor 52 may be degraded compared to the condition in which there is no first lens unit 40. The third lens unit 60 corrects the angle at which at least a portion of the second light passes through the first lens unit 40 and then is incident on the second lens unit 53 at a distorted angle so that it substantially corresponds to the second light being incident on the second lens unit 53 under the condition in which there is no first lens unit 40, so the image sensor 52 may generate the image data with secured resolution that matches the performance of the second lens unit 53.

According to various embodiments, in FIG. 7, a first virtual straight line B1 and a second virtual straight line B2 are illustrated. The first virtual straight line B1 is perpendicular to the first optical axis A1 and is drawn at a point where one surface of the first lens element 41 facing the display 22 and the first optical axis A1 of the first lens element 41 meet. The second virtual straight line B2 is perpendicular to the first optical axis A1 and passes through a middle of a thickness of the first lens element 41 corresponding to the first optical axis A1. In various embodiments, the third lens unit 60 may be located between the first virtual straight line B1 and the second virtual straight line B2.

According to various embodiments, in FIG. 7, a third virtual straight line B3 and a fourth virtual straight line B4 are illustrated. The third virtual straight line B3 is drawn from an end of the display 22 that is parallel to the first optical axis A1 and spaced apart from the first optical axis A1 in the direction perpendicular to the first optical axis A1. The fourth virtual straight line B4 is drawn from an end of the first lens unit 40 that is parallel to the first optical axis A1 and spaced apart from the first optical axis A1 in the direction perpendicular to the first optical axis A1. In various embodiments, the third lens unit 60 may be located between the third virtual straight line B3 and the fourth virtual straight line B4.

According to various embodiments, the distance between the first lens unit 40 and the third lens unit 60 in the direction parallel to the second optical axis A2 of the second lens unit 53 or in the direction parallel to the third optical axis A3 of the third lens unit 60 may be smaller than the distance between the second lens unit 53 and the third lens unit 60.

According to various embodiments, the size of the first lens unit 40 when viewed in the direction parallel to the first optical axis A1 may be larger than the size of the third lens unit 60 when viewed in the direction parallel to the third optical axis A3.

According to various embodiments, the size of the third lens unit 60 when viewed in the direction parallel to the third optical axis A3 may be larger than the size of the second lens unit 53 when viewed in the direction parallel to the second optical axis A2.

According to various embodiments, the third lens unit 60 may have negative refractive power.

According to various embodiments, the third lens unit 60 may include a fourth lens element 601 having an aspheric shape. The fourth lens element 601 may include a freeform surface as the aspheric shape. The freeform surface may be defined as any curved surface having asymmetry with respect to any axis.

According to various embodiments, the fourth lens element 601 of the third lens unit 60 may include a first surface (also referred to as a first curved surface) 61 having a convex shape in a paraxial region facing the first lens unit 40. The fourth lens element 601 may include a second surface (also referred to as a second curved surface) 62 having a concave shape in a paraxial region facing the second lens unit 53.

According to various embodiments, the first surface 61 of the fourth lens element 601 of the third lens unit 60 may have a radius of curvature of R1. The second surface 62 of the fourth lens element 601 of the third lens unit 60 may have a radius of curvature of R2. R1 may be larger than R2.

According to various embodiments, the third lens unit 60 may be formed (or provided) so as to satisfy the condition of 3 < (R1+R2)/(R1-R2) < 8.

According to various embodiments, the first surface 61 and the second surface 62 of the third lens unit 60 may have an aspheric shape. The first surface 61 and/or the second surface 62 may include a freeform surface. The third lens unit 60 may have an asymmetric shape.

According to various embodiments, the fourth lens element 601 of the third lens unit 60 may have an Abbe's number of V1. The fourth lens element 601 may be formed (or provided) to satisfy a condition of 29 < V1 > 31.

According to various embodiments, the fourth lens element 601 of the third lens unit 60 may have a refractive index of N1. The first lens element 41 of the first lens unit 40 may be formed (or provided) to satisfy the condition of 18 < V1/N1 < 21.

According to various embodiments, the fourth lens element 601 of the third lens unit 60 may include a portion of a circular lens, or be formed (or provided) in a form in which a portion of a circular lens is removed. The fourth lens element 601 of the third lens unit 60 may be manufactured, for example, by a first operation of forming a circular lens (also referred to as a circular lens element) 600 (see FIG. 8) having a third optical axis A3, and a second operation (e.g., cutting as an appearance processing) of removing a part of the circular lens 600. The circular lens 600 formed by the first operation may have a symmetrical shape with respect to the third optical axis A3. The third optical axis A3 may refer to, for example, an axis of symmetry of the circular lens 600 through which light passes when the circular lens 600 has rotational symmetry. The third optical axis A3 may refer to, for example, a path of light that does not cause birefringence. The third optical axis A3 may refer to, for example, an axis that does not cause optical difference even when the circular lens 600 rotates. By the second operation, the remaining portion of the circular lens 600 may form the third lens unit 60 as the fourth lens element 601 having negative refractive power. The fourth lens element 601 may include, for example, a portion between the third optical axis A3 of the circular lens 600 and a border area (or a border portion) of the circular lens 600. Since, when passing through the fourth lens element 601, the light parallel to the fourth lens element 601 of the third optical axis A3 proceeds as if light is emitted from a point (e.g., focus) away from the fourth lens element 601 through the fourth lens element 601, the fourth lens element 601 is a portion of the circular lens 600, but the third optical axis A3 may be substantially defined or interpreted as the optical axis of the fourth lens element 601. Forming the third lens unit 60 of the fourth lens element 601 by a manufacturing method that leaves only a portion of the circular lens 600 having the third optical axis A3 may easily form a lens element having negative refractive power. Forming the third lens unit 60 of the fourth lens element 601 by the manufacturing method that leaves only a portion of the circular lens 600 having the third optical axis A3 may be intended to reduce the structural limitations (e.g., limitations on disposition space or interference with surrounding structures) of the head-mounted electronic device 2.

For a curved surface of a certain object, a tangent plane to any one point of the curved surface, a first plane perpendicular to the tangent plane and at which the one point is located, and a second plane perpendicular to the tangent plane and the first plane and at which the one point is located may be defined. In case that the curved surface has a radius of curvature when viewing a cross-sectional view of an object cut along the first plane and the curved surface has a radius of curvature of substantially 0 when viewing a cross-sectional view of an object cut along the second plane, the curved surface of the object may be a two-dimensional curved surface. In case that the curved surface has a radius of curvature when viewing a cross-sectional view of an object cut along the first plane and the curved surface has a radius of curvature when viewing a cross-sectional view of an object cut along the second plane, the curved surface of the object may be a three-dimensional curved surface.

In various embodiments, in the illustrated coordinate system, with respect to the radius of curvature of the first lens unit 40, the first plane may be a y-z plane where the first optical axis A1 is located, and the second plane may be an x-z plane that is perpendicular to the first plane and where the first optical axis A1 is located.

In various embodiments, in the illustrated coordinate system, with respect to the radius of curvature of the second lens unit 53, the first plane may be a y'-z' plane where the second optical axis A2 is located, and the second plane may be an x'-z' plane that is perpendicular to the first plane and where the second optical axis A2 is located. A y'-coordinate axis may be a rotation of a y-coordinate axis by a first angle between the first optical axis A1 and the second optical axis A2, and a z'-coordinate axis may be a rotation of a z-coordinate axis by the first angle between the first optical axis A1 and the second optical axis A2.

In various embodiments, in the illustrated coordinate system, with respect to the radius of curvature of the third lens unit 60, the first plane may be a y"-z" plane where the third optical axis A3 is located, and the second plane may be an x-z" plane that is perpendicular to the first plane and where the third optical axis A3 is located. A y"-coordinate axis may be the rotation of the y-coordinate axis by a second angle between the first optical axis A1 and the third optical axis A3, and a z"-coordinate axis may be the rotation of the z-coordinate axis by the second angle between the first optical axis A1 and the third optical axis A3.

In the present disclosure, the term 'X radius' is defined as a first radius of curvature of the curved surface of the third lens unit 60 when viewing a cross-sectional view of the third lens unit 60 cut along the first plane (e.g., the y"-z" plane). In the present disclosure, the term 'Y radius' is defined as a second radius of curvature of the curved surface of the third lens unit 60 when viewing a cross-sectional view of the third lens unit 60 cut along the second plane (e.g., the x-z" plane).

According to various embodiments, the first surface 61 and the second surface 62 of the third lens unit 60 may be formed (or provided) as a two-dimensional curved surface.

According to various embodiments, the first surface 61 and the second surface 62 of the third lens unit 60 may be formed (or provided) as a three-dimensional curved surface.

According to various embodiments, when viewing a cross-sectional view of the third lens unit 60 cut along the first plane (e.g., the y"-z" plane), the third lens unit 60 may have a shape in which the thickness is at least gradually increased it gets farther away from the third optical axis A3.

According to various embodiments, when viewing a cross-sectional view of the third lens unit 60 cut along the second plane (e.g., the x-z" plane), the third lens unit 60 may have a shape in which the thickness is at least gradually increased it gets farther away from the third optical axis A3.

According to various embodiments, when the structural limitations (e.g., limitations of the disposition space or interference with the surrounding structure) of the head-mounted electronic device 2 are not a problem, the circular lens 600 may be disposed in the head-mounted electronic device 2 as the third lens unit 60. When the circular lens 600 is disposed, a portion of an area between the third optical axis A3 of the circular lens 600 and the border area of the circular lens 600 may be located in the optical path between the first lens unit 40 and the second lens unit 53.

According to various embodiments, the third lens unit 60 may be formed (or provided) in the form in which the third lens unit 60 includes a plurality of lens elements. The third lens unit 60 may include the plurality of lens elements aligned on the third optical axis A3.

According to various embodiments, the third optical axis A3 of the third lens unit 60 may be different from the first optical axis A1 of the first lens unit 40 and the second optical axis A2 of the second lens unit 53. The first optical axis A1 of the first lens unit 40 and the third optical axis A3 of the third lens unit 60 may not be parallel to each other. The second optical axis A2 of the second lens unit 53 and the third optical axis A3 of the third lens unit 60 may not be parallel to each other.

According to various embodiments, a first angle between the first optical axis A1 of the first lens unit 40 and the second optical axis A2 of the second lens unit 53 may be greater than a second angle between the first optical axis A1 of the first lens unit 40 and the third optical axis A3 of the third lens unit 60.

According to various embodiments, at least any two of the number of lens elements included in the first lens unit 40, the number of lens elements included in the second lens unit 53, and the number of lens elements included in the third lens unit 60 may be different from each other.

According to various embodiments, the number of lens elements included in the third lens unit 60 may be less than the number of lens elements included in the first lens unit 40 and the number of lens elements included in the second lens unit 53. The number of lens elements included in the second lens unit 53 may be greater than the number of lens elements included in the first lens unit 40. For example, the first lens unit 40 may include three lens elements (e.g., first, second, and third lens elements 41, 42, and 43), the second lens unit 53 may include four lens elements, and the third lens unit 60 may include one lens element.

According to various embodiments, at least any two of the number of lens elements included in the first lens unit 40, the number of lens elements included in the second lens unit 53, and the number of lens elements included in the third lens unit 60 may be the same as each other.

In the comparative example where the third lens unit 60 is omitted, due to the physical characteristics of the first lens unit 40, a portion of the second light reflected from the designated area 1000 of the user's face, which is incident from some field area within the angle of view of the camera 50, may be focused in front of the light-receiving area 521 of the image sensor 52. In the comparative example where the third lens unit 60 is omitted, due to the physical characteristics of the first lens unit 40, a portion of the second light reflected from the designated area 1000 of the user's face, which is incident from some field area within the angle of view of the camera 50, may be focused behind the light-receiving area 521 of the image sensor 52.

For example, referring to the cross-sectional view of FIG. 7, based on the second optical axis A2 of the second lens unit 53, the plurality of field areas within the angle of view may be divided into a plurality of upper field areas and a plurality of lower field areas. In a comparative example where the third lens unit 60 is omitted, some of the second light reflected from the designated area 1000 of the user's face, which is incident from the plurality of upper field areas, may be focused in front of the light-receiving area 521 of the image sensor 52 because the second light passes through a relatively thick area of the first lens unit 40 compared to the plurality of lower field areas. In a comparative example where the third lens unit 60 is omitted, some of the second light reflected from the designated area 1000 of the user's face, which is incident from the plurality of lower field areas, may be focused behind the light-receiving area 521 of the image sensor 52 because the second light passes through a relatively thin area of the first lens unit 40 compared to the plurality of upper field areas.

According to various embodiments, the third lens unit 60 may correct some light of the second light incident from some field area within the angle of view of the camera 50 which is focused in front of the light-receiving area 521 of the image sensor 52 so that some light of the second light is focused onto the light-receiving area 521 of the image sensor 52. In various embodiments, the third lens unit 60 may correct some light of the second light incident from some field area within the angle of view of the camera 50 which is focused in front of the light-receiving area 521 of the image sensor 52 so that some light of the second light is focused onto the light-receiving area 521 of the image sensor 52.

According to various embodiments, the light emitting unit 70 may output light (e.g., the second light) to the designated area 1000 of the user's face while the head-mounted electronic device 2 is worn. The light emitting unit 70 may be configured to output the light of the designated frequency or a frequency band (or, a designated wavelength or a wavelength band). The light emitting unit 70 may include, for example, an infrared (IR) LED configured to output infrared light to the designated area 1000 of the user's face. The second light reflected from the designated area 1000 of the user's face may include infrared light.

According to various embodiments, the light output from the light emitting unit 70 may reach the designated area 1000 of the user's face through the first lens unit 40 while the head-mounted electronic device 2 is worn.

According to various embodiments, the second light including infrared light reflected from the designated area 1000 of the user's face may be transmitted to the image sensor 52 through the first lens unit 40, the third lens unit 60, and the second lens unit 53 while the head-mounted electronic device 2 is worn. The head-mounted electronic device 2 may be configured to obtain the image data for the designated area 1000 of the user's face through the image sensor 52 and identify the movement of the face through the obtained image data.

According to various embodiments, the second light including infrared light reflected from the pupil of the user's eye 1001 may be transmitted to the image sensor 52 through the first lens unit 40, the third lens unit 60, and the second lens unit 53 while the head-mounted electronic device 2 is worn. The head-mounted electronic device 2 may obtain the image data for the pupil of the user's eye 1001 through the image sensor 52, and identify the movement of the pupil through the obtained image data.

According to various embodiments, while the head-mounted electronic device 2 is worn, a glint is formed on the pupil of the user's eye 1001 due to the infrared light output from the light emitting unit 70, and the second light for the glint can be transmitted to the image sensor 52 through the first lens unit 40, the third lens unit 60, and the second lens unit 53. The head-mounted electronic device 2 may identify the movement of the pupil through the image data obtained through the image sensor 52.

According to various embodiments, the second light including infrared light reflected from the iris of the user's eye 1001 may be transmitted to the image sensor 52 through the first lens unit 40, the third lens unit 60, and the second lens unit 53 while the head-mounted electronic device 2 is worn. The head-mounted electronic device 2 may obtain the image data for the iris of the user's eye 1001 through the image sensor 52, and provide the iris recognition through the obtained image data.

According to various embodiments, the camera 50 may include a bandpass filter so that light of the designated frequency band (or the designated wavelength band) may be incident on the second lens unit 53 of the camera 50. In various embodiments, the light emitting unit 70 may output infrared light of about 850 nm (nanometer), and the bandpass filter of the camera 50 may pass through a wavelength of about 830 to about 870 nm.

According to various embodiments, the bandpass filter may be located between the second lens unit 53 and the third lens unit 60. In various embodiments, the bandpass filter may be disposed on the camera 50 (or the second lens unit 53) or the third lens unit 60.

According to various embodiments, a first support member (also referred to as a first bracket) 91 may support a display 22. The display 22 may be disposed on the first support member 91. A border area (also referred to as a non-active area) 222 extending from the active area 221 of the display 22 may be coupled with the first support member 91. The first support member 91 may be accommodated in and coupled with the housing 21 of FIG. 2. The first support member 91 may include a first opening 901. The active area 221 of the display 22 may at least partially overlap the first opening 901 of the first support member 91 in the direction parallel to the first optical axis A1 of the first lens unit 40. The light (e.g., first light) output from the active area 221 of the display 22 may pass through the first lens unit 40 through the first opening 901 of the first support member 91.

According to various embodiments, the first support member 91 may be defined or interpreted as a portion of the housing 21 of FIG. 2.

According to various embodiments, the second support member (also referred to as a second bracket) 92 may support the first lens unit 40. The first lens unit 40 may be disposed on the second support member 92. The second support member 92 may be accommodated in and coupled with the housing 21 of FIG. 2. The second support member 92 may include a hollow part 904 extending from a second opening 902 to a third opening 903. The second support member 92 may be provided (or formed) in a cylindrical shape including the hollow part 904. The first lens unit 40 may be located in at least a portion of the hollow part 904 of the second support member 92 and disposed on or coupled with the second support member 92. The first, second, and third lens elements 41, 42, and 43 included in the first lens unit 40 may be supported by the second support member 92, so the relative positions between the first, second, and third lens elements 41, 42, and 43 may be maintained. The second and third openings 902 and 903 of the second support member 92 may be aligned and overlapped with the first opening 901 of the first support member 91 in the direction parallel to the first optical axis A1 of the first lens unit 40. The second opening 902 of the hollow part 904 may face the first opening 901 of the first support member 91. The third opening 903 of the hollow part 904 may face the user's eye 1001 while the head-mounted electronic device 2 is worn. While the head-mounted electronic device 2 is worn, the first light output from the display 22 may pass through the first opening 901 of the first support member 91 and the first lens unit 40 disposed on the second support member 92 and transmitted to the user's eye 1001.

According to various embodiments, the second support member 92 may include a front support member 921 and a rear support member 922 that are connected to each other. By combining the front support member 921 and the rear support member 922, a hollow part 904 in which the first lens unit 40 is accommodated may be formed. The front support member 921 may face the first support member 91 and may include a second opening 902 of the hollow part 904. The rear support member 922 may include a third opening 903 of the hollow part 904.

According to various embodiments, the first support member 91 may be coupled with the front support member 921 of the second support member 92.

According to various embodiments, the combination of the display 22, the first support member 91, and the second support member 92 provides a space that is open only to the third opening 903 while accommodating the first lens unit 40, so the first light output from the display 22 may be transmitted to the user's eye 1001 through the first lens unit 40 without leaking while the head-mounted electronic device 2 is worn.

According to various embodiments, the second support member 92 may be defined or interpreted as a portion of the housing 21 of FIG. 2.

According to various embodiments, the third support member (also referred to as a third bracket) 93 may support the third lens unit 60. The third lens unit 60 may be disposed on or coupled with the third support member 93.

According to various embodiments, the third support member 93 may be located in the hollow part 904 of the second support member 92. The third support member 93 may be disposed on or coupled with the front support member 921 of the second support member 92. The third support member 93 may include a fourth opening 905, and may have a shape of ring surrounding the fourth opening 905. The fourth opening 905 of the third support member 93 may be aligned and overlapped with the first opening 901 of the first support member 91 and the second and third openings 902 and 903 of the second support member 92 in the direction parallel to the first optical axis A1 of the first lens unit 40. The fourth opening 905 may not obstruct the first light output from the display 22 from passing through the first lens unit 40.

According to various embodiments, in the direction parallel to the first optical axis A1 of the first lens unit 40, the third support member 93 may at least partially overlap the second area 402 of the first lens unit 40 and may not overlap the first area 401 of the first lens unit 40.

According to various embodiments, the third support member 93 may be defined or interpreted as a portion of the housing 21 of FIG. 2.

According to various embodiments, the second support member 92 (e.g., the front support member 921) may extend in the form in which it includes the third support member 93, and the third support member 93 may be omitted. The third lens unit 60 may be disposed on or coupled with the second support member 92.

According to various embodiments, in order to reduce or prevent a flare phenomenon caused by the third support member 93, the third support member 93 may be omitted, and the third lens unit 60 may be disposed on or coupled with the second support member 92.

According to various embodiments, the third support member 93 may be omitted, and the third lens unit 60 may be disposed on or coupled with the second support member 92 (e.g., the front support member 921) so as to be located in an optical path between the first lens unit 40 and the camera 50.

According to various embodiments, when viewed in the direction parallel to the first optical axis A1 of the first lens unit 40, the camera 50 may be located around the display 22 without overlapping the display 22.

According to various embodiments, the camera 50 may be located next to the display 22 in the direction substantially perpendicular to the first optical axis A1 of the first lens unit 40.

According to various embodiments, the second support member 92 (e.g., the front support member 921) may include a first hole 911 corresponding to the third lens unit 60 disposed on the third support member 93. In the direction parallel to the first optical axis A1 of the first lens unit 40, the first hole 911 of the second support member 92 may at least partially overlap the second area 402 of the first lens unit 40 and may not overlap the first area 401 of the first lens unit 40. The camera 50 may be located outside the hollow part 904 of the second support member 92. The camera 50 may face the front support member 921 of the second support member 92 so as to face the first hole 911 of the second support member 92. The second light reflected from the designated area 1000 of the face may be transmitted to the image sensor 52 through the first lens unit 40, the third lens unit 60, the first hole 911 of the second support member 92, and the second lens unit 53 while the head-mounted electronic device 2 is worn.

According to various embodiments, the fourth support member (also referred to as a fourth bracket) 94 may support the camera 50. The camera 50 may be disposed on or coupled with the fourth support member 94. The fourth support member 94 may be in close contact with the front support member 921 of the second support member 92 so that the second light reflected from the designated area 1000 of the user's face may be transmitted to the camera 50 without leaking.

According to various embodiments, when viewed in the direction parallel to the first optical axis A1 of the first lens unit 40, the light emitting unit 70 may be located around the display 22 without overlapping the display 22. When viewed in the direction parallel to the first optical axis A1 of the first lens unit 40, the light emitting unit 70 may not overlap the camera 50.

According to various embodiments, the light emitting unit 70 may be located next to the display 22 in the direction substantially perpendicular to the first optical axis A1 of the first lens unit 40.

According to various embodiments, the light emitting unit 70 may be disposed between the first lens unit 40 and the display 22. The light emitting unit 70 may be located between the second area 402 of the first lens unit 40 and the display 22 (or the border area of the display 22), and may overlap the second area 402 of the first lens unit 40 and may not overlap the display 22, in the direction parallel to the first optical axis A1 of the first lens unit 40.

According to various embodiments, the second support member 92 may include a second hole 912, and the third support member 93 may include a third hole 913. The second hole 912 of the second support member 92 and the third hole 913 of the third support member 93 may be aligned. In the direction parallel to the first optical axis A1 of the first lens unit 40, the second hole 912 of the second support member 92 and the third hole 913 of the third support member 93 may at least partially overlap the second area 402 of the first lens unit 40 and may not overlap the first area 401 of the first lens unit 40. The light emitting unit 70 may be located outside the hollow part 904 of the second support member 92. The light emitting unit 70 may face the front support member 921 of the second support member 92 so as to face the second hole 912 of the second support member 92. The light output from the light emitting unit 70 may reach the designated area 1000 of the user's face through the second hole 912 of the second support member 92, the third hole 913 of the third support member 93, and the first lens unit 40 when the head-mounted electronic device 2 is worn.

According to various embodiments, the fourth support member 94 may support the light emitting unit 70. The light emitting unit 70 may be disposed on or coupled with the fourth support member 94. The fourth support member 94 may be in close contact with the front support member 921 of the second support member 92 so that the light output from the light emitting unit 70 may reach the designated area 1000 of the user's face through the second hole 912 of the second support member 92, the third hole 913 of the third support member 93, and the first lens unit 40 without leaking.

According to various embodiments, the head-mounted electronic device 2 may include a plurality of light emitting units 70. When viewed in the direction parallel to the first optical axis A1 of the first lens unit 40, a plurality of light emitting units (e.g., the first, second, third, fourth, fifth, sixth, seventh, and eighth light emitting units 701, 702, 703, 704, 705, 706, 707, and 708 of FIG. 9A) may be located around the display 22. For example, light output from the plurality of light emitting units may reach the designated area 1000 of the user's face through the first lens unit 40 while the head-mounted electronic device 2 is worn.

According to various embodiments, the fourth support member 94 may be coupled with the first support member 91 and/or the second support member 92.

According to various embodiments, the fourth support member 94 may be defined or interpreted as a portion of the housing 210 of FIGS. 2 and 3 or the housing 21 of FIG. 4.

According to various embodiments, the first support member 91 may extend in the form in which it includes the fourth support member 94, and the fourth support member 94 may be omitted.

According to various embodiments, the third lens unit 60 may be disposed on or coupled with the fourth support member 94, and the third support member 93 may be omitted.

According to various embodiments, depending on the form of the first lens unit 40, and/or the relative position and/or direction of the camera 50 with respect to the first lens unit 40, the third lens unit 60 may be provided (or formed) in various other forms.

According to various embodiments, the third lens unit 60 may be disposed on or coupled with the camera 50 so as to be misaligned with the second optical axis A2 of the second lens unit 53, and the third support member 93 may be omitted. The third lens unit 60 may be disposed in or coupled with, for example, the camera housing 51 of the camera 50.

According to various embodiments, the third lens unit 60 may be formed integrally with the camera 50 so as to be misaligned with the second optical axis A2 of the second lens unit 53, and the third support member 93 may be omitted. The third lens unit 60 may be defined or interpreted as a component included in the camera 50. The second lens unit 53 and the third lens unit 60 may be defined or interpreted as optical elements misaligned with different optical axes in the camera 50.

According to various embodiments, the third lens unit 60 may be formed integrally with the first lens unit 40 so as to be misaligned with the first optical axis A1 of the first lens unit 40. A single lens unit in which the first lens unit 40 and the third lens unit 60 are integrated may be formed (or provided), and in the single lens unit, the first lens unit 40 and the third lens unit 60 may be defined or interpreted as the optical elements misaligned with different optical axes.

According to various embodiments, the head-mounted electronic device 2 may include a plurality of combinations of the camera 50 and the third lens unit 60 for the first lens unit 40.

According to various embodiments, the first lens unit 40 may be defined or interpreted as a 'first optical system', the second lens unit 53 may be defined or interpreted as a 'second optical system', and the third lens unit 60 may be defined or interpreted as a 'third optical system'.

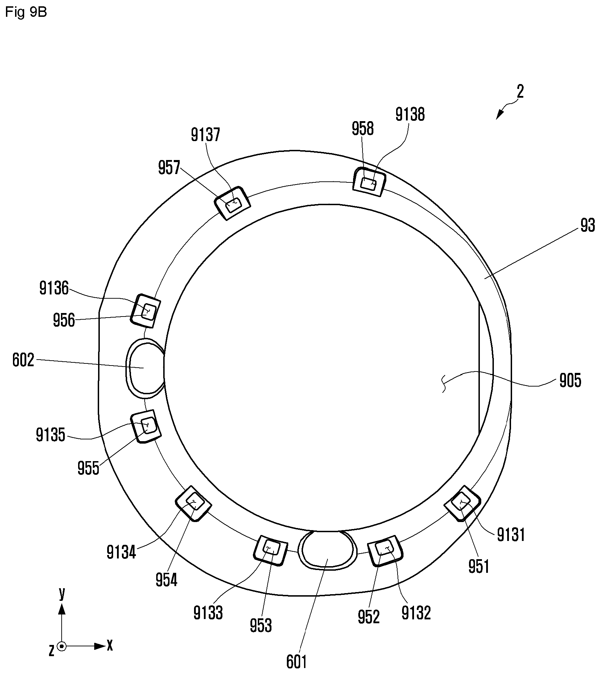

FIG. 9A is a diagram illustrating a portion of the head-mounted electronic device 2 according to various embodiments of the present disclosure. FIG. 9B is a diagram illustrating a portion of the head-mounted electronic device 2 according to various embodiments of the present disclosure.

Referring to FIGS. 9A and 9B , the head-mounted electronic device 2 may include a frame (also referred to as a frame structure or a framework) 2100, the first support member 91, the third support member 93, the fourth support member 94, the display 22, a first camera 501, a second camera 502, the first, second, third, fourth, fifth, sixth, seventh, and eighth light emitting units 701, 702, 703, 704, 705, 706, 707, and 708, and/or the two third lens units 601 and 602. Descriptions of some components having the same reference numerals as those illustrated in FIG. 7 are omitted.

According to various embodiments, the frame 2100 may be a rigid structure for disposing or supporting structural components (e.g., the first support member 91, the second support member 92 (see FIG. 5), and/or the fourth support member 94) and electrical components (e.g., the display 22, the first camera 501, the second camera 502, and/or the first, second, third, fourth, fifth, sixth, seventh, and eighth light emitting units 701, 702, 703, 704, 705, 706, 707, and 708), and may ensure rigidity and/or durability of the head-mounted electronic device 2. In various embodiments, the frame 2100 may include the housing 210 of FIGS. 2 and 3.

According to various embodiments, the frame 2100 may be defined or interpreted as a portion of the housing 21 of FIG. 2.

According to various embodiments, the display 22 may be disposed on or coupled with the first support member 91, and the first support member 91 may be disposed on or coupled to the frame 2100.

According to various embodiments, the first camera 501, the second camera 502, and the first, second, third, fourth, fifth, sixth, seventh, and eighth light emitting units 701, 702, 703, 704, 705, 706, 707, and 708 may be disposed on the fourth support member 94. The fourth support member 94 may be disposed on or coupled to the frame 2100. The first camera 501 and the second camera 502 may be implemented substantially identically or at least similarly to the camera 50 of FIG. 7.

According to various embodiments, the fourth support member 94 may include the fourth opening 905 so as not to obstruct the first light output from the display 22 from passing through the first lens unit 40 (see FIG. 5), and may have a shape of a ring surrounding the fourth opening 905. The fourth support member 94 may not overlap the active area 221 of the display 22 in the direction parallel to the first optical axis A1 of the first lens unit 40 (see FIG. 7).

According to various embodiments, the head-mounted electronic device 2 may include a flexible printed circuit board 700 having the first, second, third, fourth, fifth, sixth, seventh, and eighth light emitting units 701, 702, 703, 704, 705, 706, 707, and 708 disposed thereon. The flexible printed circuit board 700 may be disposed on the fourth support member 94.

According to various embodiments, two third lens units 601 and 602 may be disposed on or coupled to the third support member 93. The third support member 93 may include two holes corresponding to the two third lens units 601 and 602, respectively. The two third lens units 601 and 602 may be disposed in two holes of the third support member 93, respectively. The two lens units 601 and 602 may be implemented substantially identically or at least partially similarly to the third lens unit 60 of FIG. 5.

According to various embodiments, one third lens unit 601 may be located corresponding to the first camera 501, and the remaining third lens unit 602 may be located corresponding to the second camera 502.

The combination of one third lens unit 601 and the first camera 501 is substantially identical to the combination of the third lens unit 60 and the camera 50 for the first lens unit 40 (see FIG. 7), and one third lens unit 601 may correct (also referred to as the reverse compensation) at least a portion of the second light reflected from the designated area 1000 of the user's face (see FIG. 8) that passes through the first lens unit 40 and then is incident on the second lens unit of the first camera 501 (e.g., the second lens unit 53 of FIG. 7) at a distorted angle. The combination of the remaining third lens unit 602 and the second camera 502 is substantially identical to the combination of the third lens unit 60 and the camera 50 for the first lens unit 40 (see FIG. 7), and the remaining third lens unit 602 may correct (also referred to as the reverse compensation) at least a portion of the second light reflected from the designated area 1000 of the user's face (see FIG. 8) that passes through the first lens unit 40 and then is incident on the second lens unit of the second camera 502 (e.g., the second lens unit 53 of FIG. 7) at a distorted angle.

According to various embodiments, the third support member 93 may include a plurality of third holes 9131, 9132, 9133, 9134, 9135, 9136, 9137, and 9138 (e.g. the plurality of third holes 913 of FIG. 7) corresponding to the first, second, third, fourth, fifth, sixth, seventh, and eighth light emitting units 701, 702, 703, 704, 705, 706, 707, and 708, respectively. The light output from the first, second, third, fourth, fifth, sixth, seventh, and eighth light emitting units 701, 702, 703, 704, 705, 706, 707, and 708 disposed on the fourth support member 94 may reach the designated area 1000 of the user's face (see FIG. 8) through a plurality of second holes (e.g., a plurality of second holes 912 of FIG. 7) of the second support member 92 (see FIG. 7), the plurality of third holes 9131, 9132, 9133, 9134, 9135, 9136, 9137, and 9138 of the third support member 93, and the first lens unit 40 (see FIG. 7) while the head-mounted electronic device 2 is worn.

According to various embodiments, the head-mounted electronic device 2 may include the plurality of optical members 951, 952, 953, 954, 955, 956, 957, and 958 disposed in the plurality of third holes 9131, 9132, 9133, 9134, 9135, 9136, 9137, and 9138 of the third support member 93. The plurality of optical members 951, 952, 953, 954, 955, 956, 957, and 958 may improve the focusing of the light output from the first, second, third, fourth, fifth, sixth, seventh, and eighth light emitting units 701, 702, 703, 704, 705, 706, 707, and 708 onto the designated area 1000 of the user's face (see FIG. 8). The plurality of optical members 951, 952, 953, 954, 955, 956, 957, and 958 may include, for example, a prism.

According to various embodiments, the plurality of optical members 951, 952, 953, 954, 955, 956, 957, and 958 may be omitted to reduce or prevent the flare phenomenon caused by the plurality of optical members 951, 952, 953, 954, 955, 956, 957, and 958.

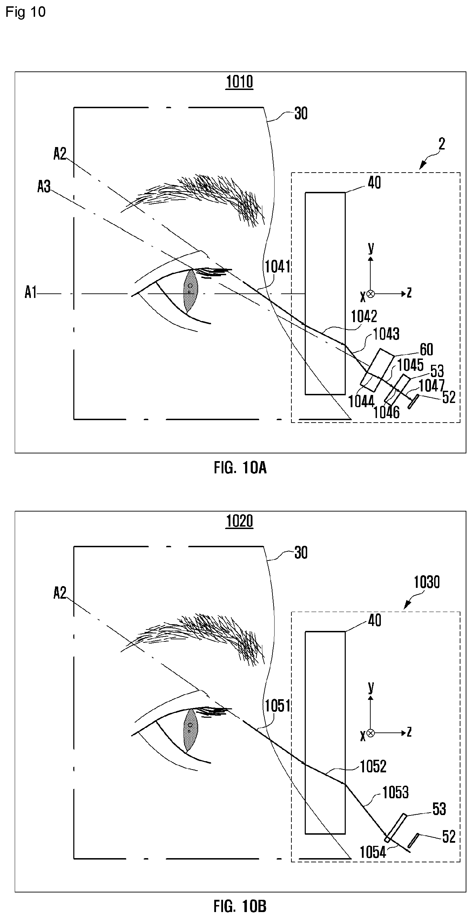

FIG. 10 is a diagram 1010 illustrating a portion of the head-mounted electronic device 2 that includes the third lens unit 60 worn on the user's head 30 according to various embodiments of the present disclosure, and a diagram 1020 illustrating a portion of the head-mounted electronic device 2 in which the third lens unit 60 worn on the user's head 30 is omitted.

According to various embodiments, in the head-mounted electronic device 2 including the third lens unit 60, a light ray representing a path along which the light reflected from the user's face passes (or proceeds) may include a first path 1041, a second path 1042, a third path 1043, a fourth path 1044, a fifth path 1045, a sixth path 1046, and a seventh path 1047. The first path 1041 is a path along which the light reflected from the user's face is incident on the first lens unit 40. The second path 1042 is a path along which the light incident on the first lens unit 40 passes through the first lens unit 40. The third path 1043 is a path along which the light incident on the first lens unit 40 passes through the first lens unit 40 and then is incident on the third lens unit 60. The fourth path 1044 is a path along which the light incident on the third lens unit 60 passes through the third lens unit 60. The fifth path 1045 is a path along which the light incident on the third lens unit 60 passes through the third lens unit 60 and then is incident on the second lens unit 53. The sixth path 1046 is a path along which the light incident on the second lens unit 53 passes through the second lens unit 53. The seventh path 1047 is a path through which the light incident on the second lens unit 53 passes through the second lens unit 53 and then is incident on the image sensor 52. An angle between the first path 1041 and the second path 1042, an angle between the second path 1042 and the third path 1043, an angle between the third path 1043 and the fourth path 1044, an angle between the fourth path 1044 and the fifth path 1045, an angle between the fifth path 1045 and the sixth path 1046, and an angle between the sixth path 1046 and the seventh path 1047 may be formed due to the difference in refractive index between the media. In various embodiments, the third lens unit 60 corrects (also referred to as the reverse compensation) the light that passes through the first lens unit 40 and then is incident on the second lens unit 53 at a distorted angle, so the second lens unit 53 may focus the light onto the image sensor 52 so that the image sensor 52 may generate the image data with no degradation in resolution. The third lens unit 60 may correct the light that passes through the first lens unit 40 and then is incident on the second lens unit 53 at a distorted angle, thereby enabling the image sensor 52 to generate the image data with secured resolution. When the first path 1041 coincides with the second optical axis A2, for example, the third lens unit 60 may be configured to form the fifth path 1045 coinciding with the second optical axis A2. The second lens unit 53 is implemented to have the performance capable of focusing light onto the image sensor 52 so that the image sensor 52 may generate the image data with no degradation in resolution under the condition in which there is no other medium (e.g., the first lens unit 40) other than the air gap between the user's face and the second lens unit 53. Since the light that passes through the first lens unit 40 and then is incident on the second lens unit 53 at a distorted angle does not match the performance of the second lens unit 53, the resolution of the image data generated by the image sensor 52 may be degraded compared to the condition in which there is no first lens unit 40. The third lens unit 60 corrects the angle at which the light passes through the first lens unit 40 and then is incident on the second lens unit 53 so that the light substantially corresponds to the light incident on the second lens unit 53 under the condition in which there is no first lens unit 40, so the image sensor 52 may generate the image data having resolution that matches the performance of the second lens unit 53.

According to various embodiments, in the head-mounted electronic device 1030 omitting the third lens unit 60, a light ray representing a path along which the light reflected from the user's face passes (or proceeds) may include a first path 1051, a second path 1052, a third path 1053, and a fourth path 1054. The first path 1051 is a path along which the light reflected from the user's face is incident on the first lens unit 40. The second path 1052 is a path along which the light incident on the first lens unit 40 passes through the first lens unit 40. The third path 1053 is a path along which the light incident on the first lens unit 40 passes through the first lens unit 40 and then is incident on the second lens unit 53. The fourth path 1054 is a path along which the light incident on the second lens unit 53 passes through the second lens unit 53. When the third lens unit 60 is omitted, the light passes through the first lens unit 40 and then is incident on the second lens unit 53 at a distorted angle, so the second lens unit 53 may have difficulty focusing the light onto the image sensor 52.

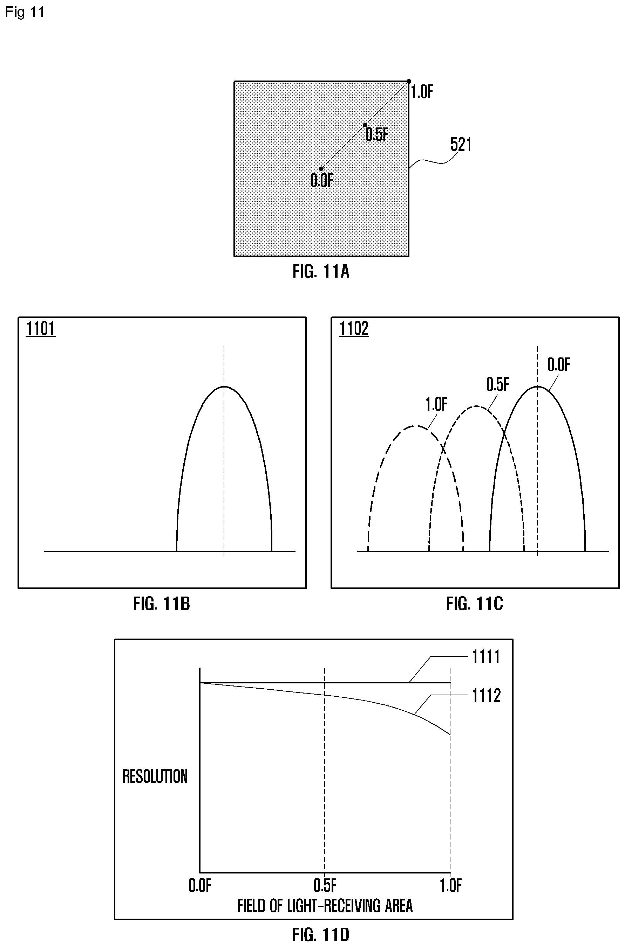

FIG. 11 is a graph 1101 showing a field-by-field peak of the light-receiving area 521 in the head-mounted electronic device 2 according to the present disclosure, a graph 1102 showing a field-by-field peak of the light-receiving area 521 in the head-mounted electronic device of the comparative example in which the third lens unit 60 is omitted, a graph 1111 showing the resolution of the camera 50 in the head-mounted electronic device 2 according to the present disclosure, and a graph 1112 showing the resolution of a camera 50 in the head-mounted electronic device of the comparative example.

Referring to FIG. 11, in the head-mounted electronic device of the comparative example, the first lens unit 40 (see FIG. 7) and the second lens unit 53 (see FIG. 7) may have difficulty in having the performance to focus the second light reflected from the designated area 1000 of the user's face (see FIG. 8) onto the light-receiving area 521. In the head-mounted electronic device of the comparative example, positions (peak points) at which the second light reflected from the designated area 1000 of the user's face (see FIG. 8) is focused onto some (e.g., fields (0.5F and 1.0F) around a central field (0.0F)) of the fields of the light-receiving area 521 are distributed in front of or behind the light-receiving area 521, so the resolution of the image data generated in the light-receiving area 521 of the camera 50 may be degraded.

In the head-mounted electronic device 2 according to the present disclosure, the first lens unit 40 (see FIG. 7), the third lens unit 60 (see FIG. 7), and the second lens unit 53 (see FIG. 7) may have the performance capable of focusing second light reflected from the designated area 1000 of the user's face (see FIG. 8) onto the light-receiving area 521. In the head-mounted electronic device of the present disclosure, the position (peak points) at which the second light reflected from the designated area 1000 of the user's face (see FIG. 8) are focused onto fields (e.g., 0.0F, 0.5F, and 1.0F) of the light-receiving area 521 are distributed in the light-receiving area 521, so the resolution of the image data generated from the light-receiving area 521 of the camera 50 may be improved compared to the head-mounted electronic device of the comparative example.

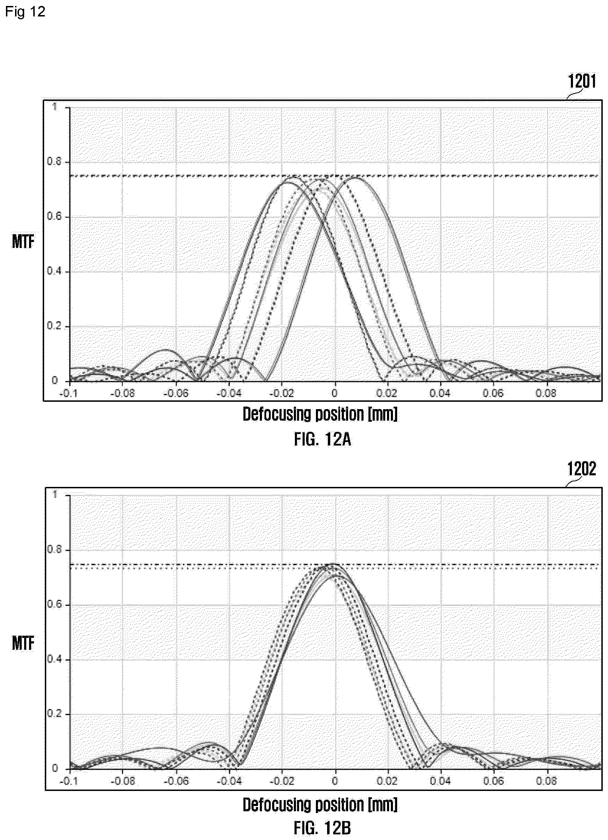

FIG. 12 is a first graph 1201 showing the resolution of the light-receiving area 521 (see FIG. 7) in the head-mounted electronic device of the comparative example in which the third lens unit 60 is omitted, and a second graph 1202 showing the resolution of the light-receiving area 521 in the head-mounted electronic device 2 according to the present disclosure.

Referring to FIG. 12, in the first graph 1201 and the second graph 1202, a vertical axis indicates the modulation transfer function (MTF), and a horizontal axis indicates a defocusing position. The curved lines of the graph indicate each field of the light-receiving area 521. Each field is defined by the x-coordinate value and the y-coordinate value of the light-receiving area 521 (see FIG. 8) with respect to a position of an object (e.g., the designated area 1000 of the user's face in FIG. 8). When the curved line of the graph is a solid line, it indicates a vertical resolution (tan), and when the curved line of the graph is a dotted line, it indicates a horizontal resolution (sag). In describing FIG. 12, reference is made to FIGS. 7 and 8.

Referring to the first graph 1201, in the head-mounted electronic device of the comparative example in which the third lens unit 60 is omitted, field-specific focusing positions (peak points) of the light-receiving area 521 of the camera 50 may be distributed in front of or behind the light-receiving area 521, or in front of and behind the light-receiving area 521. In the head-mounted electronic device of the comparative example, due to the field curvature caused by the physical characteristics (e.g., curved shape) of the first lens unit 40, a phenomenon may occur in which at least some of the second light reflected from the designated area 1000 of the user's face is not focused on the light-receiving area 521 of the camera 50.

Referring to the second graph 1202, compared to the head-mounted electronic device of the comparative example, the head-mounted electronic device 2 of the present disclosure may reduce field-specific field curvatures of the light-receiving area 521 by the third lens unit 60. In the head-mounted electronic device 2 of the present disclosure, the third lens unit 60 may reduce the field-specific focusing positions (peak points) of the light-receiving area 521 distributed in front of and behind the light-receiving area 521 and position the field-specific focusing positions (peak points) in the light-receiving area 521. In the head-mounted electronic device 2 of the present disclosure, the third lens unit 60 corrects (also referred to as the reverse compensation) at least a portion of the second light reflected from the designated area 1000 of the user's face that passes through the first lens unit 40 and then is incident on the second lens unit 53 at a distorted angle, thereby allowing the second lens unit 53 to focus the second light on the light-receiving area 521 of the image sensor 52 so that the image sensor 52 may generate the image data with no degradation in resolution.

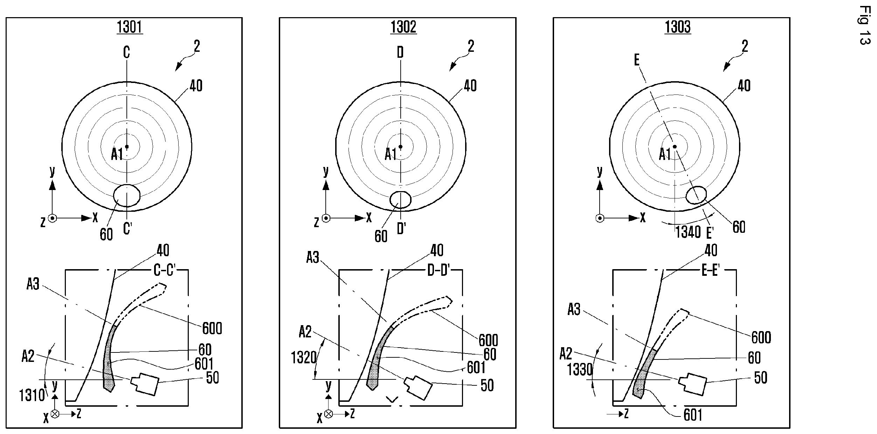

FIG. 13 is a diagram illustrating a portion of the head-mounted electronic device 2 according to various embodiments of the present disclosure, in which the first example 1301 illustrates a cross-sectional view of a portion of the head-mounted electronic device 2 taken along line C-C', the second example 1302 illustrates a cross-sectional view of a portion of the head-mounted electronic device 2 taken along line D-D', and the third example 1303 illustrates a cross-sectional view of a portion of the head-mounted electronic device 2 taken along line E-E'.

Referring to FIG. 13, the head-mounted electronic device 2 may include the first lens unit 40, the camera 50, and the third lens unit 60.

According to various embodiments, in the first example 1301 and the second example 1302, when viewed in a direction parallel to the z-coordinate axis (e.g., the direction parallel to the first optical axis A1 of the first lens unit 40), the third lens unit 60 may overlap the first lens unit 40. In the first example 1301 and the second example 1302, when viewed in the direction parallel to the z-coordinate axis, the third lens unit 60 may overlap the y-coordinate axis. In the first example 1301 and the second example 1302, the third lens unit 60 may be located between the first lens unit 40 and the camera 50. In the first example 1301 and the second example 1302, when viewed in the direction parallel to the z-coordinate axis, the camera 50 may be located on the y-coordinate axis. The first example 1301 and the second example 1302 are examples in which the angles of the camera 50 with respect to the first optical axis A1 of the first lens unit 40 are different. For example, in the first example 1301, when viewed in the direction parallel to the x-coordinate axis, the first angle 1310 between the first optical axis A1 of the first lens unit 40 and the second optical axis A2 of the camera 50 may be about 15°. In the first example 1301, when viewed in the direction parallel to the x-coordinate axis, the second optical axis A2 of the camera 50 may be tilted at an angle of about 15° with respect to the first optical axis A1 of the first lens unit 40. For example, in the second example 1302, when viewed in the direction parallel to the x-coordinate axis, the second angle 1320 between the first optical axis A1 of the first lens unit 40 and the second optical axis A2 of the camera 50 may be about 25°. In the second example 1302, when viewed in the direction parallel to the x-coordinate axis, the second optical axis A2 of the camera 50 may be tilted at an angle of about 25° with respect to the first optical axis A1 of the first lens unit 40. Since the optical characteristics between the first lens unit 40 and the camera 50 vary depending on the angle of the camera 50 with respect to the first lens unit 40, the angle at which the third lens unit 60 is disposed between the first lens unit 40 and the second lens unit 53 of the camera 50 may also vary.

According to various embodiments, in the third example 1303, when viewed in the direction parallel to the z-coordinate axis (e.g., the direction parallel to the first optical axis A1 of the first lens unit 40), the third lens unit 60 may overlap the first lens unit 40 and may be located between the x-coordinate axis and the y-coordinate axis. In the third example 1303, the third lens unit 60 may be located between the first lens unit 40 and the camera 50. In the third example 1303, when viewed in the direction parallel to the z-coordinate axis, the camera 50 may be located between the x-coordinate axis and the y-coordinate axis. For example, in the third example 1303, when viewed in the direction parallel to the x-coordinate axis, the third angle 1330 between the first optical axis A1 of the first lens unit 40 and the second optical axis A2 of the camera 50 may be about 15°. In the third example 1303, when viewed in the direction parallel to the x-coordinate axis, the second optical axis A2 of the camera 50 may be tilted at an angle of about 15° with respect to the first optical axis A1 of the first lens unit 40. For example, in the third example 1303, when viewed in the direction parallel to the z-coordinate axis, the fourth angle 1340 between the first optical axis A1 of the first lens unit 40 and the second optical axis A2 of the camera 50 may be about 15°. In the third example 1303, when viewed in the direction parallel to the z-coordinate axis, the second optical axis A2 of the camera 50 may be tilted at an angle of about 15° with respect to the first optical axis A1 of the first lens unit 40. In the third example 1303, since the relative position of the camera 50 with respect to the designated area 1000 of the user's face (see FIG. 8) is different compared to the first example 1301, the third lens unit 60 may be formed (or provided) in a different form from that of the third lens unit 60 of the first example 1301 so as to reduce the degradation in resolution of the image data generated from the camera 50 between the first lens unit 40 and the camera 50.

According to various embodiments, in the first example 1301, the second example 1302, and/or the third example 1303, the third lens unit 60 is the fourth lens element 601 having negative refractive power, and may be implemented as a portion between the third optical axis A3 of the circular lens 600 and the border area of the circular lens 600.

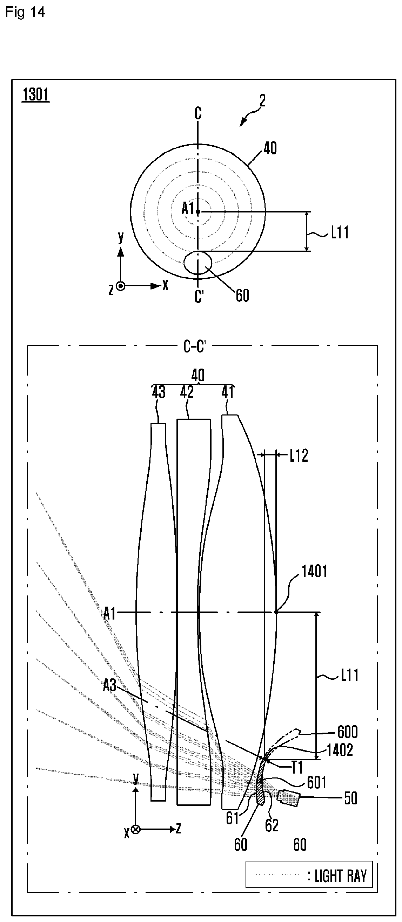

FIG. 14 is a diagram illustrating a portion of the head-mounted electronic device 2 of the first example 1301 according to various embodiments of the present disclosure, and a cross-sectional view of a portion of the head-mounted electronic device 2 taken along the line C-C'.

Referring to FIG. 14, the head-mounted electronic device 2 may include the first lens unit 40, the camera 50, and the third lens unit 60.

According to various embodiments, the third lens unit 60 may include the first surface 61 and the second surface 62. The first surface 61 of the third lens unit 60 may face the first lens unit 40, and the second surface 62 of the third lens unit 60 may face the camera 50. The third lens unit 60 is the fourth lens element 601 having negative refractive power, and may be implemented as a portion between the third optical axis A3 of the circular lens 600 and the border area of the circular lens 600.

According to various embodiments, the curved surface of the first lens element 41 of the first lens unit 40 facing the display 22 (see FIG. 7) may have a first center point 1401 located at the first optical axis A1. The third lens unit 60 may have a second center point 1402 located at the middle of the thickness of the third lens unit 60 corresponding to the third optical axis A3. A first distance L11 at which a second center point 1402 of the third lens unit 60 is spaced apart from the first center point 1401 of the first lens element 41 in the direction parallel to the y-coordinate axis may be about 14.6555 mm. A second distance L12 at which the second center point 1402 of the third lens unit 60 is spaced apart from the first center point 1401 of the first lens element 41 in the direction parallel to the z-coordinate axis may be about 3.523 mm. In the direction parallel to the z-coordinate axis, a distance at which the first center point 1401 of the first lens element 41 is spaced apart from the display 22 (see FIG. 7) may be smaller than a distance at which the second center point 1402 of the third lens unit 60 is spaced apart from the display 22.

According to various embodiments, an effective focal length (EFL) of the third lens unit 60 may be about -24.1232. The X radius of the first surface 61 included in the third lens unit 60 may be about 4.4443. The X radius of the second surface 62 included in the third lens unit 60 may be about 3.2603. A thickness T1 of the third lens unit 60 may be about 0.35 mm corresponding to the third optical axis A3. The Abbe's number of the third lens unit 60 may be about 30.19. A refractive index of the third lens unit 60 may be about 1.56816. The first surface 61 may have a convex shape. The second surface 62 may have a concave shape.

According to various embodiments, in the first example 1301, the third lens unit 60 may be implemented as the fourth lens element 601 having negative refractive power having shape values disclosed in Table 1.

**[Table 1]**

| Division | | First Surface 61 | Second Surface 62 |
|---|---|---|---|
| X Radius | | 4.444332 | 3.260322 |
| Conic Constant(K) | | -0.61788 | -1.29571 |
| Aspheric Coefficient | 4^{th} order coefficient (A) | -0.00343 | -0.00081 |
| | 6^{th} order coefficient (B) | 0.000149 | -1.86E-05 |
| | 8^{th} order coefficient (C) | -9.02E-06 | 4.98E-07 |
| | 10^{th} order coefficient (D) | 2.88E-07 | 9.57E-08 |

In relation to Table 1, Mathematical Expression 1 may be applied to determine values for the shapes of the first surface 61 and the second surface 62 of the third lens unit 60. [Mathematical Expression 1] $z = \frac{c ′ {y}^{2}}{1 + \sqrt{1 - \left(K+1\right) c {′}^{2} {y}^{2}}} + {Ay}^{4} + {By}^{6} + {Cy}^{8} + {Dy}^{10}$

In Mathematical Expression 1, z denotes a sag value for the radius of curvature of the surface (e.g., the first surface 61 or the second surface 62). In Mathematical Expression 1, c' denotes the reciprocal of the radius of curvature at the vertex of the third lens unit 60. In Mathematical Expression 1, y denotes a distance in the direction perpendicular to the third optical axis A3. In Mathematical Expression 1, K denotes a conic constant. In Mathematical Expression 1, A, B, C, and D denote the aspheric coefficients.

According to various embodiments, in the first example 1301, the third lens unit 60 may be formed of a Panlite^{®} L-1225L material, but is not limited thereto.

According to various embodiments, referring to the light ray representing the path along which the light reflected from the user's face passes (or proceeds), the third lens unit 60 corrects (also referred to as the reverse compensation) at least a portion of the light reflected from the user's face that passes through the first lens unit 40 and then is incident on the second lens unit 53 at a distorted angle, thereby allowing the second lens unit 53 to focus the light onto the image sensor 52 (see FIG. 8) so that the image sensor 52 may generate the image data with no degradation in resolution.

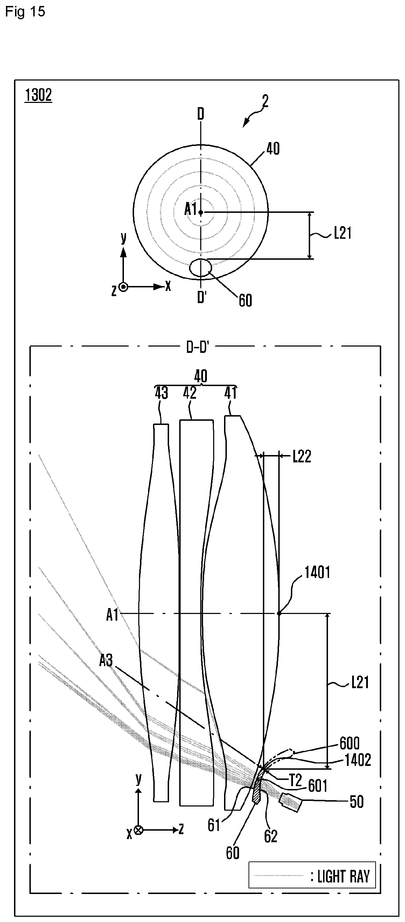

FIG. 15 is a diagram illustrating a portion of a head-mounted electronic device 2 of the second example 1302 according to various embodiments of the present disclosure, and a cross-sectional view of a portion of the head-mounted electronic device 2 taken along line D-D'.

Referring to FIG. 15, the head-mounted electronic device 2 may include the first lens unit 40, the camera 50, and the third lens unit 60.

According to various embodiments, the third lens unit 60 may include the first surface 61 and the second surface 62. The first surface 61 of the third lens unit 60 may face the first lens unit 40, and the second surface 62 of the third lens unit 60 may face the camera 50. The third lens unit 60 is the fourth lens element 601 having negative refractive power, and may be implemented as a portion between the third optical axis A3 of the circular lens 600 and the border area of the circular lens 600.

According to various embodiments, the curved surface of the first lens element 41 of the first lens unit 40 facing the display 22 (see FIG. 7) may have the first center point 1401 located at the first optical axis A1. The third lens unit 60 may have the second center point 1402 located at the middle of the thickness of the third lens unit 60 corresponding to the third optical axis A3. A first distance L21 at which a second center point 1402 of the third lens unit 60 is spaced apart from the first center point 1401 of the first lens element 41 in the direction parallel to the y-coordinate axis may be about 15.4995 mm. A second distance L22 at which the second center point 1402 of the third lens unit 60 is spaced apart from the first center point 1401 of the first lens element 41 in the direction parallel to the z-coordinate axis may be about 4.3946 mm. In the direction parallel to the z-coordinate axis, the distance at which the first center point 1401 of the first lens element 41 is spaced apart from the display 22 (see FIG. 5) may be smaller than the distance at which the second center point 1402 of the third lens unit 60 is spaced apart from the display 22.

According to various embodiments, the EFL of the third lens unit 60 may be about -14.1243. The X radius of the first surface 61 included in the third lens unit 60 may be about 4.0503. The X radius of the second surface 62 included in the third lens unit 60 may be about 2.5986. A thickness T2 of the third lens unit 60 may be about 0.387 mm corresponding to the third optical axis A3. The Abbe's number of the third lens unit 60 may be about 30.19. The refractive index of the third lens unit 60 may be about 1.56816. The first surface 61 may have a convex shape. The second surface 62 may have a concave shape.

According to various embodiments, in the second example 1302, the third lens unit 60 may be implemented as the fourth lens element 601 having negative refractive power having shape values disclosed in Table 2. In relation to Table 2, the above-described Mathematical Expression 1 may be applied to determine values for the shapes of the first surface 61 and the second surface 62 of the third lens unit 60.

**[Table 2]**

| Division | | First Surface 61 | Second Surface 62 |
|---|---|---|---|
| X Radius | | 4.0503 | 2.5986 |
| Conic Constant(K) | | -0.5329 | -1.3431 |
| Aspheric Coefficient | 4^{th} order coefficient (A) | -0.0034 | 1.8209E-05 |
| | 6^{th} order coefficient (B) | 0.0001 | 0.0001 |
| | 8^{th} order coefficient (C) | -9.2031E-06 | 7.9489E-06 |
| | 10^{th} order coefficient (D) | 3.9195E-07 | -2.1939E-06 |

According to various embodiments, in the second example 1302, the third lens unit 60 may be formed of a Panlite^{®} L-1225L material, but is not limited thereto.

According to various embodiments, referring to a light ray representing a path along which the light reflected from the user's face passes (or proceeds), the third lens unit 60 corrects (also referred to as the reverse compensation) at least a portion of the light reflected from the user's face that passes through the first lens unit 40 and then is incident on the second lens unit 53 at a distorted angle, thereby allowing the second lens unit 53 to focus the light onto the image sensor 52 (see FIG. 8) so that the image sensor 52 may generate the image data with no degradation in resolution.

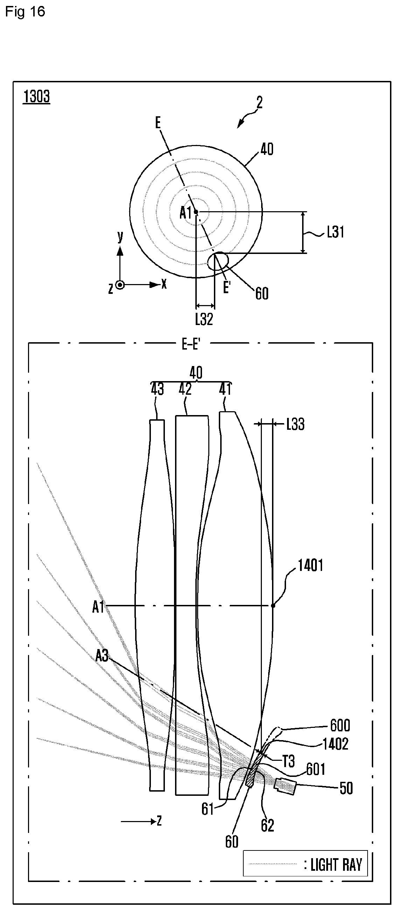

FIG. 16 is a diagram illustrating a portion of a head-mounted electronic device 2 of the third example 1303 according to various embodiments of the present disclosure, and a cross-sectional view of a portion of the head-mounted electronic device 2 taken along line E-E'.

Referring to FIG. 16, the head-mounted electronic device 2 may include the first lens unit 40, the camera 50, and the third lens unit 60.

According to various embodiments, the third lens unit 60 may include the first surface 61 and the second surface 62. The first surface 61 of the third lens unit 60 may face the first lens unit 40, and the second surface 62 of the third lens unit 60 may face the camera 50. The third lens unit 60 is the fourth lens element 601 having negative refractive power, and may be implemented as a portion between the third optical axis A3 of the circular lens 600 and the border area of the circular lens 600.

According to various embodiments, the curved surface of the first lens element 41 of the first lens unit 40 facing the display 22 (see FIG. 7) may have the first center point 1401 located at the first optical axis A1. The third lens unit 60 may have the second center point 1402 located at the middle of the thickness of the third lens unit 60 corresponding to the third optical axis A3. A first distance L31 at which a second center point 1402 of the third lens unit 60 is spaced apart from the first center point 1401 of the first lens element 41 in the direction parallel to the y-coordinate axis may be about 15.6196 mm. A second distance L32 at which a second center point 1402 of the third lens unit 60 is spaced apart from the first center point 1401 of the first lens element 41 in the direction parallel to the y-coordinate axis may be about 5.2293 mm. In the direction parallel to the z-coordinate axis, the distance at which the first center point 1401 of the first lens element 41 is spaced apart from the display 22 (see FIG. 7) may be smaller than the distance at which the second center point 1402 of the third lens unit 60 is spaced apart from the display 22. A third distance L33 at which a second center point 1402 of the third lens unit 60 is spaced apart from the first center point 1401 of the first lens element 41 in the direction parallel to the x-coordinate axis may be about 4.5529 mm.

According to various embodiments, an X EFL of the third lens unit 60 may be about -23.8727. A Y EFL of the third lens unit 60 may be about -21.7391. The X EFL may be an EFL based on the X-axis, and the Y EFL may be an EFL based on the Y-axis. The X radius of the first surface 61 included in the third lens unit 60 may be about 42.8734. The Y radius of the first surface 61 included in the third lens unit 60 may be about 72.4404. The X radius of the second surface 62 included in the third lens unit 60 may be about 10.2657. The Y radius of the second surface 62 included in the third lens unit 60 may be about 10.5291. A thickness T3 of the third lens unit 60 may be about 0.4379 mm corresponding to the third optical axis A3. The Abbe's number of the third lens unit 60 may be about 30.19. The refractive index of the third lens unit 60 may be about 1.56816. The first surface 61 may have a convex shape. The second surface 62 may have a concave shape.

According to various embodiments, in the third example, the third lens unit 60 may be implemented as the fourth lens element 601 having negative refractive power having shape values disclosed in Table 3.

**[Table 3]**

| Division | | First Surface 61 | Second Surface 62 |
|---|---|---|---|
| X Radius | | 42.87345 | 10.26573 |
| Y Radius | | 72.4404 | 10.5291 |
| Y Conic Constant (KY) | | 8.3246 | 5.5242 |
| Aspheric Coefficient | 4^{th} order coefficient (AR) | -9.66E-04 | -8.29E-04 |
| | 6^{th} order coefficient (BR) | 1.86E-04 | 8.45E-05 |
| | 8^{th} order coefficient (CR) | -8.17E-06 | -1.70E-06 |
| | 10^{th} order coefficient (DR) | 2.64E-07 | 1.82E-07 |
| X Conic Constant (KX) | | 171.691 | -0.18259 |
| Aspheric Coefficient | 4^{th} order coefficient (AP) | -0.27125 | 0.021794 |
| | 6^{th} order coefficient (BP) | 0.072004 | 0.033916 |
| | 8^{th} order coefficient (CP) | -0.04376 | 0.004629 |
| | 10^{th} order coefficient (DP) | 0.007093 | 0.23775 |

In relation to Table 3, the following Mathematical Expressions 2 and 3 may be applied to determine the values for the shapes of the first surface 61 and the second surface 62 of the third lens unit 60. [Mathematical Expression 2] $z = \frac{c ′ {y}^{2}}{1 + \sqrt{1 - \left(KY+1\right) c {′}^{2} {y}^{2}}} + {ARy}^{4} + {BRy}^{6} + {CRy}^{8} + {DRy}^{10}$

In Mathematical Expression 2, z denotes the sag value for the radius of curvature of the surface (e.g., the first surface 61 or the second surface 62). In Mathematical Expression 2, c' denotes the reciprocal of the radius of curvature at the vertex of the third lens unit 60. In Mathematical Expression 2, y denotes the distance in the direction perpendicular to the third optical axis A3. In Mathematical Expression 2, KY denotes a Y-axis reference of the Conic constant. In Mathematical Expression 2, AR, BR, CR, and DR denote aspheric coefficients. [Mathematical Expression 3] $z = \frac{c ′ {y}^{2}}{1 + \sqrt{1 - \left(KX+1\right) c {′}^{2} {y}^{2}}} + {APy}^{4} + {BPy}^{6} + {CPy}^{8} + {DPy}^{10}$

In Mathematical Expression 3, z denotes the sag value for the radius of curvature of the surface (e.g., the first surface 61 or the second surface 62). In Mathematical Expression 3, c' denotes the reciprocal of the radius of curvature at the vertex of the third lens unit 60. In Mathematical Expression 3, y denotes the distance in the direction perpendicular to the third optical axis A3. In Mathematical Expression 3, KX denotes an X-axis reference of the Conic constant. In Mathematical Expression 3, AP, BP, CP, and DP denote aspheric coefficients.

According to various embodiments, the third lens unit 60 according to an embodiment of FIG. 16 may be formed of a Panlite^{®} L-1225L material, but is not limited thereto.

According to various embodiments, referring to the light ray representing the path along which the light reflected from the user's face passes (or proceeds), the third lens unit 60 corrects (also referred to as the reverse compensation) at least a portion of the light reflected from the user's face that passes through the first lens unit 40 and then is incident on the second lens unit 53 at a distorted angle, thereby allowing the second lens unit 53 to focus the light onto the image sensor 52 (see FIG. 8) so that the image sensor 52 may generate the image data with no degradation in resolution.

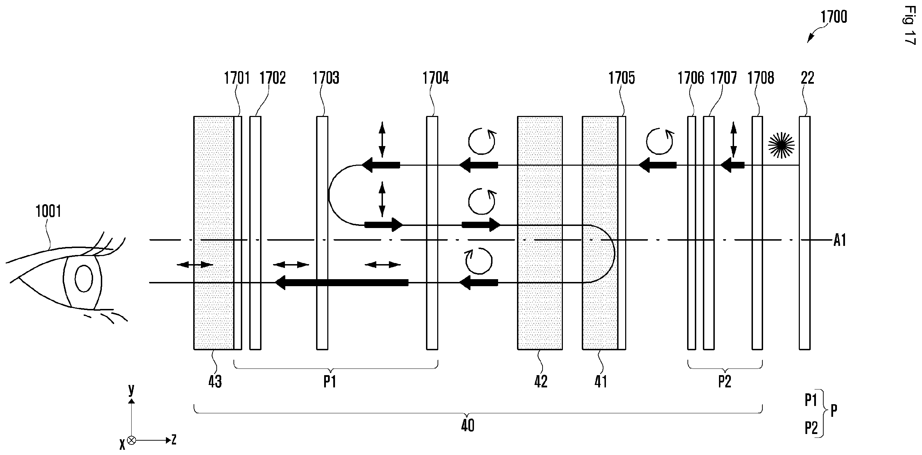

FIG. 17 illustrates an example of the path along which the light output by the display 22 is focused or guided to a user's eye 1001 in a head-mounted electronic device 1700 (e.g., the electronic device 101 of FIG. 1, the wearable electronic device 200 of FIGS. 2 and 3, or the head-mounted electronic device 2 of FIGS. 4 to 8) according to various embodiments of the present disclosure.

Referring to FIG. 17, the head-mounted electronic device 1700 according to various embodiments of the present disclosure may include the display 22 and the first lens unit 40 that is configured to refract, transmit, and/or reflect light (e.g., the second light) output from the display 22 and transmit the refracted, transmitted, and/or reflected light to the user's eye 1001. In the present disclosure, the display 22 and the first lens unit 40 may be collectively referred to as a "display device."

According to various embodiments, the first lens unit 40 may include a plurality of lens elements (e.g., at least three) (e.g., the first lens element 41, the second lens element 42, and the third lens element 43), and a polarizing assembly P including a first polarizing unit P1 and a second polarizing unit P2. In various embodiments, the first lens element 41, the second lens element 42, the third lens element 43, the first polarizing unit P1, and/or the second polarizing unit P2 may be aligned along the first optical axis A1 in the form of a straight line extending between the display 22 and the user's eye 1001. In various embodiments, the polarizing assembly P (e.g., the first polarizing unit P1 and the second polarizing unit P2) may include at least one quarter wave plate (QWP) (e.g., a first quarter wave plate 1704 and a second quarter wave plate 1707), at least one reflective polarizer (RP) 1703, at least one polarizer (POL) 1702 and 1708, and/or at least one beam splitter 1705. In various embodiments, the first lens unit 40 may further include at least one anti-reflection (AR) layer 1701 and 1706. In various embodiments, at least one of the first lens element 41, the second lens element 42, and the third lens element 43 may be movable to adjust the diopter to provide a vision correction function to a user.

According to various embodiments, the polarizing assembly P (e.g., the first polarizing unit P1 and the second polarizing unit P2) may be located between the third lens element 43 and the display 22. For example, when the polarizing assembly P is disposed farther away from the user's eye 1001 than the third lens element 43, damage to the polarizing assembly P occurring during the manufacturing or use may be reduced or prevented compared to when at least a portion of the polarizing assembly P is disposed closer to the user's eye 1001 than the third lens element 43.

According to various embodiments, at least one quarter wave plate (e.g., a first quarter wave plate 1704 and a second quarter wave plate 1707), at least one reflective polarizer 1703, and at least one beam splitter 1705 included in the polarizing assembly P (e.g., the first polarizing unit P1 and/or the second polarizing unit P2) may extend and/or adjust an optical path length between the user's eye 1001 and the display 22. For example, by implementing a focal length longer than the mechanical or physical length of the first lens unit 40, the quality of the image provided to the user may be improved. Since the head-mounted electronic device (e.g., AR/VR glasses) is limited in size or weight due to the actual use environment (e.g., used in a worn state), the resolution of the output virtual image may be limited, and it may be difficult to provide a good quality image to the user even through an optical system. In various embodiments, the head-mounted electronic device 1700 may include the optical system (e.g., the first lens unit 40) having the pancake lens structure to extend the optical path length of incident light relative to its external size, and/or to increase the image resolution provided to the user. The head-mounted electronic device 1700 may be an optical device (e.g., AR/VR glasses) that provides the visual information to the user while being worn on the user's head or face, for example, by including the display 22 and the first lens unit 40.

According to various embodiments, the display 22 may include a screen display area that exposes the visual information to a portion corresponding to both eyes of the user when the user wears the head-mounted electronic device 1700. In various embodiments, the head-mounted electronic device 1700 may include a pair of displays 22 corresponding to both eyes of the user. The display 22 may include, for example, a liquid crystal display (LCD), a light emitting diode (LED) display, an organic light emitting diode (OLED) display, or a micro-electro mechanical system (MEMS) display, or an electronic paper display. The display 22 may display, for example, various content (e.g., text, images, videos, icons, or symbols, etc.) provided as the visual information to the user.

According to various embodiments, various types of content (e.g., text, images, videos, icons, or symbols, etc.) output in the form of light from the display 22 may pass through at least one quarter wave plate (e.g., the first quarter wave plate 1704 and the second quarter wave plate 1707), at least one reflective polarizer 1703, at least one beam splitter 1705, and/or a plurality of lens elements (e.g., the first lens element 41, the second lens element 42, and the third lens element 43) and may be provided to the user's eye 1001. The order in which light passes through at least one quarter wave plate (e.g., first quarter wave plate 1704 and second quarter wave plate 1707), at least one reflective polarizer 1703, at least one beam splitter 1705, and/or a plurality of lens elements (e.g., the first lens element 41, the second lens element 42, and the third lens element 43) may be variously set according to an embodiment.

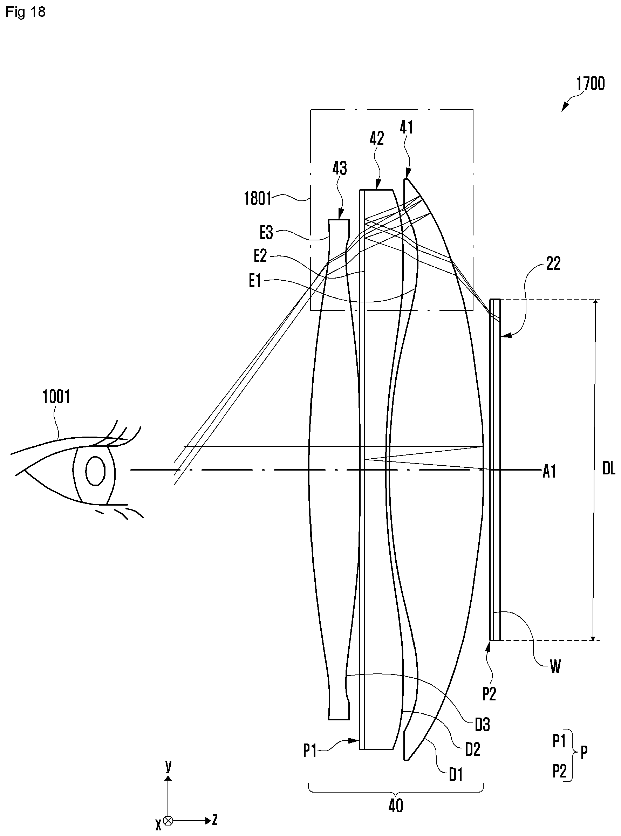

According to various embodiments, the head-mounted electronic device 1700 may further include a cover window (e.g., cover window W of FIGS. 18, 20, 23, and 25) disposed on a user's eye side surface of the display 22. In various embodiments, the light output from the display 22 may pass through the cover window W and may be transmitted to the first lens unit 40. In the present disclosure, the "disposed on XX" may refer to disposed adjacent to or substantially in contact with XX.

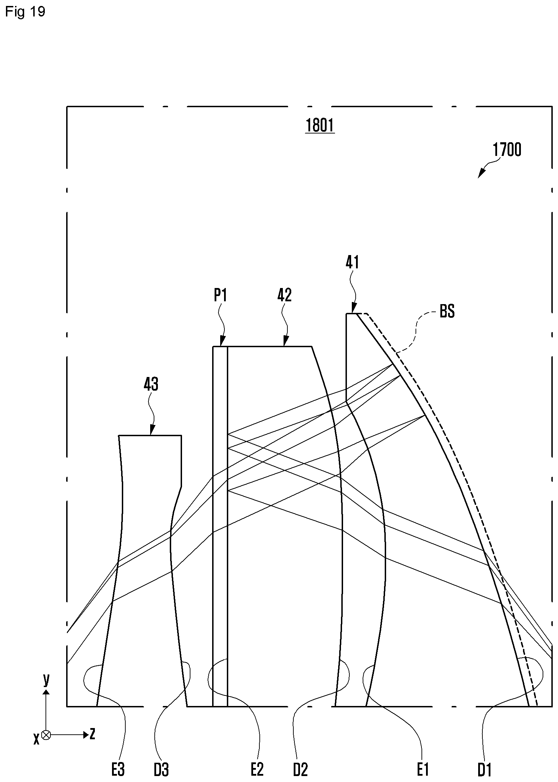

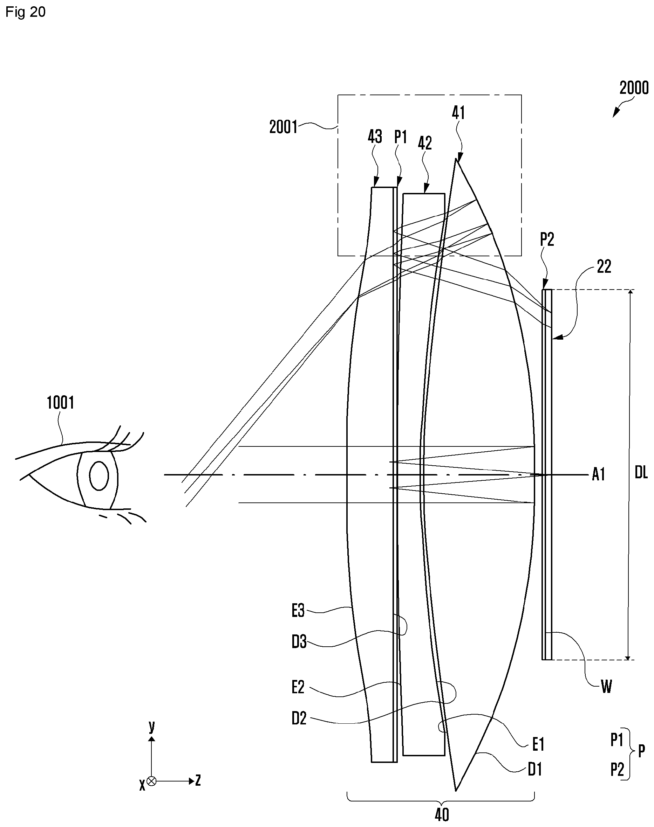

According to various embodiments, the first polarizing unit P1 may be configured to selectively transmit, reflect, and/or block the light output from the display 22 and transmitted through the remaining lens elements (e.g., the first lens element 41 and the second lens element 42) other than the third lens element 43, the beam splitter 1705, and the second polarizing unit P2, and transmit the light to the third lens element 43. In various embodiments, the first polarizing unit P1 may be disposed between the third lens element 43, which is farthest from the display 22, and the second lens element 42, which is second farthest from the display 22. In various embodiments (see, for example, FIGS. 18 and 19), the first polarizing unit P1 may be disposed on a user's eye side surface E2 of the second lens element 42. In various embodiments (see, for example, FIGS. 20 to 26), the first polarizing unit P1 may be disposed on a display side surface D3 of the third lens element 43.

According to various embodiments, the first polarizing unit P1 may include the first anti-reflection layer 1701, the first polarizer 1702, the reflective polarizer 1703, and/or the first quarter wave plate 1704. For example, the first anti-reflection layer 1701, the first polarizer 1702, the reflective polarizer 1703, and/or the first quarter wave plate 1704 may be formed in a film form. In various embodiments, the first anti-reflection layer 1701, the first polarizer 1702, the reflective polarizer 1703, and/or the first quarter wave plate 1704 of the first polarizing unit P1 may be formed by being coupled with each other or spaced apart from each other with an air layer (or air gap), another polarizing layer, and/or a dummy layer disposed therebetween. Here, the air layer, an adhesive layer, another polarizing layer, and/or the dummy layer may not substantially have refractive power. Here, for example, 'any two members of the first anti-reflection layer 1701, the first polarizer 1702, the reflective polarizer 1703, and/or the first quarter wave plate 1704 being spaced apart from each other with the adhesive layer, another polarizing layer, or a dummy layer disposed therebetween' may refer to a structure in which any two members are laminated. Here, the 'lamination' may mean that at least one of two different members is provided with an adhesive and the two different members are bonded to each other. For example, when the first anti-reflection layer 1701 and the first polarizer 1702 are laminated, the first anti-reflection layer 1701 and the first polarizer 1702 may be bonded to each other with the adhesive layer disposed therebetween. In this case, the first anti-reflection layer 1701 and the first polarizer 1702 may be laminated with another polarizing layer (and/or dummy layer) disposed therebetween, and the first anti-reflection layer 1701, another polarizing layer (and/or dummy layer), and the first polarizer 1702 may be bonded to each other by the adhesive layer. For example, the first polarizing unit P1 in the form of the laminated first anti-reflection layer 1701, first polarizer 1702, reflective polarizer 1703, and/or first quarter wave plate 1704 may be thinner and have superior optical performance than the polarizing member in the form of the simply stacked film. In various embodiments, some components of the first polarizing unit P1 (e.g., the first anti-reflection layer 1701) may be omitted.

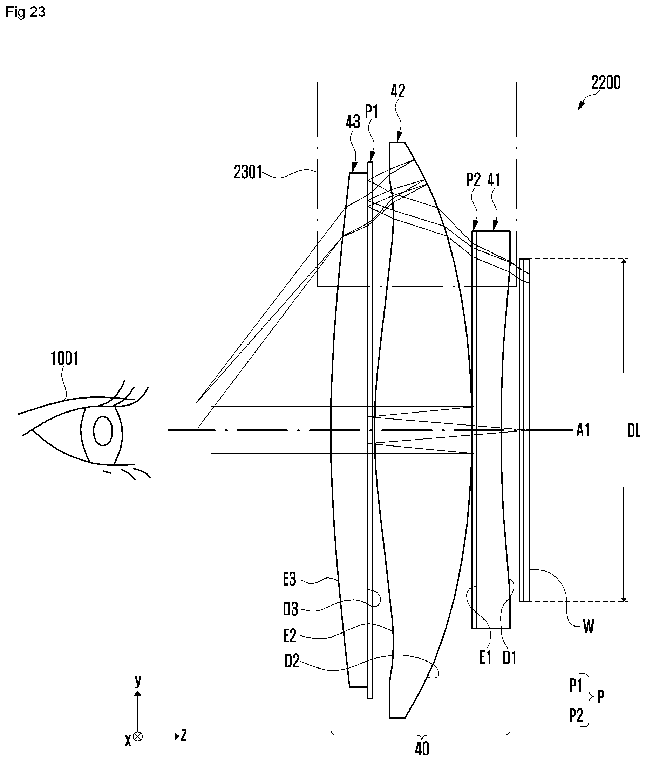

In various embodiments, the beam splitter 1705 may be configured to transmit a portion of the incident light and reflect the other portion of the incident light. For example, the beam splitter 1705 may be configured to transmit about 50% of light and reflect about 50% of light, but is not limited thereto. In various embodiments, the beam splitter 1705 may be configured as a translucent mirror, for example, in the form of a mirror coated on one surface of the second lens element 42 (e.g., a display side surface D2 of the second lens element 42 of FIGS. 23 to 26) or one surface of the first lens element 41 (e.g., a display side surface D1 of the first lens element 41 of FIGS. 18 to 21).

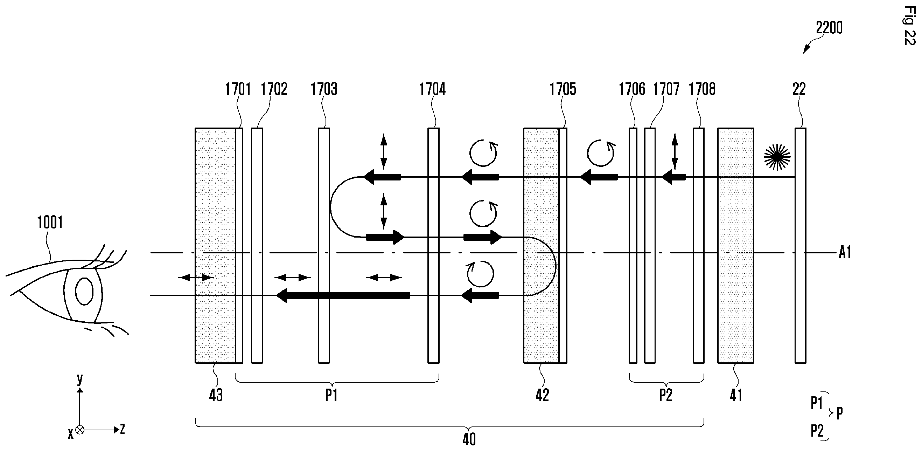

According to various embodiments (see, for example, FIGS. 17 to 21), the beam splitter 1705 (the beam splitter BS of FIGS. 17 to 21) may be disposed on one of the two surfaces of the third lens element from the user's eye 1001 of the first lens unit 40, i.e., the first lens element 41. In the present disclosure, the "disposed on XX" may refer to disposed adjacent to or substantially in contact with XX. In the present disclosure, the "two surfaces" of any lens element may refer to the user's eye 1001-side surface and the display 22-side surface of the arbitrary lens element. According to various embodiments, the beam splitter 1705 may be disposed adjacent to (or substantially in contact with) the display side surface D1 of the first lens element 41 (or may be disposed on the display side surface D1). However, in the present disclosure, the position of the beam splitter 1705 may be changed, and in various embodiments (see, for example, FIGS. 22 to 26), the beam splitter 1705 may be disposed on one (for example, the display side surface D2) of the two surfaces of a 2^{nd} lens element, i.e., the second lens element 42 from the user's eye 1001 of the first lens unit 40.

According to various embodiments, the second polarizing unit P2 may be disposed closer to the display 22 than the first polarizing unit P1, and may be configured to selectively transmit and/or block the light output from the display 22 to the beam splitter 1705, at least one lens element (e.g., the first lens element 41, the second lens element 42, and/or the third lens element 43), and the first polarizing unit P1.

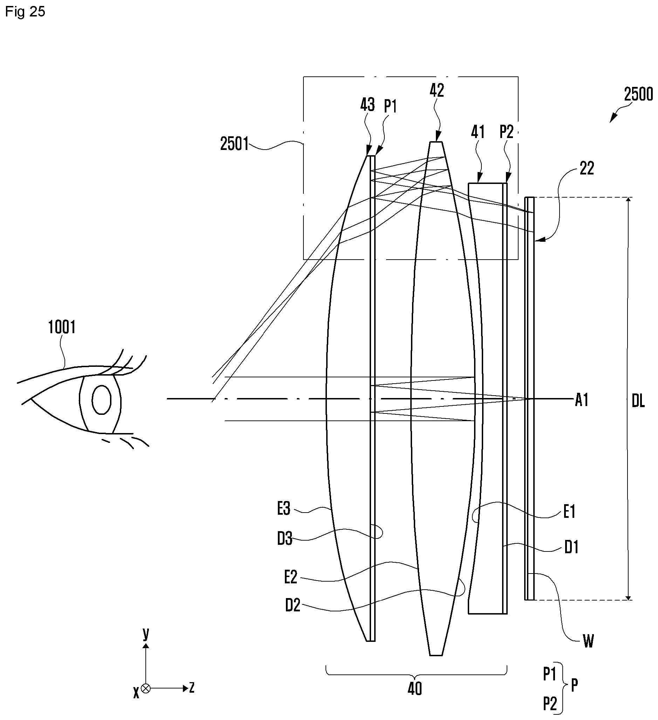

According to various embodiments (see, for example, FIGS. 17 to 21), the second polarizing unit P2 may be disposed between the first lens unit 40 (e.g., the first lens element 41) and the display 22. In various embodiments (see, for example, FIGS. 17 to 21), the second polarizing unit P2 may be disposed on the cover window W disposed on the user's eye side surface of the display 22. According to various embodiments (see, for example, FIGS. 22, 23, and 24), the second polarizing unit P2 may be disposed between the first lens element 41 closest to the display 22 and the second lens element 42 second closest to the display 22. According to various embodiments (see, for example, FIGS. 23 and 25), the second polarizing unit P2 may be disposed on the display side surface D1 of the first lens element 41 closest to the display 22 (see, for example, FIG. 25), or the user's eye side surface E1 of the first lens element 41 (see, for example, FIG. 23). According to various embodiments, the surface (e.g., the display side surface D1 or the user's eye side surface E1) of the lens element (e.g., the first lens element 41) to which the first polarizing unit P1 is attached may be implemented as a substantially flat surface.

According to various embodiments, the second polarizing unit P2 may include the second anti-reflection layer 1706, the second polarizer 1708, and/or the second quarter wave plate 1707. For example, the second anti-reflection layer 1706, the second polarizer 1708, the second quarter wave plate 1707 may be formed in the film form. In various embodiments, the second anti-reflection layer 1706, the second polarizer 1708, and/or the second quarter wave plate 1707 of the second polarizing unit P2 may be formed by being bonded to each other or by being disposed with the air layer (or air gap), another polarizing layer, and/or the dummy layer disposed therebetween. Here, the air layer, the adhesive layer, another polarizing layer, and/or the dummy layer may not substantially have refractive power. Here, for example, the "any two of the second anti-reflection layer 1706, the second polarizer 1708 and/or the second quarter wave plate 1707 are spaced apart with the adhesive layer, another polarizing layer or the dummy layer provided therebetween" may refer to the structure in which the two members are laminated. Here, according to various embodiments, the term "lamination" may mean that at least one of the two different members is provided with an adhesive and the two different members are bonded to each other. For example, when the second anti-reflection layer 1706 and the second polarizer 1708 are laminated, the second anti-reflection layer 1706 and the second polarizer 1708 may be bonded to each other with the adhesive layer disposed therebetween. In this case, the second anti-reflection layer 1706 and the second polarizer 1708 may be laminated with another polarizing layer (and/or dummy layer) disposed therebetween, and the second anti-reflection layer 1706, another polarizing layer (and/or dummy layer), and the second polarizer 1708 may be staked with each other and bonded to each other by the adhesive layer. For example, the second polarizing unit P2 in the form in which the second anti-reflection layer 1706, the second polarizer 1708, and/or the second quarter wave plate 1707 are laminated may be thinner and have superior optical performance than the polarizing member in the form of the simply stacked film. In various embodiments, some components of the second polarizing unit P2 (e.g., the second anti-reflection layer 1706) may be omitted.

In the illustrated embodiments, the third lens element 43 of the head-mounted electronic device 1700 or the first lens unit 40 may be understood as a lens element disposed farthest from the display 22 among the plurality of lens elements (e.g., at least three), or a lens element disposed closest to the user's eye 1001. However, it should be noted that the embodiment(s) of the present disclosure are not limited thereto. For example, the head-mounted electronic device 1700 or the first lens unit 40 may further include a transmissive optical member disposed farther from the display 22 than the third lens element 43. In various embodiments, the transmissive optical member may have refractive power that does not affect the optical performance of the head-mounted electronic devices 1700, 2000, 2200, and 2500 of FIGS. 17, 18, 20, 22, 23, and 25 and/or the first lens unit 40 of FIGS. 17, 18, 20, 22, 23, and 25. In various embodiments, the transmissive optical member disposed farther from the display 22 than the third lens element 43 may have a transmittance of about 90% or greater for visible light, but is not limited thereto. In various embodiments, the transmissive optical member may have a transmittance of substantially close to 100% for visible light.

According to various embodiments, a liquid crystal display, an organic light emitting diode display, and/or a micro LED may provide a good quality image by including a polarizing plate. In various embodiments, when the first lens unit 40 further includes the first polarizing unit P1, the image quality perceived by the user may be improved even if the display 22 outputs the image of the same quality. In various embodiments, when the first lens unit 40 is implemented to include the first polarizing unit P1 and/or the second polarizing unit P2, some of the polarizing plates may be omitted in the display 22 implemented as an organic light emitting diode display or a micro LED.

In the following description, the direction from the user's eye 1001 toward the display 22 may be referred to as a first direction, and the direction from the display 22 toward the user's eye 1001 opposite to the first direction may be referred to as a second direction. The first direction and the second direction may be substantially parallel to the first optical axis A1. The first lens unit 40 may include a plurality of lens elements (e.g., the first lens element 41, the second lens element 42, and the third lens element 43) arranged sequentially along the second direction.

According to various embodiments, the disposition of the first polarizing unit P1 and the second polarizing unit P2 of the polarizing assembly P described above, and/or the beam splitter 1705 may provide a good quality image while miniaturizing an optical system implemented with a limited number (e.g., at least 3) of lens elements (e.g., the first lens element 41, the second lens element 42, and/or the third lens element 43). In various embodiments, a polarizing axis of the first polarizer 1702 of the first polarizing unit P1 and a polarizing axis of the second polarizer 1708 of the second polarizing unit P2 may form an angle of substantially 90°. A fast axis of the first quarter wave plate 1704 of the first polarizing unit P1 and the fast axis of the second quarter wave plate 1707 of the second polarizing unit P2 may form an angle of substantially 90°. In the following description, the anti-reflection layer 1701 and 1706 may not be described.

Referring to FIG. 17, according to various embodiments, the head-mounted electronic device 1700 may operate as follows. The light output from the display 22 may pass through at least three lens elements (e.g., the first lens element 41, the second lens element 42, and the third lens element 43) of the first lens unit 40, the second polarizing unit P2, the beam splitter BS, and the first polarizing unit P1, and then reach the user's eye 1001. In this case, the second polarizer 1708 of the second polarizing unit P2 may transmit first linear polarization, for example, vertical polarization (or p polarization), and may not transmit second linear polarization, for example, horizontal polarization (or s polarization). For example, only vertical polarization (or p polarization) among the light reaching the second polarizer 1708 may be transmitted. The light transmitted through the second polarizer 1708 is converted into circular polarization (right-handed circular polarization or left-handed circular polarization) by the second quarter wave plate 1707, and the circular polarization may sequentially pass through the beam splitter 1705, the first lens element 41, and the second lens element 42, and then reach the first quarter wave plate 1704. The circular polarization reaching the first quarter wave plate 1704 may be converted back into linear polarization (e.g., vertical polarization (or p polarization)) while passing through the first quarter wave plate 1704 and may reach the reflective polarizer 1703. Light may move in the second direction (the direction from the display 22 toward the user's eye 1001) until the light reaches the reflective polarizer 1703. The light reaching the reflective polarizer 1703 may be reflected by the reflective polarizer 1703 and directed in the first direction (the direction from the user's eye 1001 toward the display 22), and may be converted back into the circular polarization (right-handed circular polarization or left-handed circular polarization) while transmitting the first quarter wave plate 1704 again. This circular polarization (the right-handed circular polarization or the left-handed circular polarization) is reflected by the beam splitter 1705 and is directed back to the second direction. In this case, the phase may be converted (e.g., when the circular polarization is left-handed circular polarization, the left-handed circular polarization may be converted into right-handed polarization, and when the circular polarization is right-handed circular polarization, the right-handed circular polarization may be converted into left-handed polarization). The circular polarization whose phase has been converted may pass through the first quarter wave plate 1704 and the reflective polarizer 1703 along the second direction and reach the user's eye 1001. In this case, the light passing through the first quarter wave plate 1704 may be converted into the horizontal polarization (or s polarization) and reach the user's eye 1001. However, it should be noted that the embodiment of FIG. 17 is merely an example of the change in the state of light passing through the head-mounted electronic device 1700 according to various embodiments, and that the conversion of polarization components by the reflective polarizer 1703, the first quarter wave plate 1704, the second quarter wave plate 1707, the beam splitter 1705, and/or the second polarizer 1708 may be different from the above-described embodiment.

FIG. 18 is a diagram illustrating the head-mounted electronic device 1700 (e.g., the electronic device 101 of FIG. 1, the wearable electronic device 200 of FIGS. 2 and 3, or the head-mounted electronic device 2 of FIGS. 4 to 8) according to various embodiments of the present disclosure. FIG. 19 is an enlarged view of part 1801 of FIG. 18 according to various embodiments of the present disclosure.

The first lens unit 40 and the display 22 of FIG. 18 may be referred to as the first lens unit 40 and the display 22 of FIG. 17, and contents overlapping with the description given above with reference to FIG. 17 may be omitted below.

Referring to FIGS. 18 and 19, the head-mounted electronic device 1700 may include the display 22 and the first lens unit 40, and the visual information output from the display 22 may be focused or guided by the first lens unit 40 and provided to the user's eye 1001. The first lens unit 40 may include a plurality of lens elements, for example, at least three lens elements (e.g., the first lens element 41, the second lens element 42, and the third lens element 43) arranged sequentially along the direction parallel to the first optical axis A1. For convenience of description, or as described above, the plurality of lens elements (e.g., the first lens element 41, the second lens element 42, and the third lens element 43) may be described separately by being indicated with an ordinal number such as 'first' or 'second' according to the order in which they are arranged in the direction from the display 22 toward the user's eye 1001, or from the user's eye 1001 toward the display 22. In the reference numerals of the drawings, 'En' may indicate a user's eye side surface of an nth lens element, and 'Dn' may indicate a display side surface of the nth lens element.

According to various embodiments, the first lens unit 40 of the head-mounted electronic device 1700 may include the first polarizing unit P1, the beam splitter 1705, and the second polarizing unit P2, which are arranged sequentially from the user's eye 1001 side toward the display 22 side. In various embodiments, the first polarizing unit P1 of the polarizing assembly P (e.g., the first polarizing unit P1 of FIG. 17) may be disposed on, for example, the user's eye side surface E2 of the second lens element 42. The second polarizing unit P2 (e.g., the second polarizing unit P2 of FIG. 17) of the polarizing assembly P may be disposed on the cover window W. Referring to FIG. 19, the beam splitter BS (e.g., the beam splitter 1705 of FIG. 17) may be disposed between the first polarizing unit P1 and the second polarizing unit P2, for example, on the display side surface D1 of the first lens element 41. In various embodiments, when the first polarizing unit P1 is substantially attached to a surface of one of the plurality of lens elements (e.g., the first lens element 41, the second lens element 42, and the third lens element 43), the user's eye side surface of the corresponding lens element (e.g., the user's eye side surface E2 of the second lens element 42) may be a substantially flat surface.

As described with reference to FIG. 17, the light or visual information output from the display 22 may be sequentially transmitted through the second polarizing unit P2 and the beam splitter 1705, and then sequentially reflected by the first polarizing unit P1 and the beam splitter 1705. The light or visual information reflected by the beam splitter 1705 may be transmitted through the first polarizing unit P1 and provided to the user's eye 1001. For example, at least a portion of the light or visual information output from the display 22 may pass through the second polarizing unit P2 and the beam splitter 1705 and reach the first polarizing unit P1. The first polarizing unit P1 may reflect at least a portion of the incident light (e.g., the light transmitted through the second polarizing unit P2 and the beam splitter 1705), and at least a portion of the light reflected by the first polarizing unit P1 may be reflected again by the beam splitter 1705 and guided to the user's eye 1001. As a result, the visual information output from the display 22 may be reflected at least twice on the path along which the visual information reaches the user's eye 1001. In describing the path along which the light passes through one or more polarization units (e.g., the first polarization unit P1 and the second polarization unit P2) and/or beam splitter 1705, the plurality of lens elements (e.g., the first lens element 41, the second lens element 42, and the third lens element 43) are not mentioned, the visual information output from the display 22 may be focused by the plurality of lens elements on the path along which the visual information reaches the user's eye 1001.

According to various embodiments, the 'polarizing unit' may be referred to as a polarizing unit, a polarizing member, a polarizing film, a polarizing sheet, a polarizing layer, a modulating member, a modulating film, and/or a modulating sheet. The term 'modulation' herein may refer to filtering, reflecting, refracting, phase-modulating, and/or phase-retarding at least a portion of the incident light. In various embodiments, the modulating tendency of the polarizing unit may vary depending on the wavelength of the incident light or the polarization component of the incident light. These polarizing units may be implemented by films, sheets, coating materials and/or deposition materials.

In various embodiments, the second polarizing unit P2 may include the second polarizer (e.g., the second polarizer 1708 of FIG. 17) and the second quarter wave plate (e.g., the second quarter wave plate 1707 of FIG. 17) disposed to face the second polarizer 1708. In disposing the second polarizer 1708 and the second quarter wave plate 1707, the polarizing axis linearly polarized by the second polarizer 1708 and the fast axis of the second quarter wave plate 1707 may form an angle of substantially 45°. For example, the second polarizing unit P2 may be configured to convert linearly polarized light into circularly polarized light. In various embodiments, when the first polarizing unit P1 includes the first polarizer 1702, the polarizing axis of the first polarizer 1702 and the polarizing axis of the second polarizer 1708 may form an angle of substantially 90°. In various embodiments, the fast axis of the first quarter wave plate 1704 and the fast axis of the second quarter wave plate 1707 may form an angle of substantially 90°.

According to various embodiments, the beam splitter BS (see FIG. 19) may be provided on one surface (e.g., the display side surface D1 of the first lens element 41) of a lens element closest to the display 22. In various embodiments, the surface (e.g., the display side surface D1 of the first lens element 41) of the lens element on which the beam splitter BS is disposed may be formed as an aspheric surface without inflection, thereby preventing the degradation in optical performance due to the abrupt change in the optical path (e.g., reflection) while securing a wide field of view. For example, the beam splitter BS may be stacked or formed on the display side surface D1 of the first lens element 41 substantially by depositing or coating an optical material.

According to various embodiments, by including the first polarizing unit P1 and the beam splitter BS (e.g., beam splitter 1705 of FIG. 17) that function as a reflective member, the optical length of the first lens unit 40 may be greater than the mechanical (or physical) length, but the number of lens elements (or surfaces of lens elements) disposed between the first polarizing unit P1 and the beam splitter BS (e.g., the beam splitter 1705 of FIG. 17) may be minimized. For example, in the structure of the miniaturized first lens unit 40, the optical length may be sufficiently secured by the reflective member (e.g., the first polarizing unit P1 and the beam splitter BS (e.g., the beam splitter 1705 of FIG. 17)), and by reducing the number of lens elements or lens surfaces disposed between the reflective members (e.g., the first polarizing unit P1 and the beam splitter BS (e.g., the beam splitter 1705 of FIG. 17)), the increase in refraction or scattering may be suppressed, and the first lens unit 40 may provide the image with improved quality.

According to various embodiments, the above-described 'refraction or scattering' may refer to birefringence due to the manufacturing error or the error occurring during the assembly process within the allowable range. For example, by reducing the number of lens elements or surfaces of lens elements disposed between the reflective members (e.g., the first polarizing unit P1 and the beam splitter BS (e.g., the beam splitter 1705 of FIG. 17)), the birefringence of the lens may be suppressed, and the first lens unit 40 may provide the image with improved quality.

According to various embodiments, the display device including the first lens unit 40 and the display 22 of the wearable electronic devices (e.g., the a head-mounted electronic device 1700, 2000, 2200, or 2500) of FIGS. 17 to 19 described above and FIGS. 20 to 26 to be described below may provide good wide angle or ultra wide angle performance by having a FOV of about 100° or more, and may have the lens characteristics to be described below. In various embodiments, the user's eye side surface E3 of the third lens element 43 may be formed convexly toward the user's eye 1001 side. Therefore, the thickness (e.g., the thickness in the direction parallel to the first optical axis A1) of the structure (e.g., lens barrel) that fixes the third lens element 43 may be reduced, thereby contributing to the thickness reduction or thinning of the display device including the first lens unit 40 and the display 22. In various embodiments, in the plurality of lens elements (e.g., the first lens element 41, the second lens element 42, and the third lens element 43), the surface to which one or more polarizing units (e.g., the first polarizing unit P1 and the second polarizing unit P2) are attached may be a substantially flat surface. In various embodiments, in the structure in which one or more polarizing units (e.g., the first polarizing unit P1 and the second polarizing unit P2) and/or the beam splitter BS (e.g., the beam splitter 1705 of FIG. 17) as described above are disposed, one of at least three lens elements (e.g., the first lens element 41, the second lens element 42, and the third lens element 43) may have the Abbe's number of about 40 or less. In various embodiments, one of the three lens elements (e.g., the first lens element 41, the second lens element 42, and the third lens element 43) may have the Abbe's number of about 40 or less and negative refractive power, and the remaining two lenses may have positive refractive power. When at least one of the three lens elements (e.g., the first lens element 41, the second lens element 42, and the third lens element 43) is designed to have the Abbe's number of about 40 or less and negative refractive power, the chromatic aberration control performance and the optical performance of the first lens unit 40 of the head-mounted electronic device 1700 may be improved.

According to various embodiments, the display device including the first lens unit 40 and the display 22 of the head-mounted electronic device 1700, 2000, 2200, and 2500 of FIGS. 17 to 19 described above and FIGS. 20 to 26 described below may satisfy a condition presented through the following Mathematical Expression 4. [Mathematical Expression 4] $1 < \frac{DL}{EFL} < 3$

Here, DL may denote an effective pixel area length of the display 22, and the EFL may denote a composite focal length of the entire optical system. In the present disclosure, the 'focal length of the entire optical system' may refer to the composite focal length (or the composite focal length of the entire display device) including the display 22 and the first lens unit 40. For example, when the calculated value of Mathematical Expression 4 is less than about 1, the angle of view of the display may become small, so it may be difficult to provide the good wide angle or ultra wide angle performance and the product competitiveness of the head-mounted electronic device may be weakened. For example, when the calculated value of Mathematical Expression 4 is greater than about 3, the angle of view may become greater than the designed value, and the optical performance of the display device may be degraded compared to the designed performance.According to various embodiments, the display 22 and the first lens unit 40 (or the display device) may have an angle of view of about 108.00°, the focal length (EFL) of about 15.12 mm and a F-number (or Fno) of about 3.82. In various embodiments, the effective pixel area length DL of the display 22 may be about 24.72 mm, and the DL/EFL value may be about 1.63, which may satisfy Mathematical Expression 4 described above.

According to various embodiments, the first lens unit 40 may be manufactured with specifications presented in Table 4, and may have aspheric coefficients of Tables 5 and 6. The definition of the aspheric surface may be calculated through the following Mathematical Expression 5. In Table 4, 'REF.' exemplifies a reference number assigned to the plurality of lens elements (e.g., the first lens element 41, the second lens element 42, and the third lens element 43) and/or one or more polarizing units (e.g., the first polarizing unit P1 and the second polarizing unit P2) of FIGS. 18 and 19, and the 'lens surface' describes an ordinal number assigned to the surface of the lens element or the surface of the polarizing unit that transmits (or reflects) the visual information. Here, the ordinal number may be sequentially assigned along the reverse direction of the light path from the display 22 to the user's eye 1001. The 'display window' (e.g., the cover window W of FIG. 18) of Table 4 may be a substantially transparent plate as a plate for protecting the display.

The aspheric coefficients of the tables described below, including Table 5 or Table 6, may be calculated from the following Mathematical Expression 5. [Mathematical Expression 5] $z = \frac{c ′ {y}^{2}}{1 + \sqrt{1 - \left(k+1\right) c {′}^{2} {y}^{2}}} + {Ay}^{4} + {By}^{6} + {Cy}^{8} + {Dy}^{10} + {Ey}^{12} + {Fy}^{14} + {Gy}^{16} + {Hy}^{18} + {Jy}^{20} + {Ky}^{22} + {Ly}^{24} + {My}^{26} + {Ny}^{28} + {Oy}^{30}$

In Mathematical Expression 5, "z" may denote a distance from a point where the first optical axis A1 passes on the lens surface in the direction (e.g., the direction parallel to the z-coordinate axis) parallel to the first optical axis A1, "y" may denote a distance from the first optical axis A1 in the direction (e.g., a direction parallel to the y-coordinate axis) perpendicular to the first optical axis A1, "c'' may denote a reciprocal of the radius of curvature at the vertex of the lens, 'k' may denote the conic constant, and 'A', 'B', 'C', 'D', 'E', 'F', 'G', 'H', 'J', 'K', 'L', 'M', 'N', and 'O' may each denote the aspheric coefficients. The 'reciprocal of the radius of curvature' may denote a value (e.g., curve) indicating the degree of curvature at each point of a curved surface or a curved line. Among the aspheric coefficient(s) of Mathematical Expression 5, the aspheric coefficient whose value is 0 (zero) may be omitted in Table 5 or Table 6 described below.

**[Table 4]**

| REF. | Lens Surface | Radius of Curvature | Thickness | Material | Refractive Index (nd) | Abbe's number (vd) | Refractive Mode |
|---|---|---|---|---|---|---|---|
| | User's Eye | infinity | infinity | | | | Refraction |
| | STOP | infinity | 10.000 | | | | Refraction |
| 43 | 2 | 60.539 | 4.042 | OPTIMAS7500 | 1.497 | 57.39 | Refraction |
| | 3 | -1399.727 | 0.123 | | | | Refraction |
| P1 | 4 | infinity | 0.252 | FILM | 1.495 | 57.47 | Refraction |
| 42 | 6 | infinity | 1.864 | SP3810 | 1.649 | 23.25 | Refraction |
| | 7 | 151.940 | 0.130 | | | | Refraction |
| 41 | 8 | 65.617 | 7.620 | OPTIMAS7500 | 1.497 | 57.39 | Refraction |
| | 9 | -53.853 | -7.620 | OPTIMAS7500 | -1.497 | 57.39 | Reflection |
| 42 | 10 | 65.617 | -0.130 | | | | Refraction |
| | 11 | 151.940 | -1.864 | SP3810 | -1.649 | 23.25 | Refraction |
| Polarizing Film | 12 | infinity | -0.134 | FILM | -1.495 | 57.47 | Refraction |
| Polarizing Film | 13 | infinity | 0.134 | FILM | 1.495 | 57.47 | Reflection |
| 42 | 14 | infinity | 1.864 | SP3810 | 1.649 | 23.25 | Refraction |
| | 15 | 151.940 | 0.130 | | | | Refraction |
| 41 | 16 | 65.617 | 7.620 | OPTIMAS7500 | 1.497 | 57.39 | Refraction |
| | 17 | -53.853 | 0.587 | | | | Refraction |
| P2 | 18 | infinity | 0.242 | FILM | 1.495 | 57.47 | Refraction |
| Display window | 19 | infinity | 0.500 | BSC7_HOYA | 1.520 | 64.2 | Refraction |
| | 20 | infinity | 0.010 | | | | Refraction |
| | display | infinity | 0.000 | | | | |

**[Table 5]**

| Lens Surface | 2 | 3 | 7 | 8 | 9 |
|---|---|---|---|---|---|
| Radius of Curvature | 6.05E+01 | -1.40E+03 | 1.52E+02 | 6.56E+01 | -5.39E+01 |
| k(conic) | 8.50E+00 | -9.90E+01 | -8.89E+01 | -6.35E+00 | -8.39E+00 |
| A(4^{th})/C4 | -2.11E-05 | -1.27E-05 | 5.79E-05 | 8.65E-05 | -2.74E-06 |
| B(6^{th})/C5 | 4.51E-08 | -1.74E-07 | -2.54E-07 | -6.56E-07 | -5.81E-09 |
| D(10^{th})/C7 | 9.80E-13 | 7.23E-12 | 2.56E-12 | -6.34E-12 | -5.18E-13 |
| E(12^{th})/C8 | -1.80E-15 | -5.23E-14 | -5.31E-15 | 9.39E-15 | 1.00E-15 |
| F(14^{th})/C9 | 0.00E+00 | 1.25E-16 | 3.46E-18 | -5.88E-18 | -6.69E-19 |
| G(16^{th})/C10 | 0.00E+00 | -1.01E-19 | 0.00E+00 | 0.00E+00 | 0.00E+00 |

**[Table 6]**

| Lens Surface | 10 | 11 | 15 | 16 | 17 |
|---|---|---|---|---|---|
| Radius of Curvature | 6.56E+01 | 1.52E+02 | 1.52E+02 | 6.56E+01 | -5.39E+01 |
| k(conic) | -6.35E+00 | -8.89E+01 | -8.89E+01 | -6.35E+00 | -8.39E+00 |
| A(4^{th})/C4 | 8.65E-05 | 5.79E-05 | 5.79E-05 | 8.65E-05 | -2.74E-06 |
| B(6^{th})/C5 | -6.56E-07 | -2.54E-07 | -2.54E-07 | -6.56E-07 | -5.81E-09 |
| D(10^{th})/C7 | -6.34E-12 | 2.56E-12 | 2.56E-12 | -6.34E-12 | -5.18E-13 |
| E(12^{th})/C8 | 9.39E-15 | -5.31E-15 | -5.31E-15 | 9.39E-15 | 1.00E-15 |
| F(14^{th})/C9 | -5.88E-18 | 3.46E-18 | 3.46E-18 | -5.88E-18 | -6.69E-19 |
| G(16^{th})/C10 | 0.00E+00 | 0.00E+00 | 0.00E+00 | 0.00E+00 | 0.00E+00 |

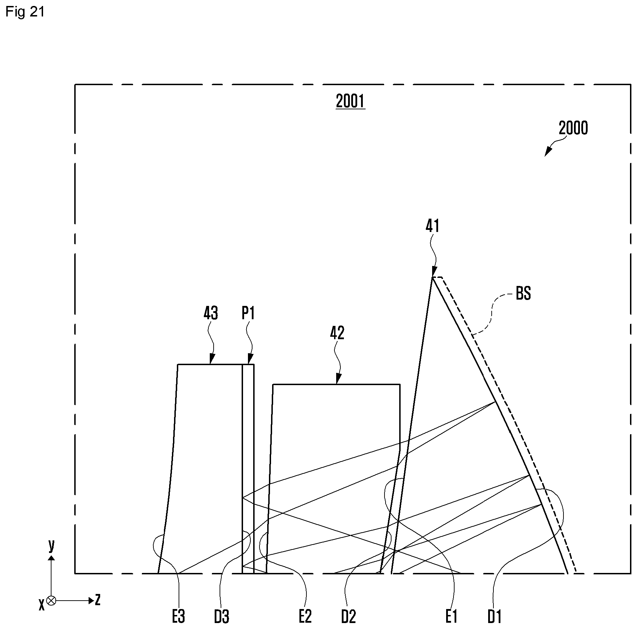

FIG. 20 is a diagram illustrating the head-mounted electronic device 2000 (e.g., the electronic device 101 of FIG. 1, the wearable electronic device 200 of FIGS. 2 and 3, or the head-mounted electronic device 2 of FIGS. 4 to 8) according to various embodiments of the present disclosure. FIG. 21 is an enlarged view of part 2001 of FIG. 20 according to various embodiments of the present disclosure.

The first lens unit 40 and the display 22 of FIGS. 20 and 21 may be referred to as the first lens unit 40 and the display 22 of FIG. 17. In the description of the first lens unit 40 and the display 22 of FIG. 20, contents that are overlapped with the description given above with reference to FIGS. 18 and 19 may be omitted below.

According to various embodiments, the first lens unit 40 of the head-mounted electronic device 2000 may include a first polarizing unit P1, a beam splitter BS (e.g., the beam splitter 1705 of FIG. 17), and a second polarizing unit P2, which are sequentially arranged from the user's eye 1001 side to the display 22 side. In various embodiments, the first polarizing unit P1 (e.g., the first polarizing unit P1 of FIG. 17) of the polarizing assembly P may be disposed on, for example, the display side surface D3 of the third lens element 43. The second polarizing unit P2 (e.g., the second polarizing unit P2 of FIG. 17) of the polarizing assembly P may be disposed on the cover window W. In various embodiments, when the first polarizing unit P1 is substantially attached to a surface of one of the plurality of lens elements (e.g., the first lens element 41, the second lens element 42, and the third lens element 43), the surface (e.g., the display side surface D3 of the third lens element 43) of the lens element may be a substantially flat surface.

According to various embodiments, the beam splitter BS (e.g., the beam splitter 1705 of FIG. 17) may be disposed between the first polarizing unit P1 and the second polarizing unit P2. In various embodiments, referring to FIG. 21, the beam splitter BS may be provided on the display side surface D1 of the first lens element 41. For example, the beam splitter BS may be stacked or formed on the display side surface D1 of the first lens element 41 substantially by depositing or coating an optical material. In various embodiments, the optical length of the first lens unit 40 may be made longer than the mechanical (or physical) length by disposing the first polarizing unit P1 and the beam splitter BS functioning as the reflective member, but the number of lens elements (or the surfaces of the lens elements) disposed between the first polarizing unit P1 and the beam splitter BS may be minimized. For example, in the structure of the miniaturized first lens unit 40, the optical length may be sufficiently secured by the reflective member (e.g., the first polarizing unit P1 and the beam splitter BS), and by reducing the number of lens elements or surfaces of the lens elements disposed between the reflective members (e.g., the first polarizing unit P1 and the beam splitter BS), the increase in refraction or scattering may be suppressed, and the first lens unit 40 may provide the image with improved quality. In various embodiments, the above-described 'refraction or scattering' may refer to birefringence due to the manufacturing error or the error occurring during the assembly process within the allowable range. For example, by reducing the number of lens elements or surfaces of lens elements disposed between the reflective members (e.g., the first polarizing unit P1 and the beam splitter BS), the birefringence of the lens may be suppressed, and the first lens unit 40 may provide the image with improved quality.

According to various embodiments, the display 22 and the first lens unit 40 (or the display device) may have an angle of view of about 100.00°, the focal length (EFL) of about 14.97 mm and a F-number (or Fno) of about 3.18. In various embodiments, the effective pixel area length DL of the display 22 may be about 23.20 mm, and the DL/EFL value may be about 1.55, which may satisfy Mathematical Expression 4 described above.

In the present disclosure, the 'effective pixel area length DL' of the display 22 may refer to a height of the display 22. Here, the 'height of the display 22' may refer to a straight line length measured based on an axis perpendicular to the first optical axis A1, as indicated by 'DL' in FIGS. 18, 20, 23, and 25.According to various embodiments, the first lens unit 40 may be manufactured with the specifications presented in Table 7, and may have aspheric coefficients of Tables 8 and 9. In Table 7, 'REF.' exemplifies a reference number assigned to the plurality of lens elements (e.g., the first lens element 41, the second lens element 42, and the third lens element 43) and/or one or more polarizing units (e.g., the first polarizing unit P1 and the second polarizing unit P2) of FIGS. 20 and 21, and the 'lens surface' describes an ordinal number assigned to the surface of the lens element or the surface of the polarizing unit that transmits (or reflects) the visual information. Here, the ordinal number may be sequentially assigned along the reverse direction of the light path from the display 22 to the user's eye 1001. The 'display window' (e.g., the cover window W of FIG. 18) of Table 7 may be a substantially transparent plate as a plate for protecting the display.

**[Table 7]**

| REF. | Lens Surface | Radius of Curvature | Thickness | Material | Refractive Index (nd) | Abbe's number (vd) | Refractive Mode |
|---|---|---|---|---|---|---|---|
| | EYE | infinity | infinity | | | | Refraction |
| | STOP | infinity | 10.000 | | | | Refraction |
| 43 | 2 | 103.994 | 3.300 | OPTIMAS75 00 | 1.497 | 57.38 | Refraction |
| | 3 | infinity | 0.300 | FILM | 1.495 | 57.47 | Refraction |
| P1 | 5 | infinity | 0.130 | | | | Refraction |
| 42 | 6 | 834.128 | 1.590 | SP3810 | 1.644 | 23.98 | Refraction |
| | 7 | 98.572 | 0.140 | | | | Refraction |
| 41 | 8 | 52.788 | 7.932 | OPTIMAS7500 | 1.497 | 57.38 | Refraction |
| | 9 | -52.137 | -7.932 | OPTIMAS7500 | -1.497 | 57.38 | Reflection |
| | 10 | 52.788 | -0.140 | | | | Refraction |
| 42 | 11 | 98.572 | -1.590 | SP3810 | -1.644 | 23.98 | Refraction |
| | 12 | 834.128 | -0.130 | | | | Refraction |
| Polarizing Film | 13 | infinity | -0.210 | FILM | -1.495 | 57.47 | Refraction |
| Polarizing Film | 14 | infinity | 0.210 | FILM | 1.495 | 57.47 | Reflection |
| Polarizing Film | 15 | infinity | 0.130 | | | | Refraction |
| 42 | 16 | 834.128 | 1.590 | SP3810 | 1.644 | 23.98 | Refraction |
| | 17 | 98.572 | 0.140 | | | | Refraction |
| 41 | 18 | 52.788 | 7.932 | OPTIMAS7500 | 1.497 | 5.74E+01 | Refraction |
| | 19 | -52.137 | 0.580 | | | | Refraction |
| P2 | 20 | infinity | 0.176 | FILM | 1.495 | 5.75E+01 | Refraction |
| Display window | 21 | infinity | 0.500 | BSC7_HOY A | 1.520 | 6.42E+01 | Refraction |
| | 22 | infinity | 0.010 | | | | Refraction |
| | display | infinity | 0.000 | | | | |

**[Table 8]**

| Lens Surface | 2 | 7 | 8 | 9 | 10 |
|---|---|---|---|---|---|
| Radius of Curvature | 1.0E+02 | 9.9E+01 | 5.3E+01 | -5.2E+01 | 5.3E+01 |
| k(conic) | 4.5E+00 | -1.1E+00 | -4.9E+01 | 6.2E-01 | -4.9E+01 |
| A(4^{th})/C4 | -5.4E-07 | 4.6E-08 | 0.0E+00 | -6.3E-06 | 0.0E+00 |
| B(6^{th})/C5 | 2.6E-08 | 0.0E+00 | 0.0E+00 | 3.1E-08 | 0.0E+00 |
| C(8^{th})/C6 | -7.1E-11 | 0.0E+00 | 0.0E+00 | -1.1E-10 | 0.0E+00 |
| D(10^{th})/C7 | 0.0E+00 | 0.0E+00 | 0.0E+00 | 2.2E-13 | 0.0E+00 |
| E(12^{th})/C8 | 0.0E+00 | 0.0E+00 | 0.0E+00 | -1.7E-16 | 0.0E+00 |

**[Table 9]**

| Lens Surface | 11 | 17 | 18 | 19 |
|---|---|---|---|---|
| Radius of Curvature | 9.9E+01 | 9.9E+01 | 5.3E+01 | -5.2E+01 |
| k(conic) | -1.1E+00 | -1.1E+00 | -4.9E+01 | 6.2E-01 |
| A(4^{th})/C4 | 4.6E-08 | 4.6E-08 | 0.0E+00 | -6.3E-06 |
| B(6^{th})/C5 | 0.0E+00 | 0.0E+00 | 0.0E+00 | 3.1E-08 |
| C(8^{th})/C6 | 0.0E+00 | 0.0E+00 | 0.0E+00 | -1.1E-10 |
| D(10^{th})/C7 | 0.0E+00 | 0.0E+00 | 0.0E+00 | 2.2E-13 |
| E(12^{th})/C8 | 0.0E+00 | 0.0E+00 | 0.0E+00 | -1.7E-16 |

FIG. 22 illustrates an example of the path along which the light output by the display 22 is focused or guided to a user's eye 1001 in a head-mounted electronic device 2200 (e.g., the electronic device 101 of FIG. 1, the wearable electronic device 200 of FIGS. 2 and 3, or the head-mounted electronic device 2 of FIGS. 4 to 8) according to various embodiments of the present disclosure.

The description of the first polarizing unit P1, the second polarizing unit P2, and the beam splitter 1705 of FIG. 22 may be applied to the description of the first polarizing unit P1, the second polarizing unit P2, and the beam splitter 1705 described above with reference to FIG. 17, and in the following, common contents will be omitted and differences will be mainly described.

According to various embodiments, the disposition of one or more polarizing units (e.g., the first polarizing unit P1 and the second polarizing unit P2) of the polarizing assembly P and/or the beam splitter 1705 described above may provide good quality images while miniaturizing the optical system implemented with the limited number (e.g., at least three) of lens elements (e.g., the first lens element 41, the second lens element 42, and the third lens element 43). In various embodiments, the polarizing axis of the first polarizer 1702 of the first polarizing unit P1 and the polarizing axis of the second polarizer 1708 of the second polarizing unit P2 may form an angle of substantially 90°. The fast axis of the first quarter wave plate 1704 of the first polarizing unit P1 and the fast axis of the second quarter wave plate 1707 of the second polarizing unit P2 may form an angle of substantially 90°. In the following description, the anti-reflection layers 1701 and 1706 may not be described.

Referring to FIG. 22, according to various embodiments, the head-mounted electronic device 2200 may operate as follows. The light output from the display 22 may pass through at least three lens elements (e.g., the first lens element 41, the second lens element 42, and the third lens element 43) of the first lens unit 40, the second polarizing unit P2, the beam splitter 1705, and the first polarizing unit P1, and then reach the user's eye 1001. In this case, the second polarizer 1708 of the second polarizing unit P2 may transmit first linear polarization, for example, vertical polarization (or p polarization), and may not transmit second linear polarization, for example, horizontal polarization (or s polarization). In various embodiments, the light output from the display 22 may pass through the first lens element 41 and reach the second polarizer 1708. Among the light reaching the second polarizer 1708, only the vertical polarization (or p polarization) may be transmitted. The light transmitted through the second polarizer 1708 is converted into the circular polarization (right-handed circular polarization or left-handed circular polarization) by the second quarter wave plate 1707, and the circular polarization may sequentially pass through the beam splitter 1705 and the second lens element, and then reach the first quarter wave plate 1704. The circular polarization reaching the first quarter wave plate 1704 may be converted back into linear polarization (e.g., vertical polarization (or p polarization)) while passing through the first quarter wave plate 1704 and may reach the reflective polarizer 1703. Light may move in the second direction (e.g., the direction from the display 22 toward the user's eye 1001) until the light reaches the reflective polarizer 1703. The light reaching the reflective polarizer 1703 may be reflected by the reflective polarizer 1703 and directed in the first direction (e.g., the direction from the user's eye 1001 toward the display 22), and may be converted back into the circular polarization (right-handed circular polarization or left-handed circular polarization) while transmitting the first quarter wave plate 1704 again. This circular polarization (the right-handed circular polarization or the left-handed circular polarization) is reflected by the beam splitter 1705 and is directed back to the second direction. In this case, the phase may be converted (e.g., when the circular polarization is left-handed circular polarization, the left-handed circular polarization may be converted into right-handed polarization, and when the circular polarization is right-handed circular polarization, the right-handed circular polarization may be converted into left-handed polarization). The circular polarization whose phase has been converted may pass through the first quarter wave plate 1704 and the reflective polarizer 1703 along the second direction and reach the user's eye 1001. In this case, the light passing through the first quarter wave plate 1704 may be converted into the horizontal polarization (or s polarization) and reach the first polarizer 1702 of the first polarizing unit P1. The first polarizer 1702 may transmit the horizontal polarization (or s polarization) and not transmit the vertical polarization (or p polarization). The light passing through the first polarizer 1702 may reach the user's eye 1001 as the horizontal polarization (or s polarization) in which the vertical polarization (or p polarization) is blocked once more from the light converted into the horizontal polarization (or s polarization) by the first quarter wave plate 1704. However, it should be noted that the embodiment of FIG. 22 is merely an example of the change in the state of light passing through the head-mounted electronic device 2200 according to various embodiments, and that the conversion of polarization components by the reflective polarizer 1703, the first quarter wave plate 1704, the second quarter wave plate 1707, the beam splitter 1705, and/or the second polarizer 1708 may be different from the above-described embodiment.

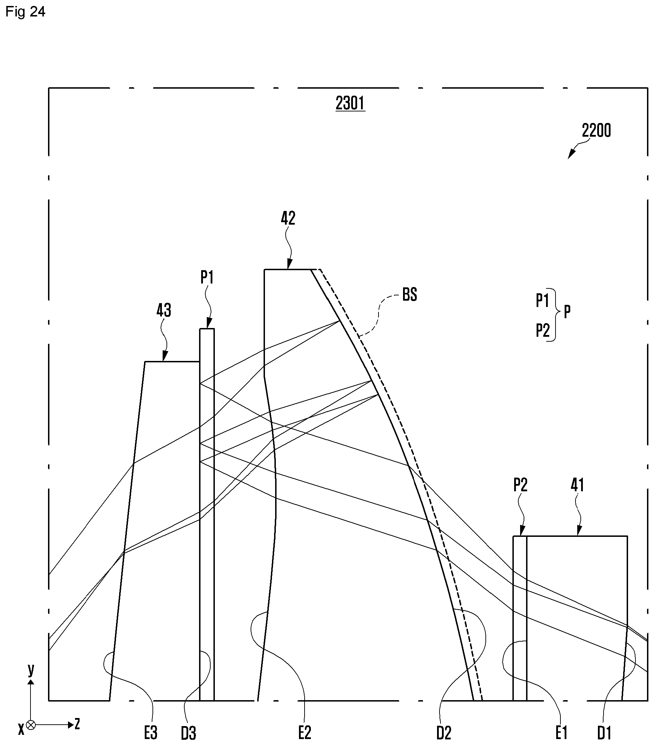

FIG. 23 is a diagram illustrating the head-mounted electronic device 2200 (e.g., the electronic device 101 of FIG. 1, the wearable electronic device 200 of FIGS. 2 and 3, or the head-mounted electronic device 2 of FIGS. 4 to 8) according to various embodiments of the present disclosure. FIG. 24 is an enlarged view of part 2301 of FIG. 23 according to various embodiments of the present disclosure.

The first lens unit 40 and the display 22 of FIG. 23 may be referred to as the first lens unit 40 and the display 22 of FIG. 22. In the description of the first lens unit 40 and the display 22 of FIG. 23, contents that are overlapped with the description given above with reference to FIGS. 18 and 19 may be omitted below.

According to various embodiments, the first lens unit 40 of the head-mounted electronic device 2200 may include a first polarizing unit P1, a beam splitter BS (e.g., the beam splitter 1705 of FIG. 22), and a second polarizing unit P2, which are sequentially arranged from the user's eye 1001 side to the display 22 side. In various embodiments, the first polarizing unit P1 (e.g., the first polarizing unit P1 of FIG. 22) of the polarizing assembly P may be disposed on the display side surface D3 of the third lens element 43. The second polarizing unit P2 (e.g., the second polarizing unit P2 of FIG. 22) of the polarizing assembly P may be disposed on the user's eye side surface E1 of the first lens element 41. In various embodiments, when the first polarizing unit P1 is substantially attached to a surface of one of the plurality of lens elements (e.g., the first lens element 41, the second lens element 42, and the third lens element 43), the surface (e.g., the display side surface D3 of the third lens element 43) of the lens element may be a substantially flat surface. In various embodiments, when the second polarizing unit P2 is substantially attached to a surface of one of the plurality of lens elements (e.g., the first lens element 41, the second lens element 42, and the third lens element 43), the surface (e.g., the user's eye side surface E1 of the first lens element 41) of the lens element may be a substantially flat surface.

According to various embodiments, the beam splitter BS (e.g., the beam splitter 1705 of FIG. 22) may be disposed between the first polarizing unit P1 and the second polarizing unit P2. In various embodiments, referring to FIG. 24, the beam splitter BS may be provided on the display side surface D2 of the second lens element 42. For example, the beam splitter BS may be formed on the display side surface D2 of the second lens element 42 substantially by depositing or coating the optical material.

According to various embodiments, the display 22 and the first lens unit 40 (or the display device) may have an angle of view of about 108.00°, the focal length (EFL) of about 14.61 mm and a F-number (or Fno) of about 3.18. In various embodiments, the effective pixel area length DL of the display 22 may be about 24.54 mm, and the DL/EFL value may be about 1.68, which may satisfy Mathematical Expression 4 described above.

According to various embodiments, the first lens unit 40 may be manufactured with specifications presented in Table 10, and may have aspheric coefficients of Tables 11 and 12. In Table 10, 'REF.' exemplifies a reference number assigned to the plurality of lens elements (e.g., the first lens element 41, the second lens element 42, and the third lens element 43) and/or one or more polarizing units (e.g., the first polarizing unit P1 and the second polarizing unit P2) of FIGS. 23 and 24, and the 'lens surface' describes an ordinal number assigned to the surface of the lens element or the surface of the polarizing unit that transmits (or reflects) the visual information. Here, the ordinal number may be sequentially assigned along the reverse direction of the light path from the display 22 to the user's eye 1001. The 'display window' (e.g., the cover window W of FIG. 18) of Table 10 may be a substantially transparent plate as a plate for protecting the display.

**[Table 10]**

| REF. | Lens Surface | Radius of Curvature | Thickness | Material | Refractive Index (nd) | Abbe's Number (vd) | Refractive Mode |
|---|---|---|---|---|---|---|---|
| | EYE | infinity | infinity | | | | Refraction |
| | STOP | infinity | 10.00 | | | | Refraction |
| 43 | 2 | 94.708 | 2.942 | OPTIMAS7500 | 1.497 | 57.38 | Refraction |
| | 3 | infinity | 0.300 | FILM | 1.495 | 57.47 | Refraction |
| P1 | 5 | infinity | 0.200 | | | | Refraction |
| 42 | 6 | 48.268 | 7.583 | OPTIMAS7500 | 1.497 | 57.38 | Refraction |
| | 7 | -68.467 | -7.583 | OPTIMAS7500 | -1.497 | 57.38 | Reflection |
| | 8 | 48.268 | -0.200 | | | | Refraction |
| Polarizing Film | 9 | infinity | -0.210 | FILM | -1.495 | 57.47 | Refraction |
| Polarizing Film | 10 | infinity | 0.210 | FILM | 1.495 | 57.47 | Reflection |
| Polarizing Film | 11 | infinity | 0.200 | | | | Refraction |
| 42 | 12 | 48.268 | 7.583 | OPTIMAS750 | 1.497 | 57.38 | Refraction |
| | 13 | -68.467 | 0.150 | | | | Refraction |
| P2 | 14 | infinity | 0.176 | FILM | 1.495 | 54.47 | Refraction |
| 41 | 15 | infinity | 2.000 | EP8000 | 1.672 | 20.37 | Refraction |
| | 16 | 94.731 | 1.590 | | | | Refraction |
| Display window | 17 | infinity | 0.500 | BSC7_HOYA | 1.520 | 64.2 | Refraction |
| | 18 | infinity | 0.010 | | | | Refraction |
| | display | infinity | 0.000 | | | | |

**[Table 11]**

| Lens Surface | 2 | 6 | 7 | 8 |
|---|---|---|---|---|
| Radius of curvature | 9.47E+01 | 4.83E+01 | -6.85E+01 | 4.83+01 |
| k(conic) | -9.90E+01 | -3.79E+00 | -1.68E-02 | -3.79E+00 |
| A(4^{th})/C4 | 1.42E-06 | -1.58E-05 | -2.83E-06 | -1.58E-05 |
| B(6^{th})/C5 | 0.00E+00 | 0.00E+00 | -4.40E-09 | 0.00E+00 |
| C(8^{th})/C6 | 0.00E+00 | 0.00E+00 | 8.90E-13 | 0.00E+00 |
| D(10^{th})/C7 | 0.00E+00 | 0.00E+00 | -3.41E-15 | 0.00E+00 |
| E(12^{th})/C8 | 0.00E+00 | 0.00E+00 | 6.50E-18 | 0.00E+00 |

**[Table 12]**

| Lens Surface | 12 | 13 | 16 |
|---|---|---|---|
| Radius of Curvature | 4.83E+01 | -6.85E+01 | 9.44E+01 |
| k(conic) | -3.79E+00 | -1.68E-02 | -9.56E+01 |
| A(4^{th})/C4 | -1.58E-05 | -2.83E-06 | 0.00E+00 |
| B(6^{th})/C5 | 0.00E+00 | -4.40E-09 | 0.00E+00 |
| C(8^{th})/C6 | 0.00E+00 | 8.9E-13 | 0.00E+00 |
| D(10^{th})/C7 | 0.00E+00 | -3.41E-15 | 0.00E+00 |
| E(12^{th})/C8 | 0.00E+00 | 6.50E-18 | 0.00E+00 |

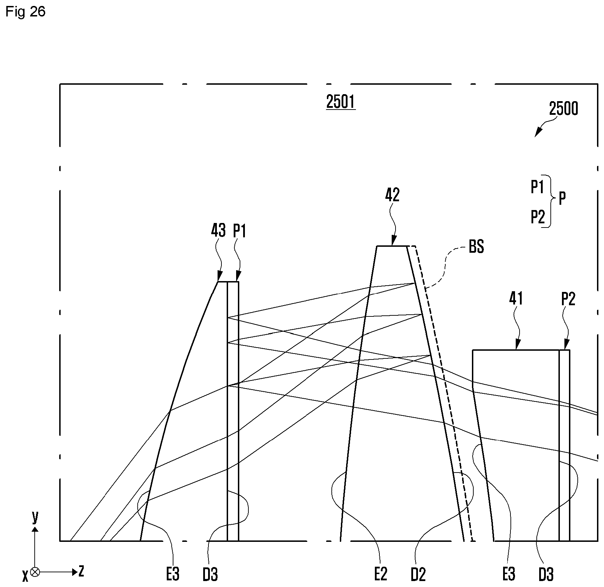

FIG. 25 is a diagram illustrating the head-mounted electronic device 2500 (e.g., the electronic device 101 of FIG. 1, the wearable electronic device 200 of FIGS. 2 and 3, or the head-mounted electronic device 2 of FIGS. 4 to 8) according to various embodiments of the present disclosure. FIG. 26 is an enlarged view of part 2501 of FIG. 25 according to various embodiments of the present disclosure.

The first lens unit 40 and the display 22 of FIG. 25 may be referred to as the first lens unit 40 and the display 22 of FIG. 22. In the description of the first lens unit 40 and the display 22 of FIG. 25, contents that are overlapped with the description given above with reference to FIGS. 18 and 19 may be omitted below.

According to various embodiments, the first lens unit 40 of the wearable electronic device (e.g., the head-mounted electronic device 2500) may include a first polarizing unit P1, a beam splitter BS (e.g., the beam splitter 1705 of FIG. 22), and a second polarizing unit P2, which are sequentially arranged from the user's eye 1001 side to the display 22 side. In various embodiments, the first polarizing unit P1 (e.g., the first polarizing unit P1 of FIG. 22) of the polarizing assembly P may be disposed on the display side surface D3 of the third lens element 43. In various embodiments, the second polarizing unit P2 (e.g., the second polarizing unit P2 of FIG. 22) of the polarizing assembly P may be disposed on the user's display side surface D1 of the first lens element 41. In various embodiments, when the first polarizing unit P1 is substantially attached to a surface of one of the plurality of lens elements (e.g., the first lens element 41, the second lens element 42, and the third lens element 43), the surface (e.g., the display side surface D3 of the third lens element 43) of the lens element may be a substantially flat surface. In various embodiments, when the second polarizing unit P2 is substantially attached to a surface of one of the plurality of lens elements (e.g., the first lens element 41, the second lens element 42, and the third lens element 43), the surface (e.g., the user's display side surface D1 of the first lens element 41) of the lens element may be a substantially flat surface.

According to various embodiments, the beam splitter BS (e.g., the beam splitter 1705 of FIG. 22) may be disposed between the first polarizing unit P1 and the second polarizing unit P2. In various embodiments, referring to FIG. 26, the beam splitter BS may be provided on the display side surface D2 of the second lens element 42. For example, the beam splitter BS may be formed on the display side surface D2 of the second lens element 42 substantially by depositing or coating the optical material.

According to various embodiments, the display 22 and the first lens unit 40 (or the display device) may have an angle of view of about 105.00°, the focal length (EFL) of about 19.67 mm and a F-number (or Fno) of about 3.18. In various embodiments, the effective pixel area length DL of the display 22 may be about 32.91 mm, and the DL/EFL value may be about 1.67, which may satisfy Mathematical Expression 4 described above.

According to various embodiments, the first lens unit 40 may be manufactured with specifications presented in Table 13, and may have aspheric coefficients of Table 14. In Table 13, 'REF.' exemplifies a reference number assigned to the plurality of lens elements (e.g., the first lens element 41, the second lens element 42, and the third lens element 43) and/or one or more polarizing units (e.g., the first polarizing unit P1 and the second polarizing unit P2) of FIGS. 25 and 26, and the 'lens surface' describes an ordinal number assigned to the surface of the lens element or the surface of the polarizing unit that transmits (or reflects) the visual information. Here, the ordinal number may be sequentially assigned along the reverse direction of the light path from the display 22 to the user's eye 1001. The 'display window' (e.g., the cover window W of FIG. 18) of Table 13 may be a substantially transparent plate as a plate for protecting the display.

**[Table 13]**

| REF. | Lens Surface | Radius of Curvature | Thickness | Material | Refractive Index (nd) | Abbe's number (vd) | Refractive Mode |
|---|---|---|---|---|---|---|---|
| | EYE | infinity | infinity | | | | Refraction |
| | STOP | infinity | 10.104 | | | | Refraction |
| 43 | 2 | 107.389 | 4.000 | APEL5514 | 1.547 | 56.09 | Refraction |
| | 3 | infinity | 0.222 | FILM | 1.495 | 57.47 | Refraction |
| P1 | 4 | infinity | 3.436 | | | | Refraction |
| 42 | 5 | 159.630 | 5.730 | APEL5514 | 1.547 | 56.09 | Refraction |
| | 6 | -76.932 | -5.730 | APEL5514 | -1.547 | 56.09 | Reflection |
| | 7 | 159.630 | -3.436 | | | | Refraction |
| Polarizing Film | 8 | infinity | -0.222 | APEL5514 | -1.547 | 56.09 | Refraction |
| Polarizing Film | 9 | infinity | 0.222 | APEL5514 | 1.547 | 56.09 | Reflection |
| Polarizing Film | 10 | infinity | 3.436 | | | | Refraction |
| 42 | 11 | 159.630 | 5.730 | APEL5514 | 1.547 | 56.09 | Refraction |
| | 12 | -76.932 | 0.663 | | | | Refraction |
| 41 | 13 | -128.801 | 1.831 | EP5000 | 1.644 | 23.98 | Reflection |
| | 14 | infinity | 0.300 | FILM | 1.495 | 57.47 | Refraction |
| P2 | 15 | infinity | 1.829 | | | | Refraction |
| Display window | 16 | infinity | 0.510 | BSC7_HO YA | 1.520 | 64.2 | Refraction |
| | 17 | infinity | 0.104 | | | | Refraction |
| | img | infinity | | | | | Refraction |

**[Table 14]**

| Lens Surface | 2 | 6 | 12 |
|---|---|---|---|
| Radius of Curvature | 1.07E+02 | -7.69E+01 | -7.69E+01 |
| k(conic) | -8.46E+01 | 0.00E+00 | 0.00E+00 |
| A(4^{th})/C4 | 1.31E-05 | 7.06E-07 | 7.06E-07 |
| B(6^{th})/C5 | -7.60E-09 | 2.01E-09 | 2.01E-09 |
| C(8^{th})/C6 | 4.00E-12 | -2.58E-12 | -2.58E-12 |
| D(10^{th})/C7 | 0.00E+00 | 5.44E-15 | 5.44E-15 |
| E(12^{th})/C8 | 0.00E+00 | -9.2E-19 | -9.22E-19 |

The first lens unit 40 (e.g., the first lens unit 40 of FIG. 17, FIG. 18, FIG. 20, FIG. 22, FIG. 23, or FIG. 25) according to the embodiment(s) of the present disclosure and/or the head-mounted electronic device (e.g., the electronic device 101 of FIG. 1, the wearable electronic device 200 of FIGS. 2 and 3, the head-mounted electronic device 2 of FIGS. 4 to 8, or the head-mounted electronic device 1700, 1800, 2000, 2200, 2300, or 2500 of FIGS. 17, 18, 20, 22, 23, or 25) including the same may be miniaturized while easily controlling aberrations and implementing good image quality by satisfying at least some of the specifications or conditions described above. For example, even though used while worn on the user's head or face, the first lens unit 40 and/or the head-mounted electronic device including the same may reduce user's fatigue.

However, the problem to be solved in the present disclosure may be determined in various ways without departing from the spirit and scope of the present disclosure. The effects that may be obtained in the present disclosure are not limited to the effects described above, and various effects that are directly or indirectly recognized through this document may be provided.

According to various embodiments of the present disclosure, the head-mounted electronic device 2 includes the display (e.g., active area 221), the first lens unit 40, the second lens unit 53, the third lens unit 60, and the image sensor 52. The first lens unit 40 has the first optical axis A1 through which the first light output from the display passes. The second lens unit 53 has the second optical axis A2 different from the first optical axis A1. The third lens unit 60 is located between the first lens unit 40 and the second lens unit 53. The third lens unit 60 has the third optical axis A3 that is different from the first optical axis A1 and the second optical axis A2. The image sensor 52 receives the second light through the first lens unit 40, the second lens unit 53, and the third lens unit 60. The third lens unit 60 is configured to correct an angle at which at least a portion of the second light passing through the first lens unit 40 is incident on the second lens unit 53.

According to various embodiments of the present disclosure, the first angle between the first optical axis A1 of the first lens unit 40 and the second optical axis A2 of the second lens unit 53 may be greater than the second angle between the first optical axis A1 of the first lens unit 40 and the third optical axis A3 of the third lens unit 60.

According to various embodiments of the present disclosure, the third lens unit 60 may have the third optical axis A3 that is different from the first optical axis A1 of the first lens unit 40 and the second optical axis A2 of the second lens unit 53.

According to various embodiments of the present disclosure, the first lens unit 40 may include a front surface 40A facing the display (e.g., the active area 221) and a rear surface 40B facing in an opposite direction to the front surface 40A. The rear surface 40B of the first lens unit 40 may face the user's eye while the head-mounted electronic device 2 is worn. The first lens unit 40 may be configured to focus the first light output from the display onto the pupil of the user's eye.

According to various embodiments of the present disclosure, the head-mounted electronic device 2 may further include at least one light emitting unit 70. At least one light emitting unit 70 may emit light through the first lens unit 40 toward the user's face (e.g., the designated area 1000 of the user's face). The second light emitted from at least one light emitting unit 70 and reflected from the user's face may be configured to be incident on the first lens unit 40 and pass through the first lens unit 40, the third lens unit 60, and the second lens unit 53.

According to various embodiments of the present disclosure, the first lens unit 40 may include the first area 401 that overlaps the display (e.g., an active area 221) in the direction parallel to the first optical axis A1, and the second area 402 that surrounds the first area 401. The third lens unit 60 and at least one light emitting unit 70 may overlap the second area 402 of the display in the direction parallel to the first optical axis A1.

According to various embodiments of the present disclosure, the second lens unit 53 and the image sensor 52 may be included in the camera 50 for eye tracking, eyebrow recognition tracking, or iris recognition.

According to various embodiments of the present disclosure, the first lens unit 40 and the third lens unit 60 may be overlapped in the direction parallel to the first optical axis A1 of the first lens unit 40.

According to various embodiments of the present disclosure, the third lens unit 60 may include the lens element (e.g., the fourth lens element 601) including the first surface 61 being convex in the paraxial region facing the first lens unit 40 and the second surface 62 being concave in the paraxial region facing the second lens unit 53.

According to various embodiments of the present disclosure, the radius of curvature of the first surface 61 may be R1, and the radius of curvature of the second surface 62 may be R2. The condition of 3 < (R1+R2)/(R1-R2) < 8 may be satisfied.

According to various embodiments of the present disclosure, the first surface 61 and the second surface 62 may have an aspheric shape.

According to various embodiments of the present disclosure, the lens element (e.g., the fourth lens element 601) of the third lens unit 60 may have an asymmetrical shape.

According to various embodiments of the present disclosure, the Abbe's number of the lens element (e.g., the fourth lens element 601) of the third lens unit 60 may be V1, and the condition of 29 < V1 < 31 may be satisfied.

According to various embodiments of the present disclosure, the refractive index of the lens element (e.g., the fourth lens element 601) of the third lens unit 60 may be N1, and the condition of 18 < V1/N1 < 21 may be satisfied.

According to various embodiments of the present disclosure, the head-mounted electronic device 2 may include the housing 21 and the support member (e.g., the third support member 93). The housing 21 may support the display 22, the first lens unit 40, the second lens unit 53, and the image sensor 52. The support member may be accommodated in the housing 21 and provided (or formed) in the shape of the ring. The first light output from the display 22 may pass through the first lens unit 40 through an opening (e.g., the fourth opening 905) of the support member. The third lens unit 60 may be disposed on the support member.

According to various embodiments of the present disclosure, the first lens unit 40 may include three lens elements (e.g., the first, second, and third lens elements 41, 42, and 43). The three lens elements may be disposed in order from the display 22 side. The first lens element 41 may have positive refractive power. The second lens element 42 may have negative refractive power. The third lens element 43 may have positive refractive power.

According to various embodiments of the present disclosure, the electronic device (e.g., the head-mounted electronic device 2) includes the first lens unit 40, the second lens unit 53, the third lens unit 40, and the image sensor 52. The first lens unit 40 has the first optical axis A1 through which the first light passes. The second lens unit 53 has the second optical axis A2 different from the first optical axis A1. The third lens unit 60 has the third optical axis A3 that is different from the first optical axis A1 and the second optical axis A2, and is located between the first lens unit 40 and the second lens unit 53. The image sensor 52 is configured to receive the second light through the first lens unit 40, the second lens unit 53, and the third lens unit 60. The first angle between the first optical axis A1 and the second optical axis A2 is greater than the second angle between the first optical axis A1 and the third optical axis A3.

According to various embodiments of the present disclosure, the electronic device (e.g., the head-mounted electronic device 2) may further include the display 22 and the light emitting unit 70. The display 22 emits the first light. The light emitting unit 70 may be configured to emit the second light toward the user's face (e.g., the designated area 1000 of the user's face) through the first lens unit 40. The first lens unit 40 may be located between the pupil and the display 22 to focus the first light output from the display 22 onto the user's pupil. The second light may be configured to be reflected from the user's face and pass through the first lens unit 40, the third lens unit 60, and the second lens unit 53.

According to various embodiments of the present disclosure, the third lens unit 60 may include the lens element (e.g., the fourth lens element 601) including the first surface 61 being convex in the paraxial region facing the first lens unit 40 and the second surface 62 being concave in the paraxial region facing the second lens unit 53.

According to various embodiments of the present disclosure, the lens element (e.g., the fourth lens element 601) of the third lens unit 60 may have negative refractive power.

According to various embodiments of the present disclosure, the radius of curvature of the first surface 61 may be R1, the radius of curvature of the second surface 62 may be R2, and 3 < (R1+R2)/(R1-R2) < 8 may be satisfied. The Abbe's number of the lens element (e.g., the fourth lens element 601) of the third lens unit 60 is V1, and 29 < V1 < 31 may be satisfied.

The embodiments disclosed in this disclosure and the drawings are only examples to more easily describe the technical content and to help understand the present disclosure, and are not intended to limit the scope of the present disclosure. Accordingly, the scope of various embodiments of the present disclosure should be interpreted as including changed or modified forms in addition to the embodiments disclosed herein within the scope of various embodiments of the present disclosure. Additionally, it will be understood that any embodiment(s) described herein may be used in conjunction with any other embodiment(s) described herein. In particular, it is emphasized that while the present disclosure has been presented in the form of providing a number of embodiments each defining a number of features, some of these embodiments are connected only by reference to the same drawing or drawings. It should be understood that the present disclosure includes all combinations of these embodiments, unless there is an obvious contradiction between two (or more) embodiments. That is, when features are presented as optional in the present disclosure, all combinations of such optional features are included in the present disclosure.

## Claims

1. A head-mounted electronic device (2) comprising:
a display (221);
a first lens unit (40) having a first optical axis (A1) through which first light output from the display (221) passes;
a second lens unit (53) having a second optical axis (A2) that is different from the first optical axis (A1);
a third lens unit (60) having a third optical axis (A3) that is different from the first optical axis (A1) and the second optical axis (A2), wherein the third lens unit (60) is between the first lens unit (40) and the second lens unit (53); and
an image sensor (52) configured to receive second light through the first lens unit (40), the second lens unit (53), and the third lens unit (60),
wherein the third lens unit (60) is configured to correct an angle at which at least a portion of the second light passed through the first lens unit (40) is incident on the second lens unit (53).

2. The head-mounted electronic device (2) of claim 1, wherein a first angle between the first optical axis (A1) and the second optical axis (A2) is greater than a second angle between the first optical axis (A1) and the third optical axis (A3).

3. The head-mounted electronic device (2) of claim 1, wherein the first lens unit (40) includes a front surface (40A) facing the display (221) and a rear surface (40B) facing in a direction opposite to the front surface (40A), the rear surface (40B) facing a user's eye in a state in which the head-mounted electronic device (2) is worn, and
wherein the first lens unit (40) is configured to focus the first light output from the display (221) onto a pupil of the user's eye.

4. The head-mounted electronic device (2) of claim 1, further comprising at least one light emitting unit (70) configured to emit light to a user's face (1000) through the first lens unit (40), and
wherein the second light, in which the light emitted from the at least one light emitting unit (70) is reflected from the user's face (1000), is incident on the first lens unit (40), and is configured to pass through the first lens unit (40), the third lens unit (60), and the second lens unit (53).

5. The head-mounted electronic device (2) of claim 4, wherein the first lens unit (40) includes a first area (401) overlapping the display (221) in a direction parallel to the first optical axis (A1), and a second area (402) surrounding the first area (401), and
wherein the third lens unit (60) and the at least one light emitting unit (70) overlap the second area (402) of the display (221) in the direction parallel to the first optical axis (A1).

6. The head-mounted electronic device (2) of claim 1, further comprising a camera configured to perform at least one of an eye tracking, an eyebrow recognition tracking, or an iris recognition,
wherein the camera comprises the second lens unit (53) and the image sensor (52).

7. The head-mounted electronic device (2) of claim 1, wherein the first lens unit (40) and the third lens unit (60) overlap in a direction parallel to the first optical axis (A1) of the first lens unit (40).

8. The head-mounted electronic device (2) of claim 1, wherein the third lens unit (60) includes a lens element (601) that includes a first surface (61) that is convex in a paraxial region facing the first lens unit (40) and a second surface (62) that is concave in a paraxial region facing the second lens unit (53).

9. The head-mounted electronic device (2) of claim 8, wherein a radius of curvature of the first surface (61) is R1, a radius of curvature of the second surface (62) is R2, and a following condition is satisfied: $3 < \left(R1+R2\right) / \left(R1-R2\right) < 8 .$

10. The head-mounted electronic device (2) of claim 8, wherein each of the first surface (61) and the second surface (62) has an aspheric shape.

11. The head-mounted electronic device (2) of claim 8, wherein the lens element (601) of the third lens unit (60) has an asymmetric shape.

12. The head-mounted electronic device (2) of claim 8, wherein an Abbe's number of the lens element (601) of the third lens unit (60) is V1, and a following condition is satisfied: $29 < V 1 < 31 .$

13. The head-mounted electronic device (2) of claim 12, wherein a refractive index of the lens element (601) of the third lens unit (60) is N1, and a following condition is satisfied: $18 < V 1 / N 1 < 21$

14. The head-mounted electronic device (2) of claim 1, further comprising:
a housing (21) supporting the display (221), the first lens unit (40), the second lens unit (53), and the image sensor (52); and
a support member (93) accommodated in the housing (21) and having a shape of a ring,
wherein the first light output from the display (221) passes through the first lens unit (40) through an opening (905) of the support member (93), and
wherein the third lens unit (60) is disposed on the support member (93).

15. The head-mounted electronic device (2) of claim 1, wherein the first lens unit (40) comprises a first lens element (41), a second lens element (42), and a third lens element (43) that are sequentially arranged in order from the display (221),
wherein the first lens element (41) has positive refractive power,
wherein the second lens element (42) has negative refractive power, and
wherein the third lens element (43) has positive refractive power.
